## Europäisches Patentamt

## European Patent Office

## Office européen des brevets

(19)

(11) **EP 1 472 587 B1**

(12) ## EUROPÄISCHE PATENTSCHRIFT

(45) Veröffentlichungstag und Bekanntmachung des Hinweises auf die Patenterteilung:
**08.06.2005 Patentblatt 2005/23**

(51) Int Cl.[7]: **G06F 1/00**

(21) Anmeldenummer: **03704371.8**

(22) Anmeldetag: **10.01.2003**

(86) Internationale Anmeldenummer:
**PCT/EP2003/000180**

(87) Internationale Veröffentlichungsnummer:
**WO 2003/060691 (24.07.2003 Gazette 2003/30)**

(54) **RECHENWERK UND VERFAHREN ZUM AUSFUEHREN EINER ARITHMETISCHEN OPERATION MIT VERSCHLUESSELTEN OPERANDEN**

ARITHMETIC UNIT AND METHOD FOR CARRYING OUT AN ARITHMETIC OPERATION WITH CODED OPERANDS

UNITE ARITHMETIQUE ET PROCEDE POUR EFFECTUER UNE OPERATION ARITHMETIQUE AVEC DES OPERANDES CODES

(84) Benannte Vertragsstaaten:
**DE FR**

(30) Priorität: **16.01.2002 DE 10201449**

(43) Veröffentlichungstag der Anmeldung:
**03.11.2004 Patentblatt 2004/45**

(73) Patentinhaber: **Infineon Technologies AG
81669 München (DE)**

(72) Erfinder:
- **GAMMEL, Berndt
  85570 Markt-Schwaben (DE)**
- **KLUG, Franz
  81739 München (DE)**
- **KNIFFLER, Oliver
  81739 München (DE)**

(74) Vertreter: **Zinkler, Franz, Dipl.-Ing. et al
Patentanwälte Schoppe, Zimmermann,
Stöckeler & Zinkler,
Postfach 246
82043 Pullach bei München (DE)**

(56) Entgegenhaltungen:
WO-A-01/40950           WO-A-01/54083
US-A- 5 479 512

- **KUHN M G: "CIPHER INSTRUCTION SEARCH ATTACK ON THE BUS-ENCRYPTION SECURITY MICROCONTROLLER DS5002FP" IEEE TRANSACTIONS ON COMPUTERS, IEEE INC. NEW YORK, US, Bd. 47, Nr. 10, 1. Oktober 1998 (1998-10-01), Seiten 1153-1157, XP000781996 ISSN: 0018-9340**
- **WWW.ARCHIVE.ORG, [Online] 4. Dezember 2000 (2000-12-04), Seiten 1-8, XP002247737 Gefunden im Internet: <URL:www.logosec.de/frame.htm> [gefunden am 2003-07-15]**
- **BEHROOZ PARHAMI: "Basic Addition and Counting" , COMPUTER ARITHMETIC, XX, XX, PAGE(S) 75-90 XP002239391**

**Beschreibung**

Die vorliegende Erfindung bezieht sich auf Datenverarbeitungseinheiten und insbesondere auf Datenverarbeitungseinheiten, die eine vor physikalischen Angriffen und vor Abhören gesicherte Verarbeitung von Daten oder Adressen auf einem hohen Sicherheitsniveau benötigen.

Bei der Berechnung bzw. Verarbeitung von sicherheitsrelevanten Daten werden Mikroprozessoren oder Security-Token oder andere Datenverarbeitungseinheiten eingesetzt, die eine vor physikalischen Angriffen und vor Abhören gesicherte Verarbeitung von Daten auf einem hohen Sicherheitsniveau benötigen. Cache- und Pufferspeicher, Registersätze sowie Übertragungswege beispielsweise in Form von Bussen, auf Mikroprozessoren stellen leicht zu identifizierende reguläre Strukturen auf einem Chip dar. Damit stellen diese bevorzugte Angriffspunkte dar. Angriffe können z. B. in dem Abhören durch Nadelangriffe oder in einer Stromprofilanalyse bestehen.

Durch Verschlüsselungsverfahren können externe Speicher, Pufferspeicher und Busse wirksam geschützt werden, so daß die verarbeiteten Daten, wie z. B. Benutzerdaten oder Programme, auf dem gesamten Chip vorzugsweise nur in verschlüsselter Form bewegt und gespeichert werden.

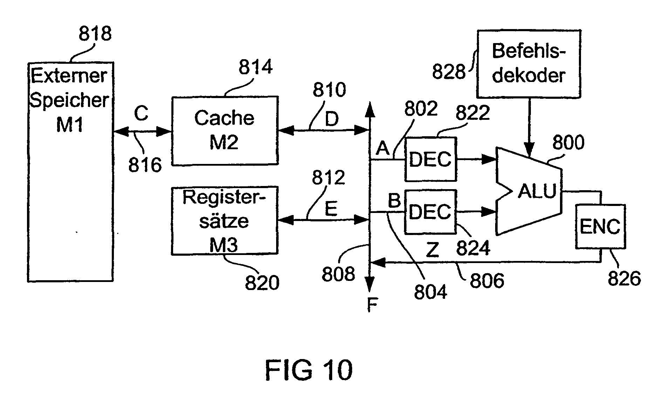

Fig. 10 zeigt einen schematischen Überblick über ein Rechenwerk. Das Rechenwerk weist als zentrale Einheit eine arithmetisch-logische Einheit (ALU) 800 auf. Eine Minimal-ALU, die eine Operation mit zwei Operanden ausführen kann, benötigt zwei Eingangsbusse A, B (802, 804) sowie einen Ausgangsbus Z (806). Die beiden Eingangsbusse und der Ausgangsbus der ALU 800 sind mit einem zentralen Bus F (808) verbunden. Mit dem zentralen Bus 808 sind ferner typischerweise zwei weitere Busse D, E (810, 812) verbunden, wobei der Bus 810 mit einem Cache-Speicher M2 (814) verbunden ist, welcher wiederum über einen Speicherbus C (816) mit einem externen Speicher M1 (818) in Verbindung ist. Ferner sind bei dem in Fig. 10 gezeigten Ausführungsbeispiel für ein Rechenwerk Registersätze M3 (820) vorgesehen, die Register enthalten, in denen ALU-Eingangsdaten oder ALU-Ausgangsdaten gespeichert werden können, die (zunächst) nicht in den Cache-Speicher 814 oder in den externen Speicher 818 gelangen sollen, bzw. die erst am Ende einer längeren Berechnung aus den Registersätzen heraus in den externen Speicher geladen werden sollen.

In einem Rechenwerk, das sicherheitskritische Berechnungen ausführt, werden die Daten, bevor sie in den diversen Speichern M1 bis M3 abgelegt werden, verschlüsselt. Darüber hinaus ist es ferner günstig, um einen Angriff auf die Busleitungen 802, 804, 806, 808, 810, 812 und 816 zu vereiteln, daß die Daten in verschlüsselter Form über diese Busleitungen übertragen werden. In diesem Fall sind den beiden ALU-Eingängen zwei Entschlüsselungsschaltungen DEC (DEC = decrypt) 822, 824 vorgeschaltet, um die auf den Bussen A, B anliegenden Operanden, wie z. B. Daten oder Adressen, die von der ALU 800 verarbeitet werden sollen, vor ihrer Verarbeitung zu entschlüsseln. Um auch das Ergebnis der ALU-Operation absichern zu können, ist dem Ausgang der ALU 800 eine Verschlüsselungsvorrichtung ENC (ENC = encrypt) 826 nachgeschaltet, so daß auf den Bussen 802, 804, 806 verschlüsselte Daten vorliegen.

Obgleich dieses Konzept bereits Angriffe auf Busleitungen, wie z. B. den zentralen Bus 808 sowie die Speicherbusse 810, 812, 816 wirksam zu unterdrücken vermag, ist es doch dahingehend nachteilhaft, daß zwischen den beiden Entschlüsselungsschaltungen 822, 824 und der Verschlüsselungsschaltung 826 Klartextdaten vorliegen, die ungeschützt sind, so daß es einem Angreifer zwar schwieriger gemacht wird, herauszufinden, wo die ALU 800 auf dem Rechenwerk ist, daß der Angreifer jedoch leichtes Spiel hat, wenn er die Entschlüsselungsvorrichtungen lokalisiert hat, da an den Ausgängen der Entschlüsselungsvorrichtungen 822 und 824 Klartextdaten vorliegen.

Andererseits müssen die Daten entschlüsselt werden, da die ALU-Operationen, die z. B. in Form einer arithmetischen Basisoperation vorliegen können, wie z. B. AND, OR, XOR, NAND, NOR, NOT oder ADD, nicht einfach auf verschlüsselte Daten ausgeführt werden können, da die Ver- (Ent-) Schlüsselungsoperation und die Basisoperation im allgemeinen nicht kommutieren, wodurch eine Verfälschung der Ergebnisse resultieren wird. Üblicherweise wird, um dieses Sicherheitsleck dennoch abzusichern, eine möglichst enge örtliche Plazierung der Entschlüsselungsvorrichtungen 822, 824 und der Verschlüsselungsvorrichtung 826 zur ALU 800 bevorzugt, so daß die Übertragungsleitungen, auf denen die Klartextdaten laufen, möglichst kurz werden, um auf diese Art und Weise Angriffe zu unterbinden. Alternativ können die Übertragungsleitungen, auf denen Klartextdaten übertragen werden, unter Verwendung technologischer Maßnahmen im Chip "versteckt" werden, beispielsweise unter Verwendung spezieller Dotierungsprofile, oder aber unter Verwendung einer Vielzahl von Blindleitungen, so daß es einem Angreifer wiederum schwer gemacht wird, tatsächlich die Leitungen herauszufinden, auf denen Klartextdaten übertragen werden, während auf den Blindleitungen überhaupt keine Daten übertragen werden, oder aber Ablenkdaten.

Diese konventionellen Maßnahmen zur Sicherung des Rechenwerks vor Angriffen sind dahingehend problematisch, daß sie einen zusätzlichen Aufwand erfordern und die Design-Freiheit bei dem Entwurf der ALU einschränken. Eine Einschränkung der Design-Freiheit ist besonders dann nachteilhaft, wenn die ALU eine Hochleistungs-ALU sein soll, die eine Vielzahl von Berechnungen und insbesondere beispielsweise von Langzahlberechnungen durchführen muß. Um die Rechenzeit dennoch in vertretbarem Rahmen zu halten, sollte die ALU leistungsoptimiert entworfen sein. So verlangt ein Kunde von Sicherheitssystemen natürlich eine hohe Sicherheit. Gleichzeitig verlangt der Kunde jedoch erträglich lange und lieber noch kurze Rechenzeiten. Eine kurze Rechenzeit ist wichtig, daß ein Sicherheitssystem auf dem Markt überhaupt angenommen wird, da eine lange Rechenzeit bei einer Sicherheitsidentifikation von dem Kunden als sehr lästig empfunden wird.

Die Aufgabe der vorliegenden Erfindung besteht darin, ein einfaches und günstig zu implementierendes Konzept zum Ausführen einer Operation auf einen verschlüsselten Operanden, einen Carry-Select-Addierer für verschlüsselte Daten sowie einen Kryptographieprozessor zu schaffen, die dennoch eine hohe Sicherheit vor Angriffen liefern.

Diese Aufgabe wird durch ein Rechenwerk nach Patentanspruch 1 und durch ein Verfahren nach Patentanspruch 35, gelöst.

Der vorliegenden Erfindung liegt die Erkenntnis zugrunde, daß die beste Sicherheit dadurch erreicht werden kann, daß das Rechenwerk insgesamt mit verschlüsselten Operanden arbeitet, daß also keine Entschlüsselung am Eingang der Verarbeitungseinheit und keine Verschlüsselung am Ausgang der Verarbeitungseinheit oder ALU vorgenommen werden. Die ALU ist erfindungsgemäß so ausgestaltet, daß sie neben einem Eingang für den ersten verschlüsselten Operanden und einem Eingang für den zweiten verschlüsselten Operanden auch einen dritten Eingang für einen Verschlüsselungsparameter hat, wobei die ALU ausgebildet ist, um unter Berücksichtigung der Art und Weise der Verschlüsselung der beiden Operanden die verschlüsselten Operanden und die Verschlüsselungsparameter gemäß einer Geheimtext-Rechenvorschrift zu verknüpfen, daß an dem Ausgang ein verschlüsseltes Ergebnis erhalten wird, das gleich einem Wert ist, der erhalten werden würde, wenn der erste Operand im unverschlüsselten Zustand und der zweite Operand im unverschlüsselten Zustand der arithmetischen Operation gemäß einer Klartext-Rechenvorschrift unterzogen wird und ein erhaltenes Resultat anschließend verschlüssel wird. In anderen Worten ausgedrückt wird die arithmetische Operation, die zwischen den zwei verschlüsselten Operanden ausgeführt werden soll, wie z. B. eine OR-Operation als Klartext-Rechenvorschrift, durch mehrere arithmetische Unteroperationen ersetzt, die eine Geheimtext-Rechenvorschrift bilden, wobei die arithmetischen Unteroperationen so ausgewählt sind, daß sie entweder die verschlüsselten Operanden, die negierten verschlüsselten Operanden, den Verschlüsselungsparameter oder den negierten Verschlüsselungsparameter als Eingabe haben.

Gegebenenfalls sind weitere Unteroperationen vorhanden, die als Eingabe Zwischenergebnisse aus den verschlüsselten Eingangsoperanden und dem Schlüssel haben, so daß an keiner Stelle in der ALU Klartext-Eingangsoperanden selbst vorhanden sind. Zur Erhöhung der Sicherheit wird es bevorzugt, daß auch keine Zwischenergebnisse aus Klartext-Eingangsoperanden vorhanden sind. Am Beispiel der OR-Operation würde dies bedeuten, daß die verschlüsselten Eingangsoperanden und der Verschlüsselungsparameter mehreren AND-Operationen und mehreren OR-Operationen und gegebenenfalls Negationsoperationen unterzogen werden, so daß die ALU ein Ergebnis liefert, das gleich dem Ergebnis ist, das erhalten werden würde, wenn die verschlüsselten Eingangsoperanden zunächst entschlüsselt werden, einer einzigen OR-Operation unterzogen werden und dann wieder verschlüsselt werden.

Wenn ein Verschlüsselungsverfahren genommen wird, das aus einem Verschlüsselungsalgorithmus und einem Schlüssel besteht, so ergibt sich für jeden Verschlüsselungsalgorithmus ein anderer Aufbau der ALU für eine arithmetische Operation. Die Sicherheit kann in diesem Fall einfach dadurch erhöht werden, daß der Schlüssel des Verschlüsselungsalgorithmus entweder pro Operation oder pro mehreren Operationen verändert wird, was den Vorteil beinhaltet, daß bei gleichem ALU-Aufbau wechselnde Schlüssel genommen werden können, was es einem Angreifer zusätzlich erschwert, Klartextdaten z. B. aus dem Aufbau der ALU abzuleiten.

In anderen Worten ausgedrückt ist die Verarbeitungseinheit des erfindungsgemäßen Rechenwerks ausgebildet, um eine oder mehrere mathematische Unteroperationen auszuführen, welche zusammen eine Rechenvorschrift ergeben, die aus einer Vorschrift für die Operation mit unverschlüsselten Operanden derart abgeleitet ist, daß der zumindest eine unverschlüsselte Operand, aus dem der zumindest eine verschlüsselte Operand hervorgeht, durch eine mathematische Kombination aus dem zumindest einen verschlüsselten Operanden und dem Verschlüsselungsparameter ersetzt ist, wobei die mathematische Kombination eine Umkehrung des Verschlüsselungsalgorithmus ist, mit dem der verschlüsselte Operand verschlüsselt ist.

Durch die mathematische Kombination wird die Klartext-Rechenvorschrift in die Geheimtext-Rechenvorschrift, die die eine oder die mehreren mathematischen Unteroperationen aufweist, transformiert, welche als Eingangsgröße lediglich den verschlüsselten Operanden oder eine negierte Version desselben oder eine Kombination des verschlüsselten Operanden bzw. der negierten Version derselben mit den anderen Operanden erhalten. Der unverschlüsselte Operand selbst tritt an keiner Stelle als Eingangsgröße für eine mathematische Unteroperation auf und kann somit auch nicht abgehört werden.

Es ist klar, daß die Geheimtext-Rechenvorschrift, die sich durch die eine oder die mehreren mathematischen Unteroperationen ergibt, auf beliebige Weise implementiert werden kann. Dies bedeutet in anderen Worten, daß die mathematischen Unteroperationen, die zusammen die Geheimtext-Rechenvorschrift ergeben, beliebiger Natur sein können. Gefordert wird lediglich, daß sie zusammen eben diese Geheimtext-Rechenvorschrift ergeben, die die gleichen Ergebnisse wie die entsprechende Klartext-Rechenvorschrift nach einer Verschlüsselung des Ergebnisses liefert.

Eine weitere Voraussetzung besteht darin, daß der Verschlüsselungsalgorithmus, mit dem der zumindest eine Operand verschlüsselt wird, ein umkehrbarer Verschlüsselungsalgorithmus ist. Ist der Verschlüsselungsalgorithmus beispielsweise eine bitweise XOR-Funktion oder XNOR-Funktion, so ist die Umkehrung des Verschlüsselungsalgorithmus einfach. Dieselbe ist wieder die XOR- bzw. XNOR-Funktion.

Das erfindungsgemäße Konzept kann prinzipiell für jeden umkehrbaren Verschlüsselungsalgorithmus ausgeführt werden, je nach vertretbarer Komplexität. Die einfachste Implementation des verschlüsselten Rechenwerks besteht darin, wenn als Verschlüsselungsalgorithmus die bitweise XOR-Verknüpfung mit einem Schlüssel verwendet wird, da die Umkehrung des Verschlüsselungsalgorithmus wieder eine XOR-Verknüpfung mit demselben Schlüssel ist. Dasselbe gilt selbstverständlich auch für die XNOR-Funktion.

Bei bevorzugten Ausführungsbeispielen der vorliegenden Erfindung ist der Verschlüsselungsalgorithmus selbst wieder eine bitweise arithmetische Operation, wie z. B. eine XOR- oder eine XNOR-Operation. Dann kann unter Berücksichtigung der Umrechnungsregeln für die arithmetischen Operationen bzw. Verknüpfungen ausgehend von der zu berechnenden arithmetischen Operation und dem Verschlüsselungsalgorithmus eine arithmetische Gleichung gefunden werden, in der keine Klartext-Operanden sondern verschlüsselte Operanden auftreten, die untereinander bzw. mit dem Verschlüsselungsparameter unter Verwendung der Unteroperationen logisch verknüpft sind, um wiederum dasselbe Ergebnis zu liefern, das sich ergeben würde, wenn die Eingangsparameter zunächst entschlüsselt werden, der arithmetischen Operation unterzogen werden und dann wieder verschlüsselt werden.

Ein Vorteil der vorliegenden Erfindung besteht darin, daß in dem erfindungsgemäßen Rechenwerk an keiner Stelle Klartext-Operanden auftreten, sondern nur noch verschlüsselte Operanden. Damit ist es einem Angreifer nicht mehr möglich, an irgendeiner Stelle im Rechenwerk Klartext-Operanden abzuhören.

Ein weiterer Vorteil der vorliegenden Erfindung besteht darin, daß, wenn das Verschlüsselungsverfahren, für das das erfindungsgemäße Rechenwerk ausgebildet ist, verwendet wird, um die Daten im Speicher zu speichern, in einem Rechner an keiner Stelle mehr Klartextdaten vorhanden sind, sondern nur noch verschlüsselte Daten und Verschlüsselungsparameter sichtbar sind. Wenn das erfindungsgemäße Rechenwerk auf einer Chipkarte implementiert ist, von der nicht sichergestellt werden kann, daß sie immer in einer sicheren Umgebung ist, sondern - im Gegenteil - in den Händen und zur freien Verfügung eines Angreifers ist, kann der Angreifer, da nur verschlüsselte Daten vorliegen, keine Klartextdaten auf irgendeine Art und Weise aus der Chipkarte herausholen. Zu verarbeitende Klartextdaten würden daher, bevor sie auf die Chipkarte geladen werden, in einer sicheren Umgebung verschlüsselt, wobei eine sicher Umgebung beispielsweise ein fester Terminal ist, der z. B. ein Bankautomat sein könnte, für dessen Zugang nur bestimmte Personen autorisiert sind. Die Schnittstelle zur Chipkarte ist so aufgebaut, daß ein Angreifer dem Geldautomat selbst die Klartextdaten nicht entlocken kann, da der sichere Terminal die Klartextdaten, bevor sie zu seiner Schnittstelle zur Chipkarte gelangen, verschlüsselt, und insbesondere so verschlüsselt werden, daß der Verschlüsselungsalgorithmus mit dem Aufbau der ALU auf der Chipkarte konform ist. Dann ist an keiner Stelle eine Hin- und Herverschlüsselung erforderlich, so daß ein tatsächlich geschlossenes System existiert. Dieses geschlossene System kann leicht gesichert werden, wenn der Ort, an dem Klartextdaten in das System eingeführt werden, in einer sicheren Umgebung ist.

Ein weiterer Vorteil der vorliegenden Erfindung besteht darin, daß abhängig von der zur Verfügung stehenden Chiptechnologie die ALU auf eine Vielzahl verschiedener Weisen implementiert werden kann. So können die Unteroperationen abhängig von Äquivalenz-Regeln der z. B. binären Arithmetik auf viele verschiedenen Arten und Weisen ausgewählt werden, um doch dasselbe Ergebnis, d. h. dieselbe Wahrheitstabelle, zu liefern. Bei Vorliegen eines vollständigen Systems, z. B. NAND oder NOR, kann eine Implementierung gefunden werden.

Wenn beispielsweise nur NAND-Gatter vorliegen, die lediglich zwei Eingänge haben, so kann eine Implementierung gefunden werden, in der lediglich NAND-Gatter mit zwei Eingängen vorhanden sind. Wenn dagegen NAND-Gatter oder NOR-Gatter vorhanden sind, die mehrere Eingänge haben, und wenn zusätzlich NOT-Operationen einfach implementiert werden können, kann dieselbe Wahrheitstabelle unter Verwendung einer Vielzahl verschiedener Verknüpfungen und Unteroperationen implementiert werden. Diese Flexibilität bzw. Variabilität kann entweder dazu genutzt werden, das schaltungstechnisch und rechenzeitmäßig günstigste Layout zu finden, oder aber abwechselnde Layouts für gleiche Rechenwerke zu verwenden, um bei potentiellen Angreifern, die beispielsweise mehrere Chipkarten miteinander vergleichen wollen, um geheime Informationen zu eruieren, weitere Verwirrung zu stiften.

Im allgemeinsten Fall ist lediglich ein Operand der Operation, die von dem Rechenwerk ausgeführt werden soll, ein verschlüsselter Operand, während der bzw. die weiteren Operanden Klartextoperanden sind. Dies schafft bereits bei einer arithmetischen bzw. logischen Operation eine gewisse Sicherheit, da das Ergebnis einer UND-Operation zwischen einem ersten Parameter a und einem zweiten Parameter b bereits verschlüsselt ist, wenn nur einer der beiden Operanden, d. h. a oder b, verschlüsselt ist.

Alternativ können beide Operanden mit demselben bzw. einem unterschiedlichen Verschlüsselungsalgorithmus oder aber mit demselben Verschlüsselungsalgorithmus, aber unterschiedlichen Schlüsseln verschlüsselt sein.

Das erfindungsgemäße Rechenwerk kann ferner angeordnet sein, um eine Multiplexer-Operation auszuführen, bei der der zumindest eine Operand, der verschlüsselt ist, das Steuersignal ist. Der Multiplexer mit verschlüsseltem Steuersignal kann entweder unverschlüsselte Eingangsdaten verschlüsselt multiplexen, oder aber verschlüsselte Eingangsdaten verschlüsselt multiplexen. Je nach der Größe des Multiplexers ist das Steuersignal lediglich ein Bit breit, d. h. im Falle eines 2:1-Multiplexers. Für größere Multiplexer wird das Steuersignal eine Breite von 2 oder mehreren Bits haben. Je nach gewünschten Sicherheitsstandard kann jedes Bit des Steuersignals mit einem eigenen Schlüssel verschlüsselt sein, oder es können sämtliche Bits des Steuersignals mit demselben Schlüssel verschlüsselt sein.

Fig. 1    ein schematisches Diagramm eines erfindungsgemäßen Rechenwerks;

Fig. 2a    eine Implementierung eines erfindungsgemäßen Rechenwerks für eine bitweise XOR-Verschlüsselung der Operanden, um eine XOR-Operation der ALU zu implementieren;

Fig. 2b    eine Wahrheitstabelle für die Schaltung von Fig. 2a;

Fig. 3a    eine ALU für ein erfindungsgemäßes Rechenwerk zur Implementierung einer AND-Operation, wobei die Operanden mittels einer XOR-Verknüpfung verschlüsselt sind;

Fig. 3b    eine Wahrheitstabelle für die Schaltung von Fig. 3a;

Fig. 4a    eine ALU für ein erfindungsgemäßes Rechenwerk zur Implementierung einer OR-Operation, wobei die Operanden mittels einer XOR-Verknüpfung verschlüsselt sind;

Fig. 4b    eine Wahrheitstabelle für die Schaltung von Fig. 4a;

Fig. 5a    eine ALU für ein erfindungsgemäßes Rechenwerk zur Implementierung einer NOR-Operation, wobei die Operanden mittels einer XOR-Verknüpfung verschlüsselt sind;

Fig. 5b    eine Wahrheitstabelle für die Schaltung von Fig. 5a;

Fig. 6a    eine ALU für ein erfindungsgemäßes Rechenwerk zur Implementierung einer NAND-Operation, wobei die Operanden mit einer XOR-Verknüpfung verschlüsselt sind;

Fig. 6b    eine Wahrheitstabelle für die Schaltung von Fig. 6a;

Fig. 7a    eine ALU für ein erfindungsgemäßes Rechenwerk zur Implementierung einer ADD-Operation für drei Operanden, wobei die drei Operanden mittels einer XOR-Verknüpfung verschlüsselt sind;

Fig. 7b    eine Wahrheitstabelle für die Schaltung von Fig. 7a hinsichtlich der Überträge; und

Fig. 8a    ein Blockschaltbild eines 2:1-Multiplexers mit verschlüsseltem Steuersignal;

Fig. 8b    ein Blockschaltbild eines 3:1-Multiplexers mit verschlüsseltem Steuersignal;

Fig. 8c    ein Blockschaltbild eines 4:1-Multiplexers mit verschlüsseltem Steuersignal;

Fig. 8d    ein Beispiel für eine Implementation des 2:1-Multiplexers mit verschlüsseltem Steuersignal;

Fig. 9a    bis 9c Blockschaltbilder eines erfindungsgemäßen Rechenwerks, das als Addierer ausgeführt ist und die Operanden mit unterschiedlichen Schlüsseln verschlüsselt sind sowie die Überträge unterschiedlich verschlüsselt sind;

Fig. 10    ein bekanntes Rechenwerk mit Entschlüsselung vor der ALU und Verschlüsselung nach der ALU;

Fig. 11a    ein Blockschaltbild eines erfindungsgemäßen Kryptoprozessors mit einem erfindungsgemäßen Rechenwerk;

Fig. 11b    eine detailliertere Darstellung der INC/DEC-Einheit von Fig. 11a,

Fig. 12a    zwei Bit-Slices eines Addierers, wobei jeder Bit-Slice als erfindungsgemäßes Rechenwerk einen 1-Bit-Volladdierer umfaßt;

Fig. 12b     ein prizipielles Blockschaltbild eines Ripple-Carry-Addierers für verschlüsselte Daten; und

Fig. 13     ein Blockschaltbild eines Carry-Select-Addierers für verschlüsselte Daten mit Carry-Auswahl im Geheimtextraum.

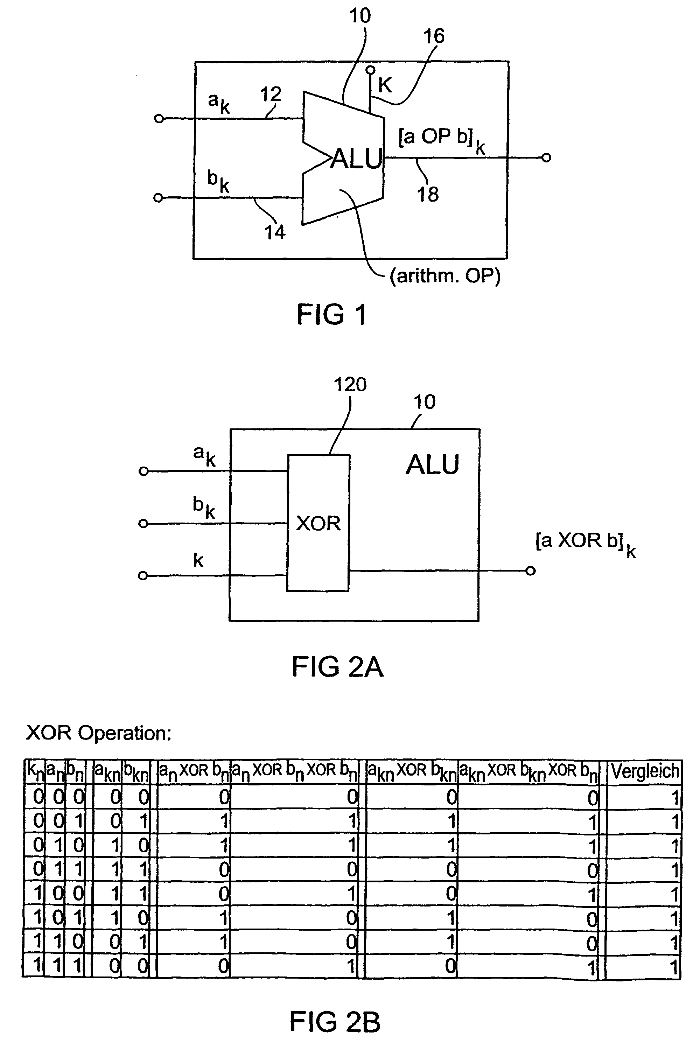

Fig. 1 zeigt ein erfindungsgemäßes Rechenwerk zum Ausführen einer arithmetischen Operation auf zumindest zwei Operanden, wobei die zumindest zwei Operanden verschlüsselte Operanden $a_k$ und $b_k$ sind. Das erfindungsgemäße Rechenwerk umfaßt eine arithmetisch-logische Einheit ALU 10, die neben einem ersten Eingang 12 für den ersten verschlüsselten Operanden $a_k$ einen zweiten Eingang 14 für den zweiten verschlüsselten Operanden $b_k$ hat. Die er-findungsgemäße ALU 10 hat ferner einen dritten Eingang 16 für einen Verschlüsselungsparameter k sowie einen Ausgang 18 zur Ausgabe eines verschlüsselten Ergebnisses der durch die ALU 10 durchgeführten arithmetischen Operation OP. Die arithmetisch-logische Einheit 10 ist ausgebildet, um den ersten Eingang 12, den zweiten Eingang 14 und den dritten Eingang 16 für den Verschlüsselungsparameter k unter Berücksichtigung der Art und Weise der Verschlüsselung der Operanden $a_k$, $b_k$ mittels arithmetischer Unteroperationen so zu verknüpfen, daß an dem Ausgang ein verschlüsseltes Ergebnis erhalten wird, das gleich einem Wert ist, der erhalten werden würde, wenn der erste Operand a in unverschlüsseltem Zustand und der zweite Operand b in unverschlüsseltem Zustand der arithmetischen Operation OP unterzogen werden, und ein erhaltenes Resultat anschließend verschlüsselt wird, wie es durch die eckigen Klammern und den Index k in Fig. 1 dargestellt ist. In der arithmetisch-logischen Einheit 10 wird keine Ent-schlüsselung der Operanden $a_k$ und $b_k$ durchgeführt, sondern es finden lediglich Unteroperationen statt, die auf die verschlüsselten Operanden $a_k$, $b_k$ und den Verschlüsselungsparameter k oder auf die negierten verschlüsselten Operanden oder den negierten Verschlüsselungsparameter oder auf Zwischenergebnisse vorausgehender Operationen durchgeführt werden.

Erfindungsgemäß wird eine arithmetisch-logische Einheit beschrieben, die es erlaubt, die arithmetisch-logischen Operationen direkt mit den verschlüsselten Daten durchzuführen und das Ergebnis ebenfalls in verschlüsselter Form auszugeben. Dabei wird vorzugsweise auch sichergestellt, daß in keinen Zwischenresultaten Klartext auftritt. In Kombination mit einer verschlüsselten Abspeicherung ist damit der Aufbau einer vollständig verschlüsselt arbeitenden Prozessoranordnung erreicht.

Durch die erfindungsgemäße ALU 10 ist es möglich, mit verschlüsselten Daten alle Manipulationen in einer CPU durchzuführen. Lediglich beispielhaft werden in den nachfolgenden Figuren die ALU-Grundoperationen ADD, AND, OR, NOT, NAND, NOR und XOR mit den verschlüsselten Daten dargestellt. Die Daten auf allen Bussen (Fig. 10) sowie in den Speichern M1 bis M3 (Fig. 10) werden hierbei als verschlüsselt angenommen.

Als einfaches, aber wegen der Möglichkeit des häufigen Schlüsselwechsels trotzdem sicheres Verschlüsselungsverfahren auf den Bussen A-F von Fig. 10 wird lediglich beispielhaft eine bitweise Exklusiv-ODER-Operation (XOR-Operation) eines vorzugsweise temporären Schlüssels $k_n$ mit den Daten verwendet. n ist dabei der Index des Schlüssels. Der Schlüssel $k_n$ ist vorzugsweise temporär und nur z. B. für eine oder mehrere aufeinanderfolgende Operationen gültig. Für eine Minimal-CPU werden zwei Eingangsbusse A, B, also zwei Eingangsleitungen 12, 14 von Fig. 1 benötigt. Die Daten auf beiden Bussen werden aufgrund der einfacheren Darstellung mit dem gleichen Schlüssel $k_n$ bitweise verschlüsselt. Es ist jedoch selbstverständlich auch möglich, unterschiedliche Schlüssel auf beiden Eingängen 12, 14 von Fig. 1 zu verwenden. Ferner muß nicht unbedingt eine bitweise Verschlüsselung verwendet werden, sondern es könnte auch z. B. jedes zweite, vierte, sechste oder achte Bit verschlüsselt werden, während die dazwischen liegenden Bits nicht verschlüsselt werden. Eine Sicherheit ist bereits dadurch erreicht, wenn nur ein einziges Bit eines Operanden bzw. allgemein ausgedrückt eine einzige Stelle eines Operanden verschlüsselt wird, und die anderen Stellen nicht verschlüsselt werden.

Obwohl in den nachfolgenden Figuren 2a bis 7b immer von einer bitweisen XOR-Verschlüsselung mit einem Schlüssel $k_n$ ausgegangen wird, ist selbstverständlich auch jede andere umkehrbare Operation als Verschlüsselungsalgorithmus geeignet, wie z. B. eine XNOR-Operation. Darüber hinaus können als Verschlüsselungsalgorithmen beliebige weitere umkehrbare Verschlüsselungsalgorithmen eingesetzt werden. Voraussetzung ist lediglich, daß sich Ausdrücke finden lassen, in denen lediglich die verschlüsselten Operanden $a_k$, $b_k$ und der Verschlüsselungsparameter k in irgend einer Weise logisch bearbeitet, wie z. B. negiert oder verknüpft oder allgemein in einer mathematischen Funktion, vorkommen, was unter Beachtung mathematischer Gesetze, wie z. B.der Äquivalenzregeln für die A-rithmetik-Berechnungen, in Analogie zu den nachfolgend gegebenen Beispielen deutlich wird.

Wie es bereits ausgeführt worden ist, wird für die nachfolgenden Beispielimplementationen einer erfindungsgemäßen ALU 10 aus Einfachheitsgründen der Darstellung eine bitweise XOR-Verschlüsselung der Operanden a und b angenommen, wobei die verschlüsselten Operanden bzw. verschlüsselten Ergebnisse mit einem Index k bezeichnet werden, wobei der Verschlüsselungsparameter mit k bezeichnet wird, und wobei der Index n ein Zählindex für einen n-tes Bit des jeweiligen Operanden bzw. Schlüssels ist. Die verschlüsselten n Bit am Eingang des erfindungsgemäßen Rechenwerks rechnen sich folgendermaßen:

$$a_{k_n} = a_n \oplus k_n \qquad\qquad (1a)$$

$$b_{k_n} = b_n \oplus k_n \qquad\qquad (2a)$$

Die Umkehrungen (Entschlüsselungsgleichungen) der Gleichungen (1a) und (2a) lauten folgendermaßen:

$$a_n = a_{k_n} \oplus k_n \qquad\qquad (1b)$$

$$b_n = b_{k_n} \oplus k_n \qquad\qquad (2b)$$

Daraus ergibt sich für die XOR-Operation, d. h. wenn die ALU eine XOR-Operation ausführen soll, folgende Berechnung:

$$a_n \oplus b_n \oplus k_n = a_{k_n} \oplus b_{k_n} \oplus k_n \qquad\qquad (3)$$

Die nachfolgende Gleichung 4 liefert den Beweis für Gleichung 3.

$$a_n \oplus b_n \oplus k_n = a_n \oplus k_n \oplus k_n \oplus b_n \oplus k_n =$$

$$a_{k_n} \oplus b_{k_n} \oplus k_n \qquad\qquad (4)$$

Die schaltungstechnische Implementierung von Gleichung 3 ist in Fig. 2a gegeben. Die erfindungsgemäße ALU 10 umfaßt in diesem Fall, um ein Ergebnis zu liefern, das gleich einer XOR-Verknüpfung der unverschlüsselten Operanden a, b und einer anschließenden Verschlüsselung des Ergebnisses ist, als arithmetische Unteroperationen ein 3-fach XOR-Gatter 120, das, die verschlüsselten Eingangsparametern $a_k$, $b_k$ und k miteinander verknüpft. Somit ist zu sehen, daß an keiner Stelle der erfindungsgemäßen ALU 10, die in Fig. 2a gezeigt ist, Klartextparameter a und b vorliegen.

Bei der Implementierung des 3-fach XOR-Gatters wird sichergestellt, daß keine Klartextdaten auf einer internen Leitung sichtbar sind. Zum beispiel ist ausgeschlossen, daß zwei kaskadierte 2-fach XOR-Gatter verwendet werden, da dann Klartextzwischenergebnisse auftreten können. Für die Implementierung des 3-fach-XOR-Gatters wird daher eine Look-Up-Table mit den in Fig. 2b dargestellten Werten für die Eingangsparameter $k_n$, $a_{kn}$ und $b_{kn}$ und ($a_n$ XOR $b_n$ XOR $k_n$) als Ausgangsparameter bevorzugt. Die Tabelle kann als ROM implementiert werden.

Es sei darauf hingewiesen, daß die in Fig. 2a gezeigte Implementierung für die XOR-Operation lediglich beispielhaft ist. Selbstverständlich könnte auch der in der Mitte von Gleichung (4) dargestellte Ausdruck schaltungstechnisch implementiert werden. Hierzu wären dann vier entsprechend verschaltete XOR-Gatter erforderlich. Obgleich diese Implementierung schaltungstechnisch und rechenzeitmäßig aufwendig ist, könnte sie dennoch gewählt werden, um potentielle Angreifer zu verwirren.

In Fig. 2b ist die Wahrheitstabelle dargestellt. So finden sich in den ersten drei Spalten sämtliche möglichen Kombinationen des Schlüssels k, des ersten Operanden a und des zweiten Operanden b. In den Spalten Nr. 4 und 5 finden sich die verschlüsselten Eingangsoperanden für sämtliche möglichen Bitkombinationen. In der Spalte Nr. 6 findet sich das Ergebnis der XOR-Verknüpfung für die beiden unverschlüsselten Operanden a und b. In der siebten Spalte findet sich das Ergebnis, wenn das Resultat der XOR-Verknüpfung der unverschlüsselten Operanden wieder verschlüsselt wird, wie es beispielsweise durch die Schaltung 826 von Fig. 10 ausgeführt werden würde.

In der achten Spalte von Fig. 2b findet sich nunmehr das Ergebnis der ersten arithmetischen Unteroperation 120. In der vorletzten Spalte von Fig. 2b findet sich das Ergebnis der zweiten Unteroperation 122, wobei der Vergleich der neunten Spalte mit der siebten Spalte von Fig. 2b die Richtigkeit der Verknüpfung mit den arithmetischen Unteroperationen bestätigt.

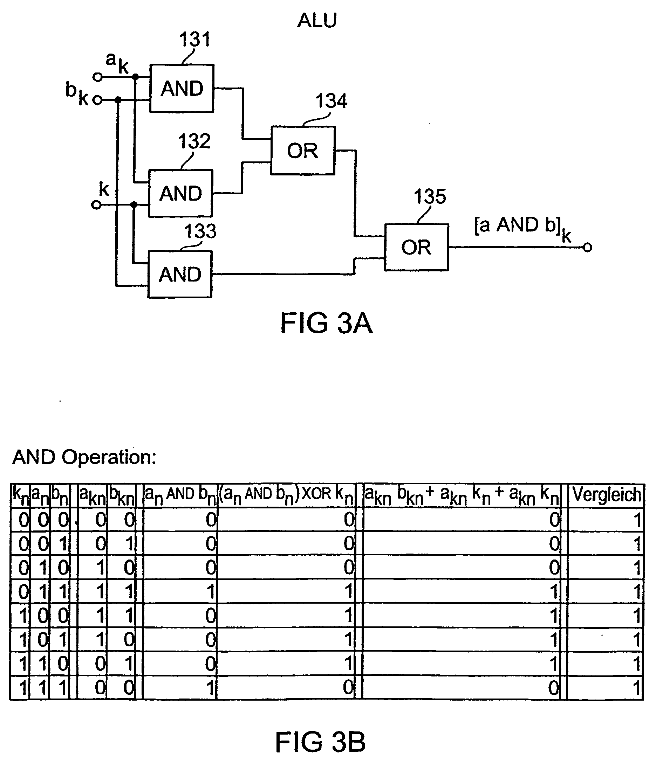

Im nachfolgenden wird auf Fig. 3a eingegangen, in der eine Implementierung eines erfindungsgemäßen Rechenwerks mit einer ALU für die AND-Operation dargestellt ist. In Fig. 3b findet sich wiederum die dazugehörige Wahrheitstabelle. In der nachfolgenden Gleichung 5 findet sich wiederum der Weg von der AND-Operation der unverschlüsselten Operanden a und b und der darauffolgenden XOR-Verschlüsselung, wie sie von der Schaltung, die in Fig. 10 gezeigt ist, durchgeführt werden würde, zur erfindungsgemäßen Implementierung, die z. B. durch die letzte Zeile von Gleichung 5 gegeben ist. Die AND-ALU umfaßt insgesamt fünf Unteroperationen 131 bis 135, welche AND-Operationen und OR-Operationen sind. Die Wahrheitstabelle in Fig. 3b bestätigt wiederum die Richtigkeit der erfindungsgemäßen ALU-Implementierung unter Verwendung mehrerer arithmetischer Unteroperationen zur Verknüpfung der verschlüsselten Operanden und des Schlüssels. An dieser Stelle sei darauf hingewiesen, daß schaltungstechnisch auch jede der Zwischenzeilen von Gleichung (5) implementiert werden kann, je nach dem, welche Gatter dem Schaltungs-Designer zur Verfügung stehen, und je nach dem, welcher Rechenaufwand zulässig ist. Die in Fig. 3a gezeigte schaltungstechnische Implementierung dürfte rechenzeitmäßig effizienter sein als die schaltungstechnische Implementierung beispielsweise der vierten Zeile von Gleichung (5). Auch diese Implementierung könnte jedoch genommen werden, um, wie es ausgeführt worden ist, unter potentiellen Angreifern Verwirrung zu stiften.

$$
\begin{aligned}
(a_n \cdot b_n) \oplus k_n &= \left(a_{k_n} b_{k_n} \overline{k_n} + \overline{a_{k_n}} \cdot \overline{b_{k_n}} k_n\right) \oplus k_n = \\
&= a_{k_n} b_{k_n} \overline{k_n} + k_n \overline{\left(a_{k_n} b_{k_n} \overline{k_n} \cdot \overline{\overline{a_{k_n}} \cdot \overline{b_{k_n}} k_n}\right)} = \\
&= a_{k_n} b_{k_n} \overline{k_n} + k_n \left[\left(\overline{a_{k_n}} + \overline{b_{k_n}} + k_n\right) \cdot \left(a_{k_n} + b_{k_n} + \overline{k_n}\right)\right] = \\
&= a_{k_n} b_{k_n} \overline{k_n} + k_n \left[a_{k_n} \overline{b_{k_n}} + b_{k_n} \overline{a_{k_n}} + a_{k_n} k_n + b_{k_n} k_n + \overline{a_{k_n}} \cdot \overline{k_n} + \overline{b_{k_n}} \cdot \overline{k_n}\right] = \\
&= a_{k_n} b_{k_n} \overline{k_n} + a_{k_n} \overline{b_{k_n}} k_n + b_{k_n} \overline{a_{k_n}} k_n + a_{k_n} k_n + b_{k_n} k_n = \\
&= a_{k_n} b_{k_n} \overline{k_n} + a_{k_n} k_n + b_{k_n} k_n = \\
&= a_{k_n} \left(b_{k_n} \overline{k_n} + k_n\right) + b_{k_n} \left(a_{k_n} \overline{k_n} + k_n\right) = \\
&= a_{k_n} \left(b_{k_n} + k_n\right) + b_{k_n} \left(a_{k_n} + k_n\right) = \\
&= a_{k_n} b_{k_n} + a_{k_n} k_n + b_{k_n} k_n \quad\quad\quad (5)
\end{aligned}
$$

Im nachfolgenden wird auf Gleichung (5) beispielhaft Bezug genommen, um das grundsätzliche erfindungsgemäße Konzept der Erzeugung einer Rechenwerkeinrichtung durch Transformation der Klartext-Rechenvorschrift in die Geheimtext-Rechenvorschrift darzustellen. Als Klartext-Rechenvorschrift wird die UND-Operation bereitgestellt.

Ferner wird, wie es in Gleichung (5) der Fall ist, angenommen, daß der verschlüsselte Operand $a_{kn}$ durch XOR-Verknüpfung mit dem Schlüssel $k_n$ aus dem unverschlüsselten Operanden $a_n$ hervorgeht. Dasselbe wird aus Einfachheitsgründen für den Operanden $b_n$ angenommen. $b_{kn}$ ist somit gleich der XOR-Verknüpfung des unverschlüsselten Operanden $b_n$ und des Schlüssels $k_n$. Die Klartext-Rechenvorschrift lautet im obigen Beispiel: a AND b. Die Geheimtext-Rechenvorschrift, die sich durch die mehreren mathematischen Unteroperationen ergibt, gemäß der die Verschlüsselungseinheit ausgebildet ist, ergibt sich folgendermaßen aus der ersten Zeile von Gleichung (5):

$$
\begin{aligned}
a_{kn} &= a_n \oplus k_n; \quad b_{kn} = b_n \oplus k_n \\
(a_n \cdot b_n) \oplus k_n &= \quad\quad\quad\quad\quad\quad\quad (5a) \\
&\left[(a_{kn} \oplus k_n) \cdot (b_{kn} \oplus k_n)\right] \oplus k_n;
\end{aligned}
$$

Die unverschlüsselten Operanden $a_n$ und $b_n$ wurden in Gleichung 5a durch die mathematische Kombination aus dem verschlüsselten Operanden $a_{kn}$ und dem Schlüssel $k_n$ bzw. $b_{kn}$ und dem Schlüssel $k_n$ ersetzt, wobei diese mathematische Kombination die Umkehrung des Verschlüsselungsalgorithmus ist. Die rechte Seite von Gleichung (5a) stellt somit die Geheimtext-Rechenvorschrift dar, die unmittelbar aus der Klartext-Rechenvorschrift erhalten wird.

Wenn eine XOR-Verknüpfung als Verschlüsselungsalgorithmus verwendet wird, ist die Umkehrung des Verschlüsselungsalgorithmus wieder eine XOR-Funktion, also identisch zu dem Verschlüsselungsalgorithmus.

Um zu einer tatsächlichen Implementation zu kommen, muß nun die Geheimtext-Rechenvorschrift der rechten Seite von Gleichung 5a, in der nur noch verschlüsselte Operanden und Schlüssel vorkommen, auf beliebige Arten und Weisen umgeformt werden können. Diese Umformung kann durch einschlägige mathematische Gesetzmäßigkeiten etc. erfolgen und ist im Falle einer XOR- oder XNOR-Verschlüsselung hierin dargestellt.

Bevorzugt wird es, die letzte Zeile der Gleichung 5, die aus der rechten Seite von Gleichung 5a erhalten wird, wenn eine Vielzahl von mathematischen Umformungen durchgeführt wird, als Basis für eine Implementation der Verarbeitungseinheit (10 in Fig. 1) zu verwenden. Aus Gleichung 5a ist somit zu sehen, wie die Klartext-Vorschrift für die Operation mit unverschlüsselten Operanden ($a_n$ x $b_n$) durch Ersetzen der unverschlüsselten Operanden mittels der Kombination aus verschlüsselten Operanden und Verschlüsselungsparametern in eine Geheimtext-Rechenvorschrift mit mathematische Unteroperationen transformiert wird, welche durch mathematische Umformungen beliebig gestaltet werden können, und zwar unter der Voraussetzung, daß keine Unteroperation als Eingangsgröße einen Klartextoperanden hat, für den ein verschlüsselter Operand existiert.

Falls lediglich ein Operand verschlüsselt ist, lautet die Voraussetzung dahingehend, daß der Klartextoperand, der dem verschlüsselten Operanden entspricht, nirgendwo als Eingangsgröße für eine mathematische Unteroperation verwendet werden darf.

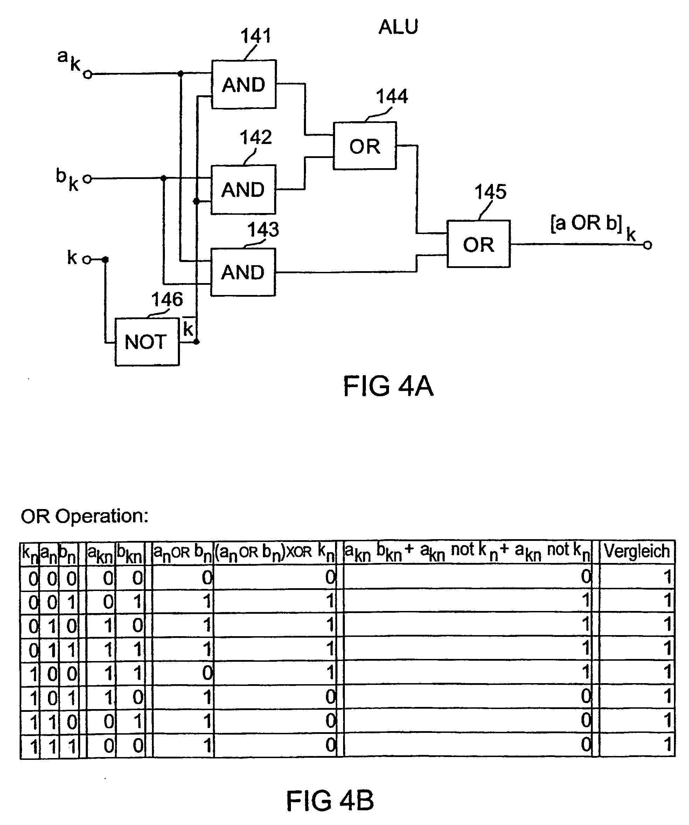

Im nachfolgenden wird auf Fig. 4a Bezug genommen. Fig. 4a zeigt die Implementierung einer OR-Operation zwischen den beiden Operanden a und b.

$$
\begin{aligned}
(a_n + b_n) \oplus k_n &= \overline{a_{k_n}} b_{k_n} \overline{k_n} + a_{k_n} \overline{b_{k_n}} \cdot \overline{k_n} + a_{k_n} b_{k_n} \overline{k_n} + a_{k_n} b_{k_n} k_n = \\
&= a_{k_n} \overline{k_n} + b_{k_n} \overline{k_n} + a_{k_n} b_{k_n} k_n = \\
&= a_{k_n} \left( \overline{k_n} + b_{k_n} k_n \right) + b_{k_n} \left( \overline{k_n} + a_{k_n} k_n \right) = \\
&= a_{k_n} \left( \overline{k_n} + b_{k_n} \right) + b_{k_n} \left( \overline{k_n} + a_{k_n} \right) = \\
&= a_{k_n} \overline{k_n} + b_{k_n} \overline{k_n} + a_{k_n} b_{k_n} \qquad (6)
\end{aligned}
$$

Gleichung 6 zeigt wieder den Weg, wie von der Operation unter Verwendung der unverschlüsselten Operanden und der nachfolgenden Verschlüsselung zu einer Vielzahl von Unteroperationen gelangt werden kann, in denen nur noch die verschlüsselten Operanden und der Verschlüsselungsparameter vorkommen. Fig. 4a zeigt wieder, wie in Fig. 3a die schaltungstechnische Implementierung der disjunktiven Normalform der verschlüsselten ODER-Operation unter Verwendung von drei AND-Unteroperationen 141, 142, 143, von zwei ODER-Unteroperationen 144 und 145 sowie einer Negation bzw. NOT-Operation 146 mit dem Schlüssel k. Selbstverständlich könnte auch, wie es durch die verschiedenen Zwischenergebnisse in Gleichung (6) gezeigt ist, die ALU auf verschiedene andere Arten und Weisen implementiert werden, wobei dann beispielsweise eine Negation des verschlüsselten ersten Operanden $a_k$, des verschlüsselten zweiten Operanden $b_k$ und/oder des Schlüssels k erforderlich sind.

Die Wahrheitstabelle von Fig. 4b zeigt wiederum die Richtigkeit der schaltungstechnischen Implementierung der ALU von Fig. 4a, wenn die siebte Spalte mit der achten Spalte verglichen wird.

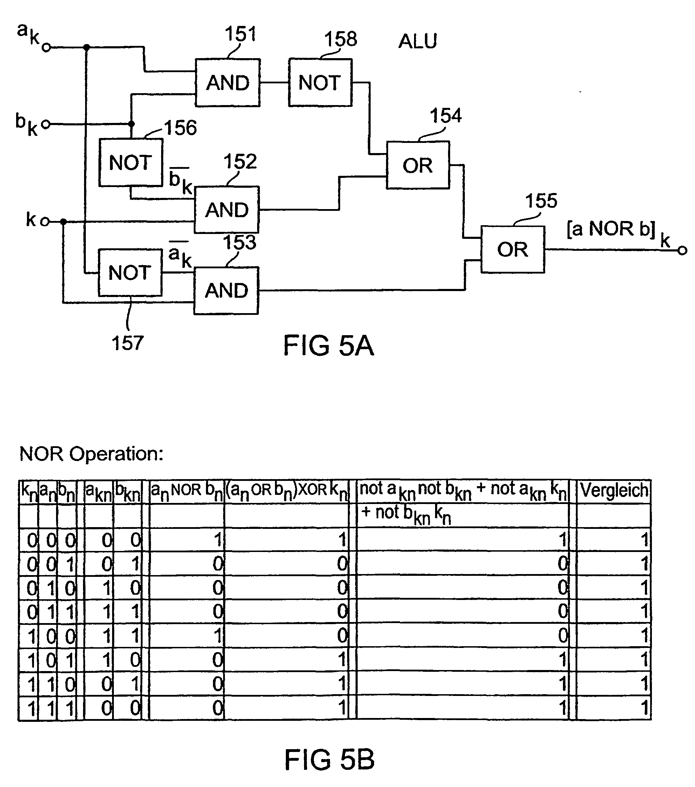

Im nachfolgenden wird auf Fig. 5a Bezug genommen, um die Implementierung einer NOR-Operation mit verschlüsselten Operanden zu zeigen. Hierzu wird auf die nachfolgende Gleichung (7) Bezug genommen.

$$
\begin{aligned}
\overline{(a_n + b_n)} \oplus k_n &= \overline{a_{k_n}} \cdot \overline{b_{k_n}} \cdot \overline{k_n} + \overline{a_{k_n}} \cdot \overline{b_{k_n}} \cdot k_n + a_{k_n} \cdot \overline{b_{k_n}} \cdot k_n + \overline{a_{k_n}} \cdot b_{k_n} \cdot k_n = \\
&= \overline{a_{k_n}} \cdot \overline{b_{k_n}} \cdot + \overline{b_{k_n}} \cdot k_n + \overline{a_{k_n}} \cdot k_n \qquad (7)
\end{aligned}
$$

Die schaltungstechnische Implementierung von Gleichung (7) ist wiederum in Fig. 5a dargestellt. Als arithmetische Unteroperationen werden AND-Operationen 151 bis 153, OR-Operationen 154, 155 und NOT-Operationen 156 und 157 verwendet, die zusammenwirken bzw. miteinander verknüpft sind, wie es in Fig. 5a gezeigt ist. An dieser Stelle sei noch einmal darauf hingewiesen, daß in Fig. 5a ebenso wie bei sämtlichen anderen Ausführungsbeispielen der vorliegenden Erfindung nicht nur eingangsseitig verschlüsselte Operanden $a_k$ und $b_k$ vorliegen, sondern auch sämtliche Zwischenergebnisse beispielsweise nach den Gattern 151 bis 153 Zwischenergebnisse aus verschlüsselten Operanden und nicht aus Klartext-Operanden sind, so daß in dem erfindungsgemäßen Rechenwerk an keiner Stelle Klartext-Daten auftreten, sondern überall verschlüsselte Daten bzw. Ergebnisse aus verschlüsselten Daten vorhanden sind. Die Wahrheitstabelle von Fig. 5b und insbesondere der Vergleich der siebten Spalte mit der achten Spalte zeigen wiederum die Richtigkeit der schaltungstechnischen Implementierung von Fig. 5a. Wieder sei darauf hingewiesen, daß auch das in Gleichung (7) gegebene Zwischenergebnis schaltungstechnisch implementiert werden könnte.

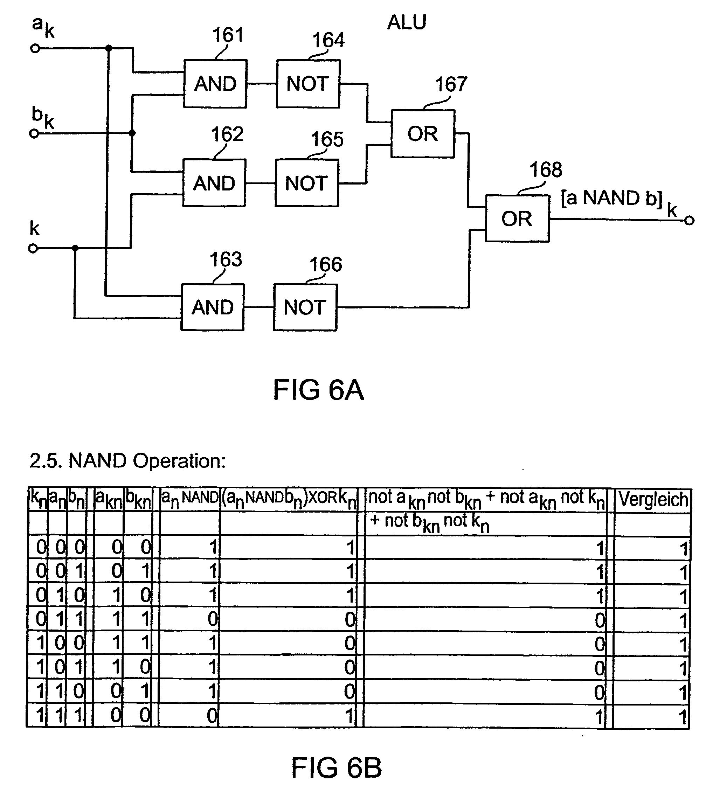

Im nachfolgenden wird auf Fig. 6a Bezug genommen, um eine erfindungsgemäße Implementierung einer NAND-Operation auf verschlüsselte Operanden $a_k$, $b_k$ unter Verwendung des Verschlüsselungsparameters k zu zeigen. Gleichung (8) zeigt wiederum die Arithmetik für Fig. 6a:

$$\overline{(a_n b_n)} \oplus k_n = \overline{a_{k_n}} \cdot \overline{b_{k_n}} \cdot \overline{k_n} + \overline{a_{k_n}} \cdot \overline{b_{k_n}} \cdot k_n + a_{k_n} \cdot \overline{b_{k_n}} \cdot \overline{k_n} + \overline{a_{k_n}} \cdot b_{k_n} \cdot k_n =$$

$$= \overline{a_{k_n}} \cdot \overline{b_{k_n}} \cdot + \overline{b_{k_n}} \cdot \overline{k_n} + \overline{a_{k_n}} \cdot \overline{k_n} \qquad (8)$$

Die ALU von Fig. 6a für das erfindungsgemäße Rechenwerk umfaßt wiederum als arithmetische Unteroperationen drei AND-Operationen 161 bis 163, drei NOT-Operationen 164 bis 166 sowie zwei OR-Operationen 167, 168, die, wie es in Fig. 6a gezeigt ist, untereinander bzw. mit den Eingangsoperanden verknüpft sind, um das verschlüsselte Ergebnis einer NAND-Operation zwischen dem unverschlüsselten Operanden a und b zu liefern. Die Wahrheitstabelle in Fig. 6b unterstreicht wiederum, wenn die siebte Spalte mit der achten Spalte verglichen wird, die Richtigkeit der Implementierung von Fig. 6a.

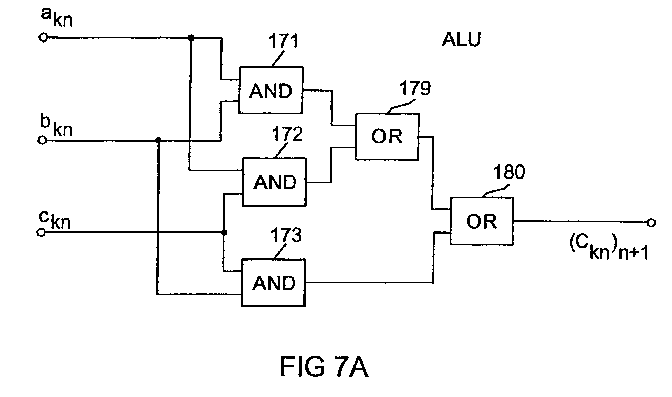

Im nachfolgenden wird auf Fig. 7a Bezug genommen, um als Beispiel für eine Drei-Operanden-Operation zwischen den Operanden a, b und c eine ADD-Operation zu zeigen. Bestimmungsgleichung hierfür ist die nachfolgende Gleichung 9

$$s_{k_n} = a_{k_n} \oplus b_{k_n} \oplus c_{k_n} = a_n \oplus k_n \oplus b_n \oplus k_n \oplus c_n \oplus k_n =$$

$$= a_n \oplus b_n \oplus c_n \oplus k_n \qquad (9)$$

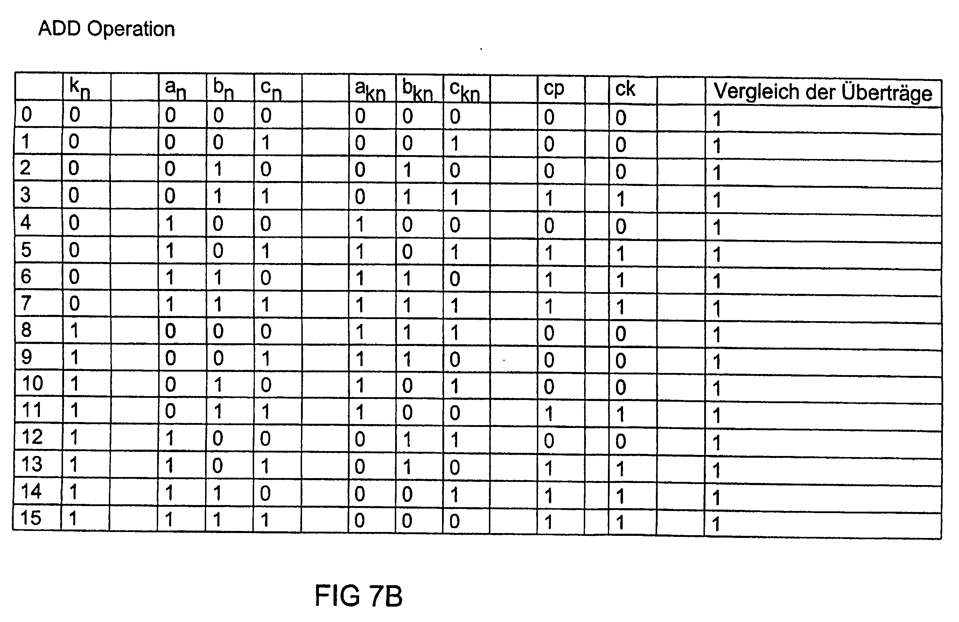

Die Operation von drei Operanden bzw. von drei Bits von Operanden, wenn ein Bit-Slice eines Addierers betrachtet wird, führt zu einem Übertrag c, wobei in der vorletzten Spalte und der drittletzten Spalte der in Fig. 7b gezeigten Wahrheitstabelle die Überträge bei der ADD-Operation zwischen dem unverschlüsselten Operanden a, b und c als cp aufgeführt ist, wobei p für "plain" = unverschlüsselt steht, und wobei in der vorletzten Zeile der Übertrag der ADD-Operation der erfindungsgemäßen ALU ck gezeigt ist. Der Übertrag $ckn_{(n+1)}$ ergibt sich durch Gleichung (10)

$$(c_{kn})_{n+1} = a_{k_n} b_{k_n} + a_{k_n} c_{k_n} + b_{k_n} c_{k_n} \qquad (10)$$

Die Implementierung von Gleichung (10) ist in Fig. 7a dargestellt. Die ALU von Fig. 7a für ein erfindungsgemäßes Rechenwerk umfaßt wiederum eine Vielzahl von arithmetischen Unteroperationen, nämlich AND-Operationen 171 bis 173 und OR-Operationen 179 und 180. Ausgangsseitig ergibt sich dann der Übertrag $(ckn)_{n+1}$ für die ADD-Verknüpfung der drei Eingangs-Operanden, welcher wieder gemäß der in Fig. 7b gezeigten Wahrheitstabelle mit dem Übertrag übereinstimmt, wenn die drei Operanden in unverschlüsselter Form addiert werden und dann verschlüsselt werden. Insbesondere bedeutet $(ckn)_{n+1}$ den Übertrag (Carry-In) für die nächsthöhere ((n+1)-te) Position (Bit-Slice), verschlüsselt mit dem Schlüssel $k_n$, also mit dem Schlüssel der aktuellen Position n, also nicht verschlüsselt mit dem Schlüssel $k_{n+1}$ für die nächsthöhere Position. Dies bedeutet, daß je nach Ausführung eines Bit-Slices eine Umverschlüsselung von $(ckn)_{n+1}$ vom Schlüssel $k_n$ in den Schlüssel $k_{n+1}$ stattfinden wird.

Die Gleichungen (9) und (10) geben eine Implementation für einen Addierer mit verschlüsselten Operanden vor, der ein verschlüsseltes Summenbit s' (s' = $s_{kn}$) und ein verschlüsseltes Übertragbit c' (c' = $(ckn)_{n+1}$) ausgibt, wobei derselbe eingangsseitig neben den beiden verschlüsselten Operanden ein verschlüsseltes Übertrageingangsbit erhält. Ein solcher Addierer wird im Stand der Technik auch als Ein-Bit-Volladdierer bezeichnet.

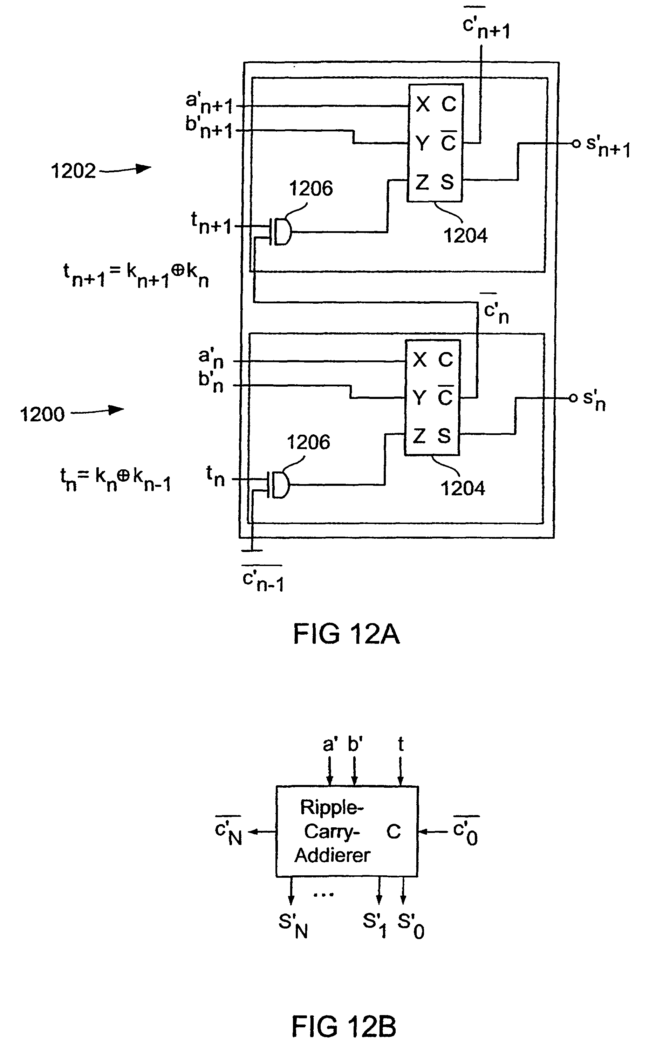

Ein Ein-Bit-Volladdierer wird verwendet, um als erfindungsgemäßes Rechenwerk einen n-Bit breiten Volladdierer aufzubauen. In diesem Fall wird der Ein-Bit-Volladdierer gemäß einem Ausführungsbeispiel der vorliegenden Erfindung als Bit-Slice oder Bit-Slice-Einrichtung bezeichnet. Die Zusammenschaltung zweier Bit-Slice-Einrichtungen ist in Fig. 12a gezeigt. Im einzelnen zeigt Fig. 12a einen ersten Bit-Slice 1200 für das Bit der Ordnung n und einen Bit-Slice 1202 für das Bit der Ordnung n+1. Herzstück jedes Bit-Slices ist das Rechenwerk für verschlüsselte Operanden, das in Fig. 12a mit 1204 bezeichnet ist. Wie es ausgeführt worden ist, sind beliebige andere Implementationen für einen verschlüsselten Addierer möglich, so lange verschlüsselte Eingangsoperanden und ein verschlüsselter Übertrageingang verwendet werden, um verschlüsselte Ausgangsgrößen, d. h. verschlüsselte Summenbits und verschlüsselte Übertragsbits zu erzeugen. Je nach geforderter Sicherheit kann auch ein Klartext-Übertrag und ein verschlüsseltes Summenbit oder ein verschlüsseltes Carrybit und ein Klartext-Summenbit verwendet werden. Im Vergleich zu einer vollständig unverschlüsselten Implementierung der ALU wird auch hier bereits eine verbesserte Sicherheit, wenn auch nicht die höchste Sicherheit, erreicht.

Der Ein-Bit-Volladdierer, der in Fig. 12a gezeigt ist, ist durch folgende beiden Bestimmungsgleichungen definiert:

$$s = \bar{x} \oplus \bar{y} \oplus \bar{z} \qquad\qquad (11)$$

$$c = \bar{x} \cdot \bar{y} + z \cdot \bar{x} + z \cdot \bar{y} \qquad\qquad (12)$$

Die Addierergleichungen sind hier so gewählt, daß in dem Ein-Bit-Volladdierer 1204 selbst kein Verschlüsselungsschlüssel eingegeben werden muß, sehr wohl aber in den Bit-Slice 1202 oder 1200 gemäß einem Ausführungsbeispiel der vorliegenden Erfindung. Darüber hinaus ist der Ein-Bit-Volladdierer 1204 derart angeordnet, daß für eine Addiererfunktion nicht das verschlüsselte Übertragbit c' selbst an die nächsthöhere Bit-Slice-Einrichtung weitergegeben wird, sondern daß das invertierte verschlüsselte Übertragbit weitergereicht wird. In den ersten Eingang x des Ein-Bit-Volladdierers des Bit-Slices für das Bit n+1 wird das aktuelle Bit des verschlüsselten Operanden a, also $a'_{n+1}$ eingegeben. In den zweiten Eingang y wird das aktuelle verschlüsselte Bit des zweiten Operanden, also $b'_{n+1}$ eingegeben. In den dritten Eingang z wird ein Bit eingegeben, das von dem Übertragausgangsbit $c'_n$ des vorhergehenden Bit-Slices 1200 abhängt.

Es wird darauf hingewiesen, daß das Übertragausgangsbit des vorhergehenden Bit-Slices nicht direkt verwendet werden kann, da für die beiden unterschiedlichen Bit-Slice-Einrichtungen 1200 und 1202 unterschiedliche Verschlüsselungsschlüssel $k_{n+1}$ bzw. $k_n$ vorhanden sind. Daher muß eine Umverschlüsselung des Übertragausgangsbits der vorhergehenden Bit-Slice-Einrichtung von dem Verschlüsselungsschlüssel $k_n$ für die vorhergehende Bit-Slice-Einrichtung in den Verschlüsselungsschlüssel $k_{n+1}$ der aktuellen Bit-Slice-Einrichtung durchgeführt werden.

Im Falle einer Verschlüsselung mittels einer XOR-Verknüpfung kann eine Umverschlüsselung einfach durch XOR-Verknüpfung des verschlüsselten Übertragausgangsbits des Bit-Slices 1200 mit einem Umverschlüsselungs-Schlüssel $t_{n+1}$ erreicht werden. Dies ist durch ein XOR-Gatter 1206 dargestellt. Der Umverschlüsselungs-Schlüssel $t_{n+1}$ wird bestimmungsgemäß durch die XOR-Verknüpfung der beiden betroffenen Schlüssel für die beiden Bit-Slices berechnet, also durch eine XOR-Verknüpfung von $k_{n+1}$ für den Bit-Slice 1202 und $k_n$ für den Bit-Slice 1200.

Die Bit-Slice-Einrichtung 1202 gibt wieder ein Übertragausgangsbit aus, das jedoch mit dem Schlüssel $k_{n+1}$ verschlüsselt ist und von der nächsthöheren Stufe (in Fig. 12a nicht gezeigt) wieder entsprechend umverschlüsselt werden muß. Dasselbe trifft für den Übertrageingang des Bit-Slices 1200 zu.

Hier wird ein Übertragausgangsbit der nächst niedrigeren Stufen n-1 erhalten, wobei dieses Bit wieder durch das Umverschlüsselungs-XOR-Gatter 1206 umverschlüsselt werden muß.

Werden mehrere Bit-Slices aneinander geschaltet, wie es in Fig. 12a gezeigt ist, so ergibt sich allgemein ein Ripple-Carry-Addierer (Fig. 12b), der als Eingangsgrößen die beiden verschlüsselten Operanden a', b' sowie die Umverschlüsselungs-Schlüssel für die einzelnen Bits $t_i$ erhält. Der Ripple-Carry-Addierer, der in Fig. 12b dargestellt ist, erhält ferner als Eingangssignal ein Übertrageingangssignal, das für einen üblichen Ripple-Carry-Addierer, der im Addiermodus arbeitet, auf 0 gesetzt ist.

Selbstverständlich kann statt einer 0 auch eine 1 angelegt werden, wie es für den nachfolgend erläuterten Carry-Select-Addierer erläutert wird. Ausgangsseitig liefert der Addierer von Fig. 12b die Summenbits in verschlüsselter Form, nämlich $s_0'$, $s_1'$ bis $s_N'$. Darüber hinaus liefert der in Fig. 12b gezeigte Addierer als Ausgangssignal ein Übertragbit des höchsten Bit-Slices innerhalb des Addierers, falls ein solches erzeugt wird.

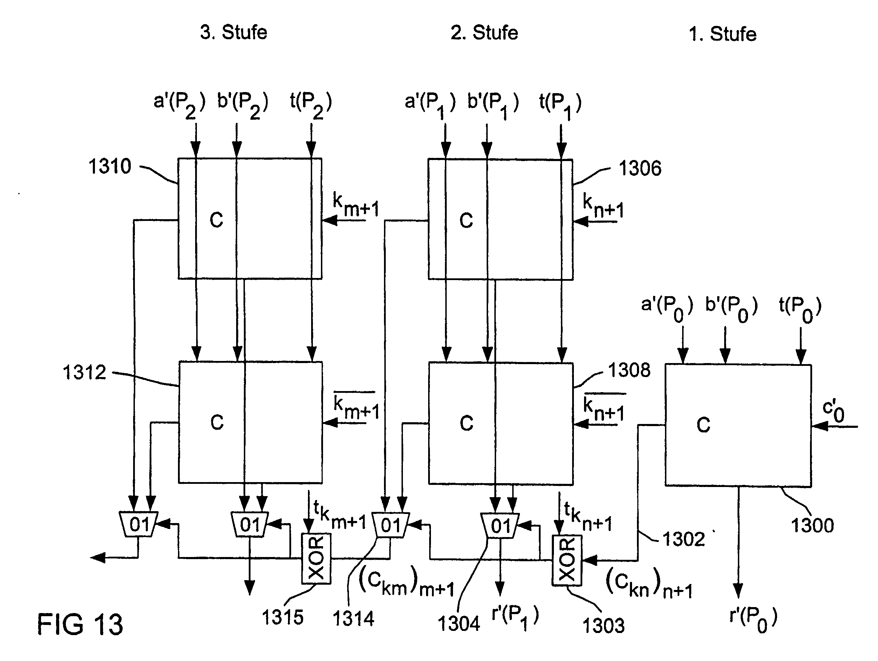

Aus einem Ripple-Carry-Addierer für verschlüsselte Daten, wie er in Fig. 12b bzw. Fig. 12a gezeigt ist, kann, wie es in Fig. 13 gezeigt ist, ein Carry-Select-Addierer für verschlüsselte Daten aufgebaut werden. Carry-Select-Addierer arbeiten schneller als einfache Ripple-Carry-Addierer und sind in "Computer Architecture a Quantitative Approach", Second Edition, Hennessy und Patterson, Morgan Kaufmann Publishers, Inc., 1996, Anhang A beschrieben. Die dort beschriebenen bekannten Carry-Select-Addierer arbeiten jedoch lediglich für unverschlüsselte Operanden und liefern unverschlüsselte Ergebnisse.

Im nachfolgenden wird der erfindungsgemäße Carry-Select-Addierer für verschlüsselte Operanden, der verschlüsselte Ausgangssignale liefert, anhand von Fig. 13 beschrieben. Zunächst ist ein erster Ripple-Carry-Addierer 1300 vorgesehen, der aus mehreren Bit-Slices, wie sie anhand von Fig. 12a beschrieben worden sind, aufgebaut ist. Insbesondere enthält der erste Addierer 1300 eine Mehrzahl von Bit-Slice-Einrichtungen zum Addieren der verschlüsselten Bits der Operanden a', b' von einem niederstwertigen Bit der Operanden zu einem ersten Grenzbit der Operanden. Ausgangsseitig liefert der erste Ripple-Carry-Addierer 1300 verschlüsselte Summenbits r' für sämtliche Bits der Operanden vom niederstwertigen Bit bis zu dem ersten Grenzbit.

Das Übertrag-Ausgangssignal des Bit-Slices im Addierer 1300 für das erste Grenzbit wird mittels einer Leitung 302 ausgegeben, mittels eines Transformationsschlüssels $T_{kn+1}$ umverschlüsselt (Umverschlüsselungseinrichtung 1303) und einer Auswahleinrichtung 1304 in Form eines Multiplexers zugeführt. Der Carry-Select-Addierer umfaßt ferner einen zweiten Addierer 1306 sowie einen dritten Addierer 1308, die intern typischerweise genauso aufgebaut sind wie der erste Addierer 1300 und wie möglicherweise vorhandene weitere Addierer 1310 und 1312. Ferner ist zum Umverschlüsseln der Ausgangs-Übertragbits jeweils eine weitere Umverschlüsselungseinrichtung (z. B. 1315) zwischen dem Multiplexerausgang der vorherigen Stufe und dem Eingang "1" des Multiplexers der nächsten Stufe vorhanden.

Die niederstwertigen Bit-Slices des zweiten Addierers 1306 und des dritten Addierers 1308 werden, wie es in Fig. 13 gezeigt ist, an ihrem Übertrageingang mit NOT($k_{n+1}$) bzw. mit $k_{n+1}$ (bzw. für den dritten Addierer mit NOT($k_{m+1}$) bzw. mit $k_{m+1}$) gespeist.

Die Auswahl der Summenbits, die von dem Addierer 1306 und dem Addierer 1308 berechnet werden (die "Select"-Funktion) findet abhängig davon statt, ob am Übertragausgang 1302 des ersten Addierers nach der Umverschlüsselung eine 0 oder eine 1 erzeugt worden ist. Wurde eine 0 erzeugt, so werden die Ergebnisbits des zweiten Addierers 1306 als Ergebnisbits r' ausgewählt. Lag dagegen nach der Umverschlüsselung eine 1 an, so werden die Ergebnisbits des Addierers 1308 als Ergebnisbits r' ausgewählt. Hat der Carry-Select-Addierer, wie es in Fig. 13 gezeigt ist, weitere Stufen, so findet mittels einer Carry-Auswahleinrichtung 1314 eine Auswahl des richtigen Carry-Signals der zweiten Stufe statt. Insbesondere wird das Carry-Ausgangssignal des Addierers der zweiten Stufe ausgewählt, dessen Ergebnisbits, d. h. Summenbits, als Ergebnis r' ausgewählt worden sind.

Es sei darauf hingewiesen, daß die tatsächliche "Carry-Select"-Auswahl mit einem verschlüsselten Carry-Bit auf der Leitung 1302 durchgeführt wird. Es treten also keine Klartext-Bits auf. Dies rührt daher, daß die Bits NOT($k_{n+1}$) sowie $k_{n+1}$ bzw. NOT($k_{m+1}$) sowie $k_{m+1}$ die in die beiden Addierer der zweiten bzw. dritten Stufe eingegeben werden, ebenfalls gewissermaßen als verschlüsselte Bits betrachtet werden und, wenn Fig. 12a betrachtet wird, in das XOR-Gatter 1206 des niederstwertigen Bit-Slices des entsprechenden Addierers eingespeist werden und somit einer "Umverschlüsselung" unterzogen werden, um mit dem Schlüssel der tatsächlichen Verschlüsselungseinrichtung verschlüsselt zu sein. Obgleich in Fig. 13 lediglich gezeigt ist, daß die Umverschlüsselungs-Schlüssel t in die Addierer eingespeist werden, sei darauf hingewiesen, daß die Operation zur Berechnung des Umverschlüsselungs-Schlüssels ebenfalls innerhalb der Bit-Slices des Addierers durchgeführt werden könnte. In diesem Fall müßten die einzelnen Verschlüsselungsparameter $k_i$ für die entsprechenden Bits in die Addierer eingegeben werden, und die XOR-Verknüpfung der Verschlüsselungsparameter zweier benachbarter Bit-Slices würde innerhalb der Addierer durchgeführt werden. Aus Schnelligkeitsgründe wird es jedoch bevorzugt, die Verschlüsselungsparameter außerhalb der Bit-Slices zu berechnen.

Schließlich sei darauf hingewiesen, daß anstelle des Ein-Bit-Volladdierers 1204, wie es bereits ausgeführt worden ist, eine beliebige andere Einrichtung zum Ein-Bit-Volladdieren eingesetzt werden kann, der in der Lage ist, mit verschlüsselten Operanden zu rechnen und ein verschlüsseltes Ergebnisbit bzw. ein verschlüsseltes Übertragbit auszugeben, ohne daß Klartext-Zwischenergebnisse erzeugt werden müssen.

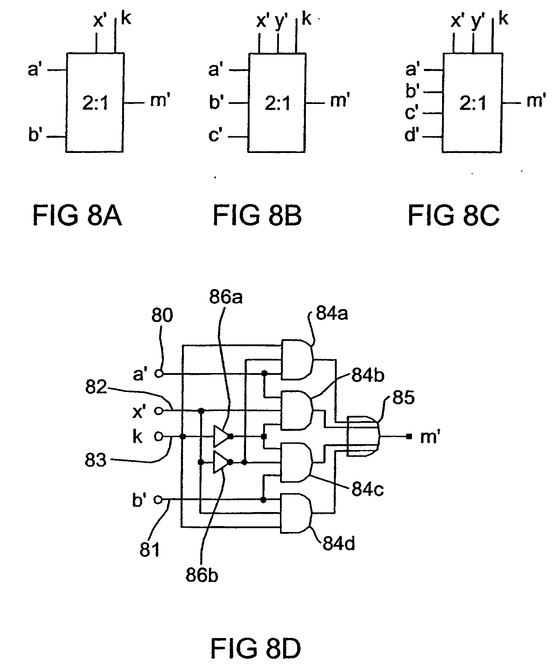

Im nachfolgenden wird anhand der Fig. 8a bis 8d auf eine weitere Ausführungsform des erfindungsgemäßen Rechenwerks eingegangen, bei der die Operation, die auf mehrere Operanden auszuführen ist, eine Multiplexer-Operation ist. Werden beispielsweise, wie in Fig. 8a gezeigt, zwei Eingangsoperanden a', b' erhalten, wobei der Apostroph "'" für verschlüsselte Werte steht, so besteht die Operation auf die Eingangsoperanden darin, daß abhängig von dem Steuersignal x', das mit dem Schlüssel k verschlüsselt ist, entweder a' zum Ausgang geleitet wird, also das Signal m' wird, und b' nicht weitergeleitet wird, oder, alternativ, daß b' das Ausgangssignal m' wird, und das andere Eingangssignal a' nicht weitergeleitet wird.

Die Auswahl geschieht auf der Basis des verschlüsselten Steuersignals x', das mit dem Verschlüsselungsparameter k verschlüsselt ist.

Das erfindungsgemäße Rechenwerk könnte selbstverständlich auch unverschlüsselte Operanden a, b unter Verwendung des verschlüsselten Steuersignals x' multiplexen.

Die Definitionsgleichung bzw. Klartext-Rechenvorschrift für die 2:1-Multiplexeroperation mit unverschlüsselten Operanden lautet folgendermaßen:

$$m = b \cdot \bar{x} +$$

$$a \cdot x \qquad (13)$$

Analog dazu lautet die Definitionsgleichung bzw. Klartext-Rechenorschrift für 3:1-Multiplexeroperation für unverschlüsselte Operanden folgendermaßen:

$$m = c \cdot \bar{x} \cdot y +$$

$$b \cdot x \cdot \bar{y} +$$

$$a \cdot x \cdot y +$$

$$a \cdot \bar{x} \cdot \bar{y} \qquad (14)$$

Für den 4:1-Multiplexer in Fig. 8c lautet die Klartext-Rechenvorschrift für die Multiplexeroperation mit unverschlüsselten Operanden folgendermaßen:

$$m = d \cdot x \cdot y +$$

$$c \cdot \bar{x} \cdot y +$$

$$b \cdot x \cdot \bar{y} +$$

$$a \cdot \bar{x} \cdot \bar{y} \qquad (15)$$

Die Geheimtext-Rechenvorschrift für die verschlüsselte Multiplexeroperation wird nunmehr aus der Klartext-Rechenvorschrift dadurch erhalten, daß das Steuersignal in den Gleichungen 11 bis 13 durch die Kombination aus verschlüsseltem Steuersignal und Verschlüsselungsparameter ersetzt wird.

Im vorliegenden Beispiel ist der Verschlüsselungsalgorithmus eine XOR-Verknüpfung mit einem Schlüssel. Die mathematische Kombination aus dem verschlüsselten Steuersignal und dem Verschlüsselungsparameter,die die Umkehrung des Verschlüsselungsalgorithmus ist, ist somit ebenfalls wieder die XOR-Verknüpfung. Das Einsetzen von x' XOR k in Gleichung 11 führt zu folgender Geheimtext-Rechenvorschrift für den verschlüsselten 2:1-Multiplexer, wobei bereits einige Umformungen durchgeführt worden sind, um eine bevorzugte Implementation der Verarbeitungseinheit anzugeben:

$$2{:}1\text{MUX: } m' = b' \cdot x' \cdot k +$$

$$a' \cdot \bar{x}' \cdot k +$$

$$a' \cdot x' \cdot \bar{k} +$$

$$b' \cdot \bar{x}' \cdot \bar{k} \qquad (16)$$

Der in Fig. 8b gezeigte Multiplexer ist ein 3:1-Multiplexer, bei dem das Steuersignal 2 Bits x, y hat. Aus Einfachheitsgründen wird angenommen, daß die beiden Steuersignalbits x, y mit dem gleichen Schlüssel verschlüsselt werden, um verschlüsselte Steuerbits x' und y' zu erhalten. Durch Einsetzen von x' XOR k bzw. y' XOR k in die Bestimmungsgleichung (12) für die unverschlüsselten Operanden für den 3:1-Multiplexer ergibt sich folgende Geheimtext-Rechenvorschrift für den 3:1-Multiplexer, die bereits umgeformt worden ist, um direkt durch die Verarbeitungseinheit implementiert zu werden:

$$3{:}1 \text{ MUX} : m' = c' \cdot x' \cdot \bar{y}' \cdot k +$$

$$b' \cdot \bar{x}' \cdot y' \cdot k +$$

$$c' \cdot \bar{x} \cdot y' \cdot \bar{k} +$$

$$b' \cdot x' \cdot \bar{y}' \cdot \bar{k} +$$

$$a' \cdot x' \cdot y' +$$

$$a' \cdot \bar{x}' \cdot \bar{y}' \qquad (17)$$

Eine analoge Vorgehensweise führt für den in Fig. 8c gezeigten 4:1-Multiplexer zu folgender Geheimtext-Rechenvorschrift, die sich aus vielen mathematischen Unteroperationen zusammensetzt, wie es in Gleichung (16) dargelegt ist:

$$4:1\ \mathrm{MUX}:m'= d' \cdot \bar{x}' \cdot \bar{y}' \cdot k +$$

$$c' \cdot x' \cdot \bar{y}' \cdot k +$$

$$b' \cdot \bar{x}' \cdot y' \cdot k +$$

$$a' \cdot x' \cdot y' \cdot k +$$

$$d' \cdot x' \cdot y' \cdot \bar{k} +$$

$$c' \cdot \bar{x}' \cdot y' \cdot \bar{k} +$$

$$b' \cdot x' \cdot \bar{y}' \cdot \bar{k} +$$

$$a' \cdot \bar{x}' \cdot \bar{y}' \cdot \bar{k} \qquad (18)$$

Im nachfolgenden wird anhand von Fig. 8d eine schaltungstechnische Implementation der in Gleichung (14) gegebenen Rechenvorschrift gegeben, wobei als mathematische Unteroperationen lediglich die UND-Operation, die ODER-Operation und die NOT-Operation verwendet werden:

Die in Fig. 8d gezeigte Schaltung für einen verschlüsselten Multiplexer umfaßt zwei Eingänge 80, 81 für die zu multiplexenden Datenströme a', b', die verschlüsselt sind. Die in Fig. 8d gezeigte erfindungsgemäße Multiplexer-Verarbeitungseinheit umfaßt ferner einen Eingang 82 für das verschlüsselte Steuersignal sowie einen Eingang 83 für den Verschlüsselungsparameter k. Wie es durch Gleichung (16) gegeben ist, umfaßt die Schaltung 4 UND-Gatter 84a, 84b, 84c, 84d sowie ein ODER-Gatter 85 sowie zwei Invertierer 86a, 86b, um die negierte Version des verschlüsselten Steuersignals bzw. die negierte Version des Verschlüsselungsparameters zu erzeugen, welche in Gleichung (16) gefordert werden. Für Fachleute ist es unmittelbar offensichtlich, daß Fig. 8d eine direkte schaltungstechnische Implementation der Gleichung (16) ist. Durch beliebige Umformung von Gleichung (16) durch einschlägige mathematische Gesetzmäßigkeiten können beliebige andere Implementationen für die Verarbeitungseinheit in Analogie zu Fig. 8d gefunden werden.

Alle diese unterschiedlichen Implementationen haben gemeinsam, daß sie zusammen die in Gleichung (16) für den 2:1-Multiplexer gegebene Rechenvorschrift implementieren, die aus einer Mehrzahl von mathematischen Unteroperationen (84a-84d, 85, 86a, 86b) bestehen, die als Eingangsgrößen lediglich das verschlüsselte Steuersignal und den Verschlüsselungsparameter, jedoch nicht das Klartextsteuersignal umfassen.

Es sei darauf hingewiesen, daß Multiplexer ein grundlegendes und oftmals unverzichtbares Element in vielen elektronischen Schaltungen darstellen. Es existieren unterschiedliche Implementierungsvarianten für n-auf-1-Multiplexer, optimiert je nach Geschwindigkeit, Fläche oder Technologie. Durch das erfindungsgemäße Konzept werden Angriffsmöglichkeiten, insbesondere Probing mittels Nadeln und Side-Channel-Attacks wie DPA (Differential Power Analysis) oder SPA (Simple Power Analysis) erheblich eingeschränkt. Wie es ausgeführt worden ist, wird als Verschlüsselungstechnik das Prinzip des One-Time-Pad benutzt. Alle N Eingangssignals $a_i$ (i = 2, ..., N), d. h. die zu multiplexenden Daten, sowie die Steuerleitungen $x_n$ (wobei n = 1 ... $\lceil \log_2 N \rceil$; die Operation $\lceil x \rceil$ bezeichnet die kleinste ganze Zahl größer x) verschlüsselt vorliegen. Vorzugsweise wird zur Verschlüsselung eine bitweise Modulo-2-Addition gemäß der Vernam-Chiffre mit einem ständig wechselnden Schlüssel $k_i$ eingesetzt, was der XOR-Verknüpfung entspricht. Das Resultat der Operation wird unmittelbar im Geheimtextraum generiert, ohne je ein Zwischenergebnis im Klartextraum zu erzeugen. Ein Strom von unabhängigen und gleich verteilten Zufallsbits für die Schlüssel hat dann ein vollständig stochastisches Stromprofil und ein stochastisches Bitmuster des Resultats zur Folge. SPA- und DPA-Angriffe werden dadurch erheblich erschwert. Der Zuwachs an Komplexität/Laufzeit durch die Multiplexerimplementierung beispielsweise im Vergleich von Gleichung (16) zu Gleichung (13) ist gegenüber dem Gewinn an Sicherheit nicht wesentlich.

Um einen Multiplexer mit n-Bit breiten Eingängen auf einen n-Bit breiten Ausgang zu schaffen, muß die in Fig. 8d gezeigte Schaltung beispielsweise für den 2:1-Multiplexer für jedes Bit wiederholt werden. Fig. 8d zeigt somit einen Bit-Slice für einen Multiplexer mit Eingangssignalen, die breiter als 1 Bit sind.

Im vorhergehenden wurde insbesondere Bezug nehmend auf die Fig. 1 bis 7b auf Rechenwerksimplementierungen eingegangen, bei denen durch eine Operation zu verknüpfende Operanden a, b beide mit dem gleichen Schlüssel k verschlüsselt sind. Ferner wird davon ausgegangen, daß auch das Resultat mit diesem Schlüssel verschlüsselt ist, wie es durch die Bestimmungsgleichungen bzw. Rechenvorschriften, beispielsweise Gleichung 5 und 5a, dargestellt ist. Ein denkbares Angriffsziel könnte hier der Schlüsselgenerator eines Kryptographieprozessors sein.

Durch gleichzeitiges Abhorchen der Schlüsselfolge sowie des verschlüsselten Ausgangs-Datenstroms könnte hier ein Angreifer unter Umständen auf ein Klartextergebnis schließen können. Der Aufwand für diesen Angriff ist zwar hoch, da beispielsweise bei einer 32-Bit-CPU gleichzeitig 64 Bits für eine vollständige Entschlüsselung beobachtet werden müßten. Um dennoch diesen lokalisierten Angriffspunkt in Form des Schlüsselgenerators, der von einem Angreifer auch deaktiviert werden könnte, zu eliminieren, wird es für bestimmte Fälle, bei denen besonders hohe Sicherheitsstandards erforderlich sind, bevorzugt, mehrere verschiedene Verschlüsselungsalgorithmen bzw. denselben Verschlüsselungsalgorithmus, jedoch mit unterschiedlichen Verschlüsselungsschlüsseln einzusetzen. Damit wird der Aufwand für einen erfolgreichen Angriff noch einmal wesentlich erhöht.

Die Operanden für die Operation werden nicht mehr, wie es beispielsweise anhand von Fig. 2a dargestellt ist, mit demselben Schlüssel k verschlüsselt, sondern die Operanden werden mit unterschiedlichen Schlüsseln verschlüsselt. Hierbei wird es bevorzugt, für jeden Operanden einen eigenen Schlüssel zu nehmen, also für den Operanden a den Schlüssel i, für den Operanden b, den Schlüssel j. Ferner wird es bevorzugt, das Ergebnis der Operation mit einem weiteren Schlüssel, der hier mit k bezeichnet wird, zu verschlüsseln. Der Schlüssel k, mit dem das Ergebnis der Operation verschlüsselt ist, könnte unabhängig von i und j gewählt werden. Es wird jedoch bevorzugt, den Schlüssel k als XOR-Verknüpfung der Schlüssel i und j zu verwenden.

Ein Vorteil dieses Verfahrens ist, daß das Abhören eines einzelnen Schlüsselstroms nicht mehr ausreicht, um den Ausgangs-Datenstrom der Operation rekonstruieren zu können. Damit wird die Angriffsschwelle noch weiter erhöht, während der Hardwareaufwand nur wenig erhöht wird. Weiterhin erhöht die Verwendung mehrerer unabhängiger Schlüsselgeneratoren die Sicherheit gegen die Kryptoanalyse, da reale Schlüsselgeneratoren keine unabhängigen und gleich verteilten Zufallsschlüssel generieren können. Ferner wird die Sicherheit auch dadurch erhöht, daß bei einem physikalischen Angriff, der einen Schlüsselgenerator deaktiviert, die Verschlüsselung nicht vollständig ausfällt.

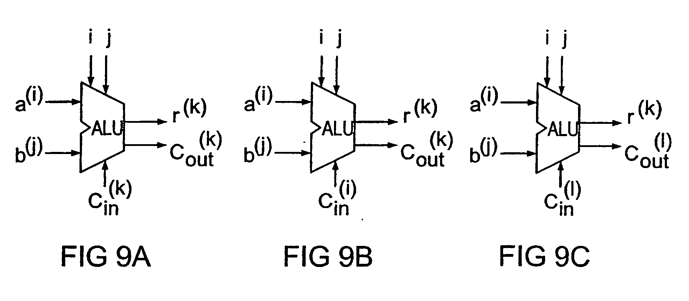

Die Fig. 9a bis 9c zeigen drei Varianten für ein als Addierer der Eingangsoperanden a, b wirkendes erfindungsgemäßes Rechenwerk (ALU) mit einem zusätzlichen Carry-Eingang $c_{in}$, einem Summen-Ausgang r und einem Übertrag(Carry)-Ausgang $c_{out}$. Das erfindungsgemäße Rechenwerk in seiner in den Fig. 9a bis 9c gezeigten Form hat ferner Eingänge i, j für die unterschiedlichen Verschlüsselungsparameter i, j für die unterschiedlichen Schlüssel der Operanden a bzw. b.

Die in den Fig. 9a bis 9c gezeigten Rechenwerke, die als 1-Bit-Volladdierer gezeichnet sind, die prinzipiell so arbeiten, wie es Bezug nehmend auf die Fig. 7a und 7b dargestellt worden ist, haben keinen Eingang für den Ausgangs-Schlüssel k, da derselbe per Definition durch die XOR-Verknüpfung der Schlüssel i und j gegeben ist. Dies hat den Vorteil, daß der Schlüssel k, der zur Entschlüsselung des Ergebnisses r benötigt werden würde, nicht explizit auftritt und daher auch explizit nicht abgehört werden kann.

In Fig. 9a ist ferner der Übertrag-Eingang $c_{in}$ mit dem Schlüssel k verschlüsselt, während der Übertrag-Ausgang $c_{out}$ ebenfalls mit dem Schlüssel k verschlüsselt ist. In Fig. 9b ist der Übertrag-Eingang $c_{in}$ mit dem gleichen Schlüssel wie der Operand a verschlüsselt, also mit i, während der Übertrag-Ausgang mit dem Schlüssel k verschlüsselt ist. In Fig. 9c ist eine wieder andere Variante dargestellt, bei der der Übertrag-Eingang mit einem weiteren Schlüssel 1 verschlüsselt ist, und bei dem auch der Übertrag-Ausgang mit demselben weiteren Schlüssel 1 verschlüsselt ist. Obgleich nicht dargestellt, ist auch eine Variante mit unverschlüsseltem Übertrag-Eingang oder aber unverschlüsseltem Übertrag-Ausgang möglich.

Für alle Schlüssel gelten folgende Verschlüsselungsgleichungen:

$$
\begin{aligned}
a^{(i)} &= a \quad \text{XOR} \quad i \\
b^{(j)} &= b \quad \text{XOR} \quad j \\
r^{(k)} &= r \quad \text{XOR} \quad k \qquad\qquad (19) \\
c_{in}{}^{(k)} &= c_{in} \quad \text{XOR} \quad k \\
c_{out}{}^{(1)} &= c_{out} \quad \text{XOR} \quad 1
\end{aligned}
$$

Die Umkehrungen der Verschlüsselungsgleichungen von Gleichung (19) sind identisch, da, wie es mehrfach ausgeführt worden ist, die Umkehrung der XOR-Funktion wieder die XOR-Funktion ist.

Im nachfolgenden sind übersichtsmäßig die logischen Operationen sowie die Addierer-Funktionen SUM (Summenbit) und Carry (Übertragbit) für die Versionen der Fig. 9a bis 9c gegeben:

Eingaben: Operanden $a^{(i)}$, $b^{(j)}$, sowie Carry-in $c_{in}{}^{(k)}$ (Variante a) bzw. $c_{in}{}^{(i)}$ (Variante b)

Hilfsvariable: k=i⊕j, a'=a$^{(i)}$⊕j, b'=b$^{(j)}$⊕i,
Logische Operationen:
Klartext-Rechenvorschrift Geheimtext-Rechenvorschrift

OR:

$$r^{(k)} \leftarrow (a + b)^{(k)} = (a'+b') \cdot \bar{k} + a' \cdot b'$$

AND:

$$r^{(k)} \leftarrow (a \cdot b)^{(k)} = (a'+b') \cdot k + a' \cdot b'$$

NOR:

$$r^{(k)} \leftarrow (\overline{a + b})^{(k)} = \overline{a'+b'} + \overline{a' \cdot b'} \cdot k$$

NAND:

$$r^{(k)} \leftarrow (\overline{a \cdot b})^{(k)} = \overline{a'+b'} + \overline{a' \cdot b'} \cdot \bar{k}$$

XOR:

$$r^{(k)} \leftarrow (a \oplus b)^{(k)} = (a' \oplus b') \oplus k$$

XNOR:

$$r^{(k)} \leftarrow (\overline{a \oplus b})^{(k)} = (a' \oplus b') \oplus \bar{k}$$

Variante Fig. 9a: Volladdierer mit Summe und Carry-out:
Hilfsvariablen: a'=a$^{(i)}$⊕j, b'=b$^{(j)}$⊕i, c'=c$_{in}$$^{(k)}$

SUM:

$$r^{(k)} \leftarrow a' \oplus b' \oplus c'$$

CARRY :

$$c_{out}^{(k)} \leftarrow a' \cdot b' + a' \cdot c' + b' \cdot c'$$

Variante Fig. 9b: Volladdierer mit Summe und Carry-out:
Hilfsvariablen: a'=a$^{(i)}$⊕j, b'=b$^{(j)}$⊕i, c''=c$_{in}$$^{(i)}$

SUM:

$$r^{(k)} \leftarrow a^{(i)} \oplus b' \oplus c''$$

CARRY:

$$c_{out}{}^{(k)} \leftarrow \left(a^{(i)} \oplus c''\right) \cdot b' + \overline{a^{(i)} \cdot c''} \cdot j + a^{(i)} \cdot c'' \cdot \overline{j}$$

Variante Fig. 9c: Volladdierer mit Summe und Carry-out:
Hilfsvariablen: $a' = a^{(i)} \oplus j \oplus l$, $b' = b^{(j)} \oplus i \oplus l$, $c' = c_{in}{}^{(l)} \oplus k$

SUM:

$$r^{(k)} \leftarrow a' \oplus b' \oplus c_{in}{}^{(l)}$$

CARRY:

$$c_{out}{}^{(l)} \leftarrow (a' \cdot b' + a' \cdot c' + b' \cdot c') \oplus k$$

Im folgenden werden die Normalformen der obigen Geheimtext-Rechenvorschriften angegeben, die durch die Verarbeitungseinheit direkt implementiert werden können, und die lediglich mathematische Unteroperationen umfassen, die keine Klartextdaten als Eingangsoperanden haben. Für den Volladdierer (SUM, Carry), ist im nachfolgenden nur die Rechenvorschrift für die Variante von Fig. 9a angegeben. Diese hat den Vorteil, daß der Schlüssel k nirgends explizit auftritt und somit auch nicht abgehört werden kann.

AND:

$$r^{(k)} \leftarrow a^{(i)} \cdot b^{(j)} \cdot \overline{j} + \overline{a}^{(i)} \cdot \overline{b}^{(j)} \cdot j + b^{(j)} \cdot \overline{i} \cdot j + \overline{b}^{(j)} \cdot i \cdot \overline{j} \tag{20}$$

OR:

$$r^{(k)} \leftarrow a^{(i)} \cdot \overline{b}^{(j)} \cdot \overline{j} + \overline{a}^{(i)} \cdot b^{(j)} \cdot j + b^{(j)} \cdot \overline{i} \cdot \overline{j} + \overline{b}^{(j)} \cdot i \cdot j \tag{21}$$

NAND:

$$r^{(k)} \leftarrow \overline{a}^{(i)} \cdot b^{(j)} \cdot \overline{j} + a^{(i)} \cdot \overline{b}^{(j)} \cdot j + b^{(j)} \cdot i \cdot j + \overline{b}^{(j)} \cdot \overline{i} \cdot \overline{j} \tag{22}$$

NOR:

$$r^{(k)} \leftarrow \overline{a}^{(i)} \cdot \overline{b}^{(j)} \cdot \overline{j} + a^{(i)} \cdot b^{(j)} \cdot j + b^{(j)} \cdot i \cdot \overline{j} + \overline{b}^{(j)} \cdot \overline{i} \cdot j \tag{23}$$

XOR:

$$r^{(k)} \leftarrow a^{(i)} \oplus b^{(j)} \tag{24}$$

XNOR:

$$r^{(k)} \leftarrow \overline{a}^{\overline{(i)}} \oplus b^{(j)} \tag{25}$$

SUM:

$$r^{(k)} \leftarrow \left(a^{(i)} \oplus j\right) \oplus \left(b^{(j)} \oplus i\right) \oplus c_{in}^{(k)} \quad (26)$$

CARRY:

$$r^{(k)} \leftarrow \left(a^{(i)} \oplus j\right) \cdot \left(b^{(j)} \oplus i\right) + \left(a^{(i)} \oplus j\right) \cdot c_{in}^{(k)} + \left(b^{(j)} \oplus i\right) \cdot c_{in}^{(k)} \quad (27)$$

Aus den Gleichungen (20) bis (27) ist ohne weiteres eine Implementation der Verarbeitungseinheit für Fachleute ableitbar, wobei die einzigen hier verwendeten mathematischen Unteroperationen, die zusammen die Rechenvorschrift ergeben, eine UND-Operation, eine NOT-Operation, eine ODER-Operation sowie eine XOR-Operation sind.

Ferner sei darauf hingewiesen, daß der Schlüssel k, mit dem das Ergebnis r verschlüsselt ist, gleich der XOR-Verknüpfung von i und j ist. Daher hat die Verarbeitungseinheit des erfindungsgemäßen Rechenwerks keinen expliziten Eingang für den Schlüssel k.

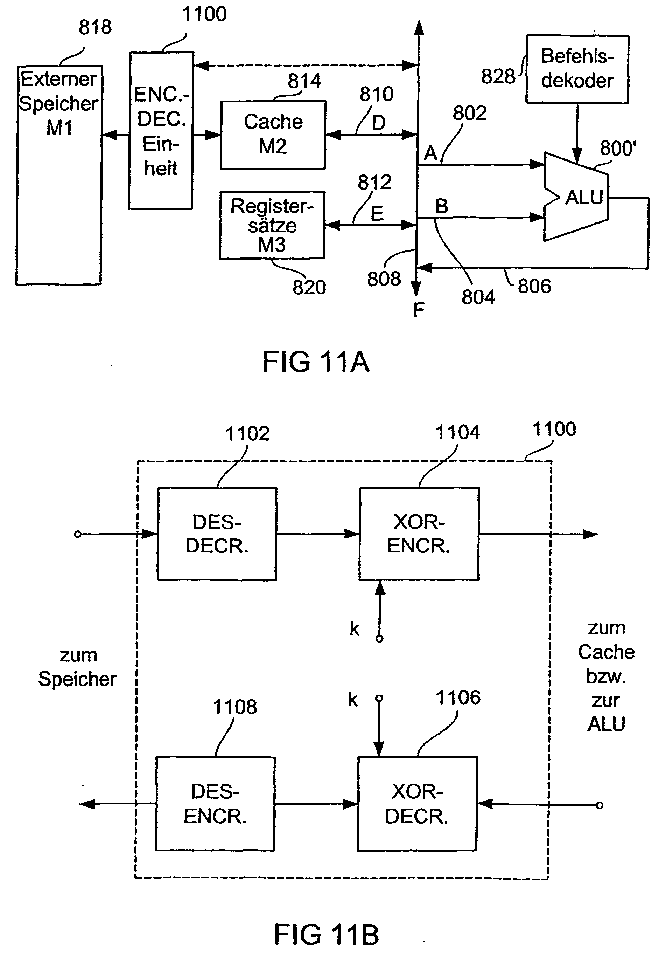

Fig. 11a zeigt ein Blockschaltbild eines erfindungsgemäßen Kryptographieprozessors, der im Unterschied zu dem in Fig. 10 gezeigten "unsicheren" Kryptographieprozessor keine Operanden-Entschlüsselung (Block 822 und Block 824 vor der ALU 800) und keine Ergebnis-Verschlüsselung (Block 826 nach der ALU 800) aufweist. Die ALU 800' ist ein Rechenwerk für zumindest einen verschlüsselten Operanden zum Ausführen einer Multiplexeroperation, einer Verknüpfungsoperation gemäß einer logischen Grundoperation, einer 1-Bit-Volladdiererfunktion oder einem Carry-Select-Additionsalgorithmus etc., wie es im vorhergehenden bzw. weiter hinten erläutert wird.

Der in Fig. 11a gezeigte Kryptographieprozessor umfaßt eine Verschlüsselungs/Entschlüsselungs-Einheit 1100, die zwischen dem externen Speicher 818 und dem Cache 814 bzw., wenn kein Cache vorgesehen ist, zwischen dem externen Speicher 818 und dem Bus 808 angeordnet ist.

Erfindungsgemäß wird es bevorzugt, die Daten im Speicher mit einem ersten Verschlüsselungsalgorithmus zu verschlüsseln, während die Daten, die auf dem Bus 808 übertragen werden bzw. in dem Cache 814 abgespeichert werden, mit einem zweiten Verschlüsselungsalgorithmus verschlüsselt sind. Der erste und der zweite Verschlüsselungsalgorithmus unterscheiden sich vorzugsweise dadurch, daß der Verschlüsselungsalgorithmus, mit dem die in dem externen Speicher 818 angeordneten Daten verschlüsselt sind, ein sogenannter "harter" Verschlüsselungsalgorithmus ist, wie z. B. ein aufwendiger Krypto-Algorithmus in Form beispielsweise des DES-Algorithmus oder des AES-Algorithmus. Der zweite Verschlüsselungsalgorithmus, mit dem die Daten verschlüsselt sind, die in das erfindungsgemäße Rechenwerk 800' geführt werden, ist vorzugsweise ein "weicher" Verschlüsselungsalgorithmus, der wenig aufwendig ist. Ein solcher weicher Verschlüsselungsalgorithmus ist beispielsweise die bitweise XOR-Verknüpfung mit einem Schlüssel. Während der Schlüssel für den harten Verschlüsselungsalgorithmus nie bzw. selten geändert wird, wird, um auch für den weichen Verschlüsselungsalgorithmus eine hohe Sicherheit zu erreichen, dessen Schlüssel oft bzw. sogar bei jeder Verschlüsselung geändert.

Fig. 11b zeigt eine detailliertere Darstellung des Blocks 1100 von Fig. 11a. Im Daten-Hinweg vom Speicher 818 zum Bus 808 bzw. zum Cache 814 ist zunächst eine DES-Entschlüsselungseinheit 1102 gefolgt von einer XOR-Verschlüsselungseinheit 1104 angeordnet. Analog dazu ist im Daten-Rückweg zunächst eine XOR-Entschlüsselungseinheit 1106 gefolgt von einer DES-Verschlüsselungseinheit 1108 angeordnet. Damit werden die im Speicher 818 hart verschlüsselt abgelegten Daten zunächst entschlüsselt und dann mit dem zweiten (weichen) Verschlüsselungsalgorithmus verschlüsselt, um in die ALU 800' für verschlüsselte Daten eingespeist zu werden. Die Ergebnisse aus der ALU werden, wenn sie im externen Speicher 818 abgespeichert werden sollen, zunächst gemäß dem weichen Verschlüsselungsalgorithmus entschlüsselt (Block 1106) und dann gemäß dem harten Verschlüsselungsalgorithmus verschlüsselt (Block 1108).

Diese Vorgehensweise stellt sicher, daß nirgendwo in einem Kryptographieprozessor unverschlüsselte Daten über einen Bus transportiert werden. Die einzige Stelle, an denen unverschlüsselte Daten vorliegen, ist zwischen den Einrichtungen 1102 und 1104 bzw. 1106 und 1108. Hier handelt es sich jedoch nicht um einen Kommunikationsbus, der erkannt werden kann und ferner aufgrund seiner weit ausgedehnten Strukturen mit begrenztem Aufwand abgehört werden kann.

Erfindungsgemäß wird die zweistufige Verschlüsselung bevorzugt, da für in dem externen Speicher liegende Daten eine hohe Sicherheit erforderlich ist, die nur mit einem harten Verschlüsselungsalgorithmus erreicht werden kann. Dieser harte Verschlüsselungsalgorithmus würde jedoch, wenn eine ALU für denselben konstruiert werden soll, zu einer sehr aufwendigen Schaltung führen, und zudem in sehr starken Geschwindigkeitseinbußen resultieren. Daher wird es bevorzugt, eine Umsetzung der Daten vom harten Verschlüsselungsalgorithmus in den weichen Verschlüsselungsalgorithmus durchzuführen, damit der ALU-Aufbau überschaubar bleibt und ferner trotz der Operation auf verschlüsselte Daten eine vertretbare Rechengeschwindigkeit hat.

Bezugszeichenliste

Rechenwerk und Verfahren zum Ausführen einer arithmetischen Operation mit verschlüsselten Operanden

| | |
|---|---|
| 10 | arithmetisch-logische Einheit |
| 12 | erster Eingang |
| 14 | zweiter Eingang |
| 16 | dritter Eingang |
| 18 | Ausgang |
| 80 | Eingang für erstes Eingangssignal |
| 81 | Eingang für zweites Eingangssignal |
| 82 | Eingang für verschlüsseltes Steuersignal |
| 83 | Eingang für Verschlüsselungsparameter |
| 84a - 84d | UND-Gatter |
| 85 | ODER-Gatter |
| 86a, 86b | NOT-Gatter |
| 120 | XOR-Gatter |
| 131 | AND-Gatter |
| 132 | AND-Gatter |
| 133 | AND-Gatter |
| 134 | OR-Gatter |
| 135 | OR-Gatter |
| 141 | AND-Gatter |
| 142 | AND-Gatter |
| 143 | AND-Gatter |
| 144 | OR-Gatter |
| 145 | OR-Gatter |
| 146 | NOT-Gatter |
| 151 | AND-Gatter |
| 152 | AND-Gatter |
| 153 | AND-Gatter |
| 154 | OR-Gatter |
| 155 | OR-Gatter |
| 156 | NOT-Gatter |
| 157 | NOT-Gatter |
| 161 | AND-Gatter |
| 162 | AND-Gatter |
| 163 | AND-Gatter |
| 164 | NOT-Gatter |
| 165 | NOT-Gatter |
| 166 | NOT-Gatter |
| 167 | OR-Gatter |
| 168 | OR-Gatter |
| 171 | AND-Gatter |
| 172 | AND-Gatter |
| 173 | AND-Gatter |
| 179 | OR-Gatter |
| 180 | OR-Gatter |
| 800 | ALU |
| 802 | erster Bus |
| 804 | zweiter Bus |
| 806 | Ausgangsbus |
| 808 | zentraler Bus |
| 810 | erster Speicherbus |
| 812 | zweiter Speicherbus |
| 814 | Cache-Speicher |
| 816 | dritter Speicherbus |
| 818 | externer Speicher |

| | |
|---|---|
| 820 | Registersätze |
| 822 | erste Entschlüsselungseinrichtung |
| 824 | zweite Entschlüsselungseinrichtung |
| 826 | Verschlüsselungseinrichtung |
| 828 | Befehlsdekoder |
| 1100 | Verschlüsselungs/Entschlüsselungseinheit |
| 1102 | DES-Entschlüsselungseinheit |
| 1104 | XOR-Verschlüsselungseinheit |
| 1106 | XOR-Entschlüsselungseinheit |
| 1108 | DES-Verschlüsselungseinheit |
| 1200 | Bit-Slice für Bit n |
| 1202 | Bit-Slice für Bit n+1 |
| 1204 | 1-Bit-Volladdierer für verschlüsselte Daten |
| 1206 | Umverschlüsselungseinrichtung |
| 1300 | erster Ripple-Carry-Addierer |
| 1302 | Leitung für Übertrag-Ausgangssignal |
| 1303 | Umverschlüsselungseinrichtung |
| 1304 | Auswahleinrichtung |
| 1306 | zweiter Addierer |
| 1308 | dritter Addierer |
| 1310 | weiterer Addierer |
| 1312 | weiterer Addierer |
| 1314 | Carry-Auswahleinrichtung |
| 1315 | Umverschlüsselungseinrichtung |

**Patentansprüche**

1. Rechenwerk zum Ausführen einer Operation auf Operanden, wobei zumindest einer der Operanden unter Verwendung eines Verschlüsselungsalgorithmus und eines Verschlüsselungsparameters verschlüsselt ist, um ein verschlüsseltes Ergebnis der Operation zu erhalten, mit folgenden Merkmalen:

   einer Verarbeitungseinheit (10) mit einem Eingang für einen Operanden oder eine negierte Version des Operanden, einem Eingang für den zumindest einen verschlüsselten Operanden oder eine negierte Version des zumindest einen verschlüsselten Operanden, mit einem Eingang für den Verschlüsselungsparameter, mit dem der zumindest eine Operand verschlüsselt ist, und mit einem Ausgang (18) für das verschlüsselte Ergebnis,

   wobei die Verarbeitungseinheit (10) ausgebildet ist, um eine oder mehrere mathematische Unteroperationen auszuführen, die zusammen eine Geheimtext-Rechenvorschrift ergeben, die aus einer Klartext-Rechenvorschrift für die Operation mit unverschlüsselten Operanden derart abgeleitet ist, daß der unverschlüsselte Operand in der Klartext-Rechenvorschrift, aus dem der zumindest eine verschlüsselte Operand hervorgeht, durch eine mathematische Kombination aus dem zumindest einen verschlüsselten Operanden und dem Verschlüsselungsparameter ersetzt ist, wobei die mathematische Kombination eine Umkehrung des Verschlüsselungsalgorithmus ist, und wobei die Klartext-Rechenvorschrift aufgrund der mathematischen Kombination in die eine oder die mehreren mathematischen Unteroperationen, die die Geheimtext Rechenvorschrift darstellen, transformiert ist, die als eine Eingangsgröße lediglich den verschlüsselten Operanden oder eine negierte Version desselben oder eine Kombination des verschlüsselten Operanden oder der negierten Version des verschlüsselten Operanden mit den anderen Operanden erhalten.

2. Rechenwerk nach Anspruch 1, bei dem die Operanden Zahlen sind, und bei dem der zumindest eine Operand bitweise verschlüsselt ist.

3. Rechenwerk nach Anspruch 1 oder 2, bei dem der Verschlüsselungsalgorithmus eine XOR-Verknüpfung oder einer XNOR-Verknüpfung des Operanden mit einem Schlüssel (k) als Verschlüsselungsparameter aufweist.

4. Rechenwerk nach einem der vorhergehenden Ansprüche, bei dem der Verschlüsselungsparameter veränderbar ist.

**5.** Rechenwerk nach einem der vorhergehenden Ansprüche, bei dem die Operation eine Multiplexer-Operation zum Auswählen eines oder mehrerer Eingangssignale als eines oder mehrere Ausgangssignale ist, wobei eine Anzahl des einen oder der mehreren Ausgangssignale kleiner als eine Anzahl des einen oder der mehreren Eingangssignale ist,
wobei der zumindest eine Operand, der verschlüsselt ist, das Steuersignal ist.

**6.** Rechenwerk nach Anspruch 5, bei dem die Operation eine 2:1-Multiplexer-Operation ist, und bei dem die Verarbeitungseinheit ausgebildet ist, um eine Rechenvorschrift zu implementieren, die durch folgende Gleichung gegeben ist:

$$2{:}1\text{MUX}{:}\ m' = b' \cdot x' \cdot k +$$

$$a' \cdot \bar{x}' \cdot k +$$

$$a' \cdot x' \cdot \bar{k} +$$

$$b' \cdot \bar{x}' \cdot \bar{k}$$

wobei m' ein verschlüsseltes Ausgangssignal ist, wobei a' ein erstes verschlüsseltes Eingangssignal und b' ein zweites verschlüsseltes Eingangssignal sind, wobei x' ein verschlüsseltes Steuersignal ist, und wobei k ein Verschlüsselungsparameter ist.

**7.** Rechenwerk nach Anspruch 6, das zum Ausführen der mathematischen Unteroperationen folgende Merkmale aufweist:

einen ersten Invertierer (86a) zum Negieren des Verschlüsselungsparameters;

einen zweiten Invertierer (86b) zum Invertieren des verschlüsselten Steuersignals;

ein erstes, zweites, drittes und viertes UND-Gatter (84a-84d); und

ein ODER-Gatter (85) zum ODER-Verknüpfen von Ausgangssignalen des ersten bis vierten UND-Gatters (84a-84d), um das Ausgangssignal zu erhalten.

**8.** Rechenwerk nach Anspruch 5, bei dem die Operation eine 3:1-Multiplexer-Operation ist,
bei dem das Steuersignal zwei verschlüsselte Bits x', y' aufweist, und bei dem die Verarbeitungseinheit ausgebildet ist, um folgende Rechenvorschrift zu implementieren:

$$3:1\ \text{MUX}:m' = c' \cdot x' \cdot \bar{y}' \cdot k +$$

$$b' \cdot \bar{x}' \cdot y' \cdot k +$$

$$c' \cdot \bar{x}' \cdot y' \cdot \bar{k} +$$

$$b' \cdot x' \cdot \bar{y}' \cdot \bar{k} +$$

$$a' \cdot x' \cdot y' +$$

$$a' \cdot \bar{x}' \cdot \bar{y}'$$

wobei m' das verschlüsselte Ausgangssignal ist, wobei a', b', c' das erste, das zweite bzw. das dritte verschlüsselte Eingangssignal sind, wobei x' das erste verschlüsselte Bit des Steuersignals ist, wobei y' das zweite verschlüsselte Bit des Steuersignals ist, und wobei k der Verschlüsselungsparameter zum Verschlüsseln des ersten und des zweiten Steuersignals ist.

**9.** Rechenwerk nach Anspruch 5, bei dem die Operation eine 4:1-Multiplexer-Operation ist,

bei dem das Steuersignal zwei verschlüsselte Bits x', y' aufweist, und bei dem die Verarbeitungseinheit ausgebildet ist, um folgende Rechenvorschrift zu implementieren:

$$4:1\ MUX : m'= d'\cdot\bar{x}'\cdot\bar{y}'\cdot k +$$

$$c'\cdot x'\cdot\bar{y}'\cdot k+$$

$$b'\cdot\bar{x}'\cdot y'\cdot k +$$

$$a'\cdot x'\cdot y'\cdot k +$$

$$d'\cdot x'\cdot y'\cdot\bar{k} +$$

$$c'\cdot\bar{x}'\cdot y'\cdot\bar{k} +$$

$$b'\cdot x'\cdot\bar{y}'\cdot\bar{k} +$$

$$a'\cdot\bar{x}'\cdot\bar{y}'\cdot\bar{k}$$

wobei m' das verschlüsselte Ausgangssignal ist, wobei a', b', c' und d' ein erstes, ein zweites, ein drittes bzw. ein viertes verschlüsseltes Eingangssignal sind, wobei x' das erste verschlüsselte Bit des Steuersignals ist, wobei y' das zweite verschlüsselte Bit des Steuersignals ist, und wobei k der Verschlüsselungsparameter zum Verschlüsseln des ersten und des zweiten Bits des Steuersignals ist.

10. Rechenwerk nach einem der Ansprüche 1 bis 4, bei dem die Operation eine arithmetische Operation auf zumindest zwei Operanden ist, wobei der verschlüsselte Operand einer der Operanden ist, auf die die arithmetische Operation ausführbar ist.

11. Rechenwerk nach Anspruch 10, bei dem ferner der bzw. die weiteren Operanden, auf die die Operation ausführbar ist, ebenfalls verschlüsselt ist bzw. sind.

12. Rechenwerk nach Anspruch 11,
bei dem die arithmetische Operation eine XOR-Operation ist, bei dem die verschlüsselten Operanden binär sind und zur Verschlüsselung bitweise mit einem Schlüssel XOR-verknüpft sind, und bei dem die arithmetisch-logische Einheit (10) zur Ausführung der arithmetischen Unteroperationen folgende Merkmale aufweist:

eine XOR-Verknüpfungseinrichtung (120) zum Verknüpfen des ersten verschlüsselten Operanden ($a_k$), des zweiten verschlüsselten Operanden ($b_k$) und des Schlüssels (k), um das verschlüsselte Ergebnis zu erhalten.

13. Rechenwerk nach Anspruch 11,
bei dem die arithmetische Operation eine AND-Operation ist, bei dem die Operanden binär sind und zur Verschlüsselung bitweise mit einem Schlüssel XOR-verknüpft sind, und bei dem die arithmetisch-logische Einheit (10) zur Durchführung der arithmetischen Unteroperationen folgende Merkmale aufweist:

eine AND-Verknüpfungseinrichtung (131) zum Verknüpfen des ersten verschlüsselten Operanden ($a_k$) und des zweiten verschlüsselten Operanden ($b_k$), um ein erstes Zwischenergebnis zu erhalten;

eine weitere AND-Verknüpfungseinrichtung (132) zum Verknüpfen des ersten verschlüsselten Operanden ($a_k$) und des Schlüssels, um ein zweites Zwischenergebnis zu erhalten;

eine weitere AND-Verknüpfungseinrichtung (133) zum Verknüpfen des verschlüsselten zweiten Operanden ($b_k$) und des Schlüssels, um ein drittes Zwischenergebnis zu erhalten;

eine OR-Verknüpfungseinrichtung (134) zum Verknüpfen des ersten Zwischenergebnisses und des zweiten Zwischenergebnisses, um ein viertes Zwischenergebnis zu erhalten; und

eine OR-Verknüpfungseinrichtung (135) zum Verknüpfen des dritten Zwischenergebnisses und des vierten Zwischenergebnisses, um das verschlüsselte Ergebnis zu erhalten.

**14.** Rechenwerk nach Anspruch 11, bei dem die arithmetische Operation eine OR-Operation ist, bei dem die Operanden binär sind und zur Verschlüsselung bitweise mit einem Schlüssel (k) XOR-verknüpft sind, und bei dem die arithmetisch-logische Einheit zum Durchführen der arithmetischen Unteroperationen folgende Merkmale aufweisen:

eine Negationseinrichtung (146) zum Negieren des Schlüssels (k), um einen negierten Schlüssel zu erhalten;

eine erste AND-Verknüpfungseinrichtung (141) zum Verknüpfen des verschlüsselten ersten Operanden und des negierten Schlüssels, um ein erstes Zwischenergebnis zu erhalten;

eine zweite AND-Verknüpfungseinrichtung (142) zum Verknüpfen des zweiten verschlüsselten Operanden und des negierten Schlüssels, um ein zweites Zwischenergebnis zu erhalten;

eine dritte AND-Verknüpfungseinrichtung (143) zum Verknüpfen des ersten verschlüsselten Operanden und des zweiten verschlüsselten Operanden ($b_x$), um ein drittes Zwischenergebnis zu erhalten;

eine erste OR-Verknüpfungseinrichtung (144) zum Verknüpfen des ersten Zwischenergebnisses und des zweiten Zwischenergebnisses, um ein viertes Zwischenergebnis zu erhalten; und

eine zweite OR-Verknüpfungseinrichtung (145) zum Verknüpfen des dritten Zwischenergebnisses und des vierten Zwischenergebnisses, um das verschlüsselte Ergebnis der arithmetischen Operation zu erhalten.

**15.** Rechenwerk nach Anspruch 11,
bei dem die arithmetische Operation eine NOR-Operation ist, bei dem die Operanden binär sind und zur Verschlüsselung bitweise mit einem Schlüssel XOR-verknüpft sind, und bei dem die arithmetisch-logische Einheit (10) zum Durchführen der arithmetischen Unteroperationen folgende Merkmale aufweist:

eine erste AND-Verknüpfungseinrichtung (151) zum Verknüpfen des ersten verschlüsselten Operanden ($a_k$) und des zweiten verschlüsselten Operanden ($b_k$), um ein erstes Zwischenergebnis zu erhalten;

eine erste Negationseinrichtung (158) zum Negieren des ersten Zwischenergebnisses, um ein negiertes erstes Zwischenergebnis zu erhalten;

eine zweite Negationseinrichtung (156) zum Negieren des zweiten verschlüsselten Operanden, um einen negierten zweiten verschlüsselten Operanden zu erhalten;

eine zweite AND- Verknüpfungseinrichtung (152) zum Verknüpfen des negierten zweiten Operanden und des Schlüssels, um ein zweites Zwischenergebnis zu erhalten;

eine dritte Negationseinrichtung (157) zum Negieren des ersten verschlüsselten Operanden, um einen negierten ersten verschlüsselten Operanden zu erhalten;

eine dritte AND-Verknüpfungseinrichtung (153) zum Verknüpfen des negierten verschlüsselten ersten Operanden und des Schlüssels, um ein drittes Zwischenergebnis zu erhalten;

eine erste OR-Verknüpfungseinrichtung (154) zum Verknüpfen des negierten ersten Zwischenergebnisses und des zweiten Zwischenergebnisses, um ein viertes Zwischenergebnis zu erhalten; und

eine zweite OR-Verknüpfungseinrichtung (155) zum Verknüpfen des dritten Zwischenergebnisses und des vierten Zwischenergebnisses, um das verschlüsselte Ergebnis der arithmetischen Operation zu erhalten.

**16.** Rechenwerk nach Anspruch 11, bei dem die arithmetische Operation eine NAND-Operation ist, bei dem die Operanden binär sind und zur Verschlüsselung bitweise mit einem Schlüssel XOR-verknüpft sind, und bei dem die arithmetisch-logische Einheit zur Durchführung der arithmetischen Unteroperationen folgende Merkmale aufweisen:

eine erste AND-Verknüpfungseinrichtung (161) zum Verknüpfen des ersten verschlüsselten Operanden und des zweiten verschlüsselten Operanden, um ein erstes Zwischenergebnis zu erhalten;

eine erste Negationseinrichtung (164) zum Negieren des ersten Zwischenergebnisses, um ein negiertes erstes Zwischenergebnis zu erhalten;

eine zweite AND-Verknüpfungseinrichtung (162) zum Verknüpfen des zweiten verschlüsselten Operanden ($b_k$) und des Schlüssels (k), um ein zweites Zwischenergebnis zu erhalten;

eine zweite Negationseinrichtung (165) zum Negieren des zweiten Zwischenergebnisses, um ein negiertes zweites Zwischenergebnis zu erhalten;

eine dritte AND-Verknüpfungseinrichtung (163) zum Verknüpfen des verschlüsselten ersten Operanden ($a_k$) und des Schlüssels, um ein drittes Zwischenergebnis zu erhalten;

eine dritte Negationseinrichtung (166) zum Negieren des dritten Zwischenergebnisses, um ein negiertes Zwischenergebnis zu erhalten;

eine erste OR-Verknüpfungseinrichtung (167) zum Verknüpfen des negierten ersten Zwischenergebnisses und des negierten zweiten Zwischenergebnisses, um ein viertes Zwischenergebnis zu erhalten; und

eine zweite OR-Verknüpfungseinrichtung (168) zum Verknüpfen des vierten Zwischenergebnisses und des dritten Zwischenergebnisses, um ein verschlüsseltes Ergebnis der arithmetischen Operation zu erhalten.

17. Rechenwerk nach Anspruch 11, bei dem die arithmetische Operation eine ADD-Operation ist, bei dem die Operanden binär sind und zur Verschlüsselung bitweise mit einem Schlüssel XOR-verknüpft sind, und bei dem die arithmetisch-logische Einheit zur Durchführung der arithmetischen Unteroperationen folgende Merkmale aufweist:

eine erste AND-Verknüpfungseinrichtung (171) zum Verknüpfen des ersten verschlüsselten Operanden ($a_{kn}$) und des zweiten verschlüsselten Operanden ($b_{kn}$), um ein erstes Zwischenergebnis zu erhalten;

eine zweite AND-Verknüpfungseinrichtung (172) zum Verknüpfen des ersten verschlüsselten Operanden ($a_{kn}$) und eines dritten verschlüsselten Operanden ($c_{kn}$);

eine dritte AND-Verknüpfungseinrichtung (173) zum Verknüpfen des zweiten verschlüsselten Operanden ($b_{kn}$) und des dritten verschlüsselten Operanden ($c_{kn}$), um ein drittes Zwischenergebnis zu erhalten;

eine erste OR-Verknüpfungseinrichtung (179) zum Verknüpfen des ersten Zwischenergebnisses und des zweiten Zwischenergebnisses, um ein viertes Zwischenergebnis zu erhalten;

eine zweite OR-Verknüpfungseinrichtung (180) zum Verknüpfen des vierten Zwischenergebnisses und des dritten Zwischenergebnisses, um einen verschlüsselten Übertrag (($ckn)_{n+1}$) der arithmetischen ADD-Operation zu erhalten.

18. Rechenwerk nach Anspruch 17, bei dem die arithmetische Operation eine NOT-Operation ist, und bei dem die arithmetisch-logische Einheit zur Ausführung der arithmetischen Unteroperationen ferner folgendes Merkmal aufweist:

eine zusätzliche Negationseinrichtung zum Negieren des verschlüsselten Übertrags (($ckn)_{n+1}$), um das verschlüsselte Ergebnis der NOT-Operation zu erhalten.

19. Rechenwerk nach Anspruch 11, bei dem der erste verschlüsselte Operand und der zweite verschlüsselte Operand unter Verwendung zweier verschiedener Verschlüsselungsalgorithmen und/oder Verschlüsselungsschlüssel verschlüsselt sind, und bei dem die arithmetisch-logische Einheit (10) ferner folgendes Merkmal aufweist:

einen weiteren Eingang für einen weiteren Verschlüsselungsparameter.

20. Rechenwerk nach einem der vorhergehenden Ansprüche,

bei dem die arithmetisch-logische Einheit (10) derart ausgebildet ist, daß lediglich AND-Verknüpfungseinrichtungen und OR-Verknüpfungseinrichtungen verwendet werden, die jeweils zwei Eingänge aufweisen.

21. Rechenwerk nach Anspruch 1,
bei dem zumindest zwei Operanden verschlüsselt sind,
wobei der erste verschlüsselte Operand mit einem ersten Verschlüsselungsalgorithmus und einem ersten Verschlüsselungsparameter verschlüsselt ist,
wobei der zweite Operand mit einem zweiten Verschlüsselungsalgorithmus und einem zweiten Verschlüsselungsparameter verschlüsselt ist,
bei dem die Verarbeitungseinheit einen weiteren Eingang für den zweiten Verschlüsselungsparameter hat,
und bei dem die Geheimtext-Rechenvorschrift so aus der Klartext-Rechenvorschrift abgeleitet ist, daß der unverschlüsselte Operand, der dem zweiten verschlüsselten Operanden entspricht, durch eine weitere mathematische Kombination aus dem zweiten verschlüsselten Operanden und dem zweiten Verschlüsselungsparameter ersetzt ist, wobei die weitere Kombination eine Umkehrung des zweiten Verschlüsselungsalgorithmus ist.

22. Rechenwerk nach Anspruch 21,
bei dem der erste und der zweite Verschlüsselungsalgorithmus gleich sind, und bei dem der erste und der zweite Verschlüsselungsparameter unterschiedlich sind.

23. Rechenwerk nach Anspruch 21 oder 22,
bei dem ein Ergebnis der Operation mit einem dritten Verschlüsselungsalgorithmus und einem dritten Verschlüsselungsparameter verschlüsselt ist,
bei dem die Geheimtext-Rechenvorschrift, die sich durch die Mehrzahl von mathematischen Unteroperationen ergibt, so aus der Klartext-Rechenvorschrift für die Operation mit unverschlüsselten Operanden abgeleitet ist, daß ein unverschlüsseltes Ergebnis der Operation durch eine weitere mathematische Kombination aus unverschlüsseltem Ergebnis der Operation und drittem Verschlüsselungsparameter ersetzt wird.

24. Rechenwerk nach Anspruch 23, bei dem der dritte Verschlüsselungsparameter eine Kombination aus dem ersten und dem zweiten Verschlüsselungsparameter ist.

25. Rechenwerk nach Anspruch 24,
bei dem alle Verschlüsselungsalgorithmen durch eine XOR-Verknüpfung gegeben sind,
bei dem die mathematischen Kombinationen durch eine XOR-Verknüpfung gegeben sind, und
bei dem der dritte Verschlüsselungsparameter eine XOR-Verknüpfung des ersten und des zweiten Verschlüsselungsparameters ist.

26. Rechenwerk nach Patentanspruch 25, bei dem die Verarbeitungseinheit ausgebildet ist, um eine Mehrzahl von mathematischen Unteroperationen auszuführen, die jeweils durch folgende Geheimtext-Rechenvorschriften gegeben sind:

- für eine AND-Operation:

    AND:

$$r^{(k)} \leftarrow a^{(i)} \cdot b^{(j)} \cdot \bar{j} + \bar{a}^{(i)} \cdot \bar{b}^{(j)} \cdot j + b^{(j)} \cdot \bar{i} \cdot j + \bar{b}^{(j)} \cdot i \cdot \bar{j};$$

- für eine OR-Operation:

    OR:

$$r^{(k)} \leftarrow a^{(i)} \cdot \bar{b}^{(j)} \cdot \bar{j} + \bar{a}^{(i)} \cdot b^{(j)} \cdot j + b^{(j)} \cdot \bar{i} \cdot \bar{j} + \bar{b}^{(j)} \cdot i \cdot j;$$

- für eine NAND-Operation:

    NAND:

$$r^{(k)} \leftarrow \bar{a}^{(i)} \cdot b^{(j)} \cdot \bar{j} + a^{(i)} \cdot \bar{b}^{(j)} \cdot j + b^{(j)} \cdot i \cdot j + \bar{b}^{(j)} \cdot \bar{i} \cdot \bar{j} \, ;$$

- für eine NOR-Operation:

    NOR:

$$r^{(k)} \leftarrow \bar{a}^{(i)} \cdot \bar{b}^{(j)} \cdot \bar{j} + a^{(i)} \cdot b^{(j)} \cdot j + b^{(j)} \cdot i \cdot \bar{j} + \bar{b}^{(j)} \cdot \bar{i} \cdot j \, ;$$

- für eine XOR-Operation:

    XOR:

$$r^{(k)} \leftarrow a^{(i)} \oplus b^{(j)} \, ;$$

- für eine XNOR-Operation:

    XNOR:

$$r^{(k)} \leftarrow \bar{a}^{(i)} \oplus b^{(j)} \, ;$$

- für eine Volladdiererfunktion mit folgendem Summenbit:

    SUM:

$$r^{(k)} \leftarrow \left( a^{(i)} \oplus j \right) \oplus \left( b^{(j)} \oplus i \right) \oplus c_{in}^{(k)} \, ;$$

    oder

- für eine Volladdiererfunktion mit Übertragbit:

    CARRY:

$$r^{(k)} \leftarrow \left( a^{(i)} \oplus j \right) \cdot \left( b^{(j)} \oplus i \right) + \left( a^{(i)} \oplus j \right) \cdot c_{in}^{(k)} + \left( b^{(j)} \oplus i \right) \cdot c_{in}^{(k)} \, ;$$

wobei $a^{(i)}$ der mit dem ersten Verschlüsselungsparameter verschlüsselte erste Operand ist, wobei $b^{(j)}$ der mit dem zweiten Verschlüsselungsparameter verschlüsselte zweite Operand ist, wobei i der erste Verschlüsselungsparameter ist, wobei j der zweite Verschlüsselungsparameter ist, wobei k der dritte Verschlüsselungsparameter ist, wobei der dritte Verschlüsselungsparameter gleich der XOR-Verknüpfung des ersten und des zweiten Verschlüsselungsparameters ist, wobei $r^{(k)}$ das mit dem dritten Verschlüsselungsparameter verschlüsselte Ergebnis der Operation ist, und wobei $c_{in}^{(k)}$ ein mit dem dritten Verschlüsselungsparameter verschlüsselter Übertrag-Eingang ist.

27. Carry-Select-Addierer zum Addieren eines ersten und eines zweiten verschlüsselten Operanden (a, b), um ein veschlüsseltes Ergebnis zu erhalten, wobei der erste und der zweite verschlüsselte Operand jeweils eine Mehrzahl von Bits aufweisen, wobei für jedes Bit gleicher Ordnung der Operanden ein Verschlüsselungsparameter ($k_i$) vorgesehen ist, mit folgenden Merkmalen:

    einem ersten Ripple-Carry-Addierer (1300) mit einer Mehrzahl von Bit-Slice-Einrichtungen (1200, 1202) zum Addieren der verschlüsselten Bits der Operanden von einem niederstwertigen Bit der Operanden bis zu einem ersten Grenzbit der Operanden, um ein verschlüsseltes Übertragausgangsbit des ersten Ripple-Carry-Addierers zu erzeugen;

einem zweiten und einem dritten Ripple-Carry-Addierer (1306, 1308) mit einer Mehrzahl von Bit-Slice-Einrichtungen zum Addieren der verschlüsselten Bits der Operanden von einem Bit, das um eine Stelle höherwertiger ist als das erste Grenzbit, bis zu einem zweiten Grenzbit,

wobei jede Bit-Slice-Einrichtung ein Rechenwerk nach Anspruch 17 oder 26 aufweist, wobei die mathematische Operation eine Addiereroperation ist, um unter Verwendung eines verschlüsselten Bits des ersten Operanden, eines verschlüsselten Bits des zweiten Operanden und eines verschlüsselten Übertrageingangsbits an einem Übertrageingang ein internes verschlüsseltes Summenbit und ein internes verschlüsseltes Übertragausgangsbit zu erzeugen,

wobei jede Bit-Slice-Einrichtung ferner eine zugehörige Umverschlüsselungs-Einrichtung (1206) aufweist, um eine Umverschlüsselung des Übertrageingangsbits, das gemäß einem Verschlüsselungsparameter für die Bit-Slice-Einrichtung, aus der dasselbe stammt, verschlüsselt ist, in eine Verschlüsselung mit dem Verschlüsselungsparameter für eine aktuelle Bit-Slice-Einrichtung zu erreichen,

wobei der zweite Ripple-Carry-Addierer (1306) und der dritte Ripple-Carry-Addierer (1308) parallel angeordnet sind, wobei als Übertrageingangsbit für eine niederstwertige Bit-Slice-Einrichtung des zweiten Ripple-Carry-Addierers (1306) ein Schlüssel ($k_{n+1}$) für die niederstwertige Bit-Slice-Einrichtung des zweiten Ripple-Carry-Addierers anlegbar ist, und wobei als Übertrageingangsbit für eine niederstwertige Bit-Slice-Einrichtung des dritten Ripple-Carry-Addierers (1309) ein invertierter Schlüssel (NOT $k_{n+1}$) für die niederstwertige Bit-Slice-Einrichtung des dritten Ripple-Carry-Addierers anlegbar ist;

eine Umverschlüsselungseinrichtung (1303) zum Umverschlüsseln des Übertragausgangsbits des ersten Ripple-Carry-Addierers auf eine Schlüsselbasis der niederstwertigen Bit-Slice-Einrichtung des zweiten Ripple-Carry-Addierers (1306); und

einer Auswahleinrichtung (1304) zum Auswählen der verschlüsselten Summenbits des zweiten Ripple-Carry-Addierers, wenn das umverschlüsselte Übertragausgangsbit einer höchstwertigen Bit-Slice-Einrichtung des ersten Ripple-Carry-Addierers (1300) gleich einer logischen "0" ist, oder der verschlüsselten Summenbits des dritten Ripple-Carry-Addierers (1308), wenn das umverschlüsselte Übertragausgangsbit des ersten Ripple-Carry-Addierers (1300) gleich einer logischen "1" ist, als verschlüsselte Summenbits.

28. Kryptographieprozessor mit folgenden Merkmalen:

einem Speicher (818) zum Speichern von mit einem ersten Verschlüsselungsalgorithmus verschlüsselten Daten;

einer ersten Entschlüsselungseinheit (1102) zum Entschlüsseln von in dem Speicher gespeicherten Daten, die mit dem ersten Verschlüsselungsalgorithmus verschlüsselt sind;

einer zweiten Verschlüsselungseinheit (1104) zum Verschlüsseln von Daten, die von der ersten Entschlüsselungseinheit (1102) erhalten werden, mit einem zweiten Verschlüsselungsalgorithmus;

einem Rechenwerk (800') nach einem der Patentansprüche 1 bis 26, das angeordnet ist, um von der zweiten Verschlüsselungseinheit (1104) ausgegebene Daten zu erhalten;

einer zweiten Entschlüsselungseinrichtung (1106) zum Entschlüsseln von von dem Rechenwerk (800') ausgegebenen Daten gemäß dem zweiten Verschlüsselungsalgorithmus; und

einer ersten Verschlüsselungseinrichtung (1108) zum Verschlüsseln der von der zweiten Entschlüsselungseinheit ausgegebenen Daten gemäß dem ersten Verschlüsselungsalgorithmus,

wobei die erste Verschlüsselungseinheit mit dem Speicher gekoppelt ist, so daß die mit dem ersten Verschlüsselungsalgorithmus verschlüsselten Daten dem Speicher zuführbar sind.

29. Kryptographieprozessor nach Anspruch 28, bei dem in Signalflußrichtung zwischen der zweiten Verschlüsselungseinrichtung (1104) und dem Rechenwerk (800') bzw. zwischen dem Rechenwerk (800') und der zweiten Entschlüsselungseinrichtung (1106) ein Zwischenspeicher (814) angeordnet ist, in dem gemäß dem zweiten Verschlüsselungsalgorithmus verschlüsselte Daten speicherbar sind.

**30.** Kryptographieprozessor nach Anspruch 28 oder 29, bei dem für eine Verschlüsselungsoperation gemäß dem ersten Verschlüsselungsalgorithmus mehr Operationen benötigt werden als für eine Verschlüsselungsoperation gemäß dem zweiten Verschlüsselungsalgorithmus.

**31.** Kryptographieprozessor nach einem der Ansprüche 28 bis 30,
bei dem die erste Entschlüsselungseinrichtung (1102) und die erste Verschlüsselungseinrichtung (1108) angeordnet sind, um einen Schlüsselwechsel seltener vorzunehmen als die zweite Entschlüsselungseinrichtung (1106) und die zweite Verschlüsselungseinrichtung (1104).

**32.** Kryptographieprozessor nach einem der Ansprüche 28 bis 31,
bei dem der zweite Verschlüsselungsalgorithmus ein Vernam-Algorithmus gemäß folgender Form ist:

$$c = (p + k) \bmod k,$$

wobei c eine verschlüsselte Information ist, wobei p eine unverschlüsselte Information ist, wobei k ein Schlüssel ist und
wobei mod eine Modulo-Operation ist.

**33.** Kryptographieprozessor nach Anspruch 32,
bei dem der Schlüssel lediglich die Werte 0 oder 1 annehmen kann, bei dem die Klartext-Informationen und die verschlüsselten Informationen ein Bit sind, und
bei dem für den zweiten Verschlüsselungsalgorithmus folgende Gleichung gilt:

$$c = p \text{ XOR } k.$$

**34.** Kryptographieprozessor nach Anspruch 33, bei dem ein unabhängiger Schlüssel für den zweiten Verschlüsselungsalgorithmus für jedes Klartextbit vorhanden ist.

**35.** Verfahren zum Ausführen einer Operation auf Operanden,
wobei zumindest einer der Operanden unter Verwendung eines Verschlüsselungsalgorithmus und eines Verschlüsselungsparameters verschlüsselt ist, um ein verschlüsseltes Ergebnis der Operation zu erhalten, mit folgenden Schritten:

Ausführen von einer oder mehreren mathematischen Unteroperationen, die zusammen eine Geheimtext-Rechenvorschrift ergeben, die aus einer Klartext-Rechenvorschrift für die Operation mit unverschlüsselten Operanden derart abgeleitet ist, daß der unverschlüsselte Operand, aus dem der zumindest eine verschlüsselte Operand hervorgeht, durch eine mathematische Kombination aus dem zumindest einen verschlüsselten Operanden und dem Verschlüsselungsparameter ersetzt ist, wobei die mathematische Kombination eine Umkehrung des Verschlüsselungsalgorithmus ist, und

wobei die Klartext-Rechenvorschrift aufgrund der mathematischen Kombination in die eine oder die mehreren mathematischen Unteroperationen, die die Geheimtext-Rechenvorschrift darstellen, transformiert ist, die als Eingangsgröße lediglich den verschlüsselten Operanden oder eine negierte Version desselben oder eine Kombination des verschlüsselten Operanden oder der negierten Version des verschlüsselten Operanden mit den anderen Operanden erhalten.

**Claims**

**1.** Calculating unit for performing an operation on operands, wherein at least one of the operands is encrypted using an encryption algorithm and an encryption parameter so as to obtain an encrypted result of the operation, the calculating unit comprising:

a processing unit (10) having an input for an operand or a negated version of the operand, an input for the at least one encrypted operand or a negated version of the at least one encrypted operand, having an input for the encryption parameter with which the at least one operand is encrypted, and having an output (18) for the encrypted result,

the processing unit (10) being formed to perform one or several mathematical sub-operations which together result in a ciphertext calculating specification derived from a clear-text calculating specification for the operation with non-encrypted operands such that the non-encrypted operand is replaced, in the clear-text calculating specification from which the at least one encrypted operand results, by a mathematical combination of the at least one encrypted operand and the encryption parameter, the mathematical combination being a reversal of the encryption algorithm, and

the clear-text calculating specification being transformed, due to the mathematical combination, into the one or several mathematical sub-operations representing the ciphertext calculating specification, which mathematical sub-operations obtain, as an input quantity, merely the encrypted operand or a negated version of same, or a combination of the encrypted operand or of the negated version of the encrypted operand with the other operands.

2. Calculating unit as claimed in claim 1, wherein the operands are numbers, and wherein the at least one operand is encrypted in a bitwise manner.

3. Calculating unit as claimed in claim 1 or 2, wherein the encryption algorithm comprises an XOR operation or an XNOR operation of the operand on a key (k) as an encryption parameter.

4. Calculating unit as claimed in any one of the preceding claims, wherein the encryption parameter is variable.

5. Calculating unit as claimed in any one of the preceding claims, wherein the operation is a multiplexer operation for selecting one or several input signals as one or several output signals, a number of the one or several output signals being smaller than a number of the one or several input signals,
the at least one encrypted operand being the control signal.

6. Calculating unit as claimed in claim 5, wherein the operation is a 2:1 multiplexer operation, and wherein the processing unit is formed to implement a calculating specification given by the following equation:

$$2 : 1 \ MUX : m' = b' \cdot x' \cdot k +$$

$$a' \cdot \bar{x}' \cdot k +$$

$$a' \cdot x' \cdot \bar{k} +$$

$$b' \cdot \bar{x}' \cdot \bar{k}$$

wherein m' is an encrypted output signal, wherein a' is a first encrypted input signal, and b' is a second encrypted input signal, wherein x' is an encrypted control signal, and wherein k is an encryption parameter.

7. Calculating unit as claimed in claim 6, which comprises the following for performing the mathematical sub-operations:

a first inverter (86a) for negating the encryption parameter;

a second inverter (86b) for inverting the encrypted control signal;

first, second, third and fourth AND gates (84a - 84d); and

an OR gate (85) for ORing output signals of the first to fourth AND gates (84a - 84d) to obtain the output signal.

8. Calculating unit as claimed in claim 5, wherein the operation is a 3:1 multiplexer operation,
wherein the control signal comprises two encrypted bits x', y', and wherein the processing unit is formed to implement the following calculating specification:

$$3{:}1\ \text{MUX} : m' = c' \cdot x' \cdot \bar{y}' \cdot k +$$

$$b' \cdot \bar{x}' \cdot y' \cdot k +$$

$$c' \cdot x' \cdot y' \cdot \bar{k} +$$

$$b' \cdot x' \cdot \bar{y}' \cdot \bar{k} +$$

$$a' \cdot x' \cdot y' +$$

$$a' \cdot \bar{x}' \cdot \bar{y}'$$

wherein m' is the encrypted output signal, wherein a', b', c' are the first, second and third encrypted input signals, respectively, wherein x' is the first encrypted bit of the control signal, wherein y' is the second encrypted bit of the control signal, and wherein k is the encryption parameter for encrypting the first and second control signals.

**9.** Calculating unit as claimed in claim 5, wherein the operation is a 4:1 multiplexer operation, wherein the control signal comprises two encrypted bits x', y', and wherein the processing unit is formed to implement the following calculating specification:

$$4 : 1\ \text{MUX} : m' = d' \cdot \bar{x}' \cdot \bar{y}' \cdot k +$$

$$c' \cdot x' \cdot \bar{y}' \cdot k +$$

$$b' \cdot \bar{x}' \cdot y' \cdot k +$$

$$a' \cdot x' \cdot y' \cdot k +$$

$$d' \cdot x' \cdot y' \cdot \bar{k} +$$

$$c' \cdot \bar{x}' \cdot y' \cdot \bar{k} +$$

$$b' \cdot x' \cdot \bar{y}' \cdot \bar{k} +$$

$$a' \cdot \bar{x}' \cdot \bar{y}' \cdot \bar{k}$$

wherein m' is the encrypted output signal, wherein a', b', c', and d' are first, second, third, and fourth encrypted input signals, respectively, wherein x' is the first encrypted bit of the control signal, wherein y' is the second encrypted bit of the control signal, and wherein k is the encryption parameter for encrypting the first and second bits of the control signal.

**10.** Calculating unit as claimed in any one of claims 1 to 4, wherein the operation is an arithmetic operation on at least two operands, the encrypted operand being one of the operands on which the arithmetic operation may be performed.

**11.** Calculating unit as claimed in claim 10, wherein the further operand(s) on which the operation may be performed is, or are, encrypted as well.

**12.** Calculating unit as claimed in claim 11, wherein the arithmetic operation is an XOR operation, wherein the encrypted operands are binary and are, for encryption, XORed with a key in a bitwise manner, and wherein the arithmetic-logic unit (10) comprises the following for performing the arithmetic sub-operations:

an XOR operation means (120) for operating on the first encrypted operand ($a_k$), the second encrypted operand

($b_k$) and the key (k) to obtain the encrypted result.

**13.** Calculating unit as claimed in claim 11,
wherein the arithmetic operation is an AND operation,
wherein the operands are binary and are, for encryption, XORed with a key in a bitwise manner, and wherein the arithmetic-logic unit (10) comprises the following for performing the arithmetic sub-operations:

an AND operation means (131) for operating on the first encrypted operand ($a_k$) and the second encrypted operand ($b_k$) to obtain a first intermediate result;

a further AND operation means (132) for operating on the first encrypted operand ($a_k$) and the key to obtain a second intermediate result;

a further AND operation means (133) for operating on the encrypted second operand ($b_k$) and the key to obtain a third intermediate result;

an OR operation means (134) for operating on the first intermediate result and the second intermediate result to obtain a fourth intermediate result;

an OR operation means (135) for operating on the third intermediate result and the fourth intermediate result to obtain the encrypted result.

**14.** Calculating unit as claimed in claim 11, wherein the arithmetic operation is an OR operation, wherein the operands are binary and are, for encryption, XORed with a key (k) in a bitwise manner, and wherein the arithmetic-logic unit comprises the following for performing the arithmetic sub-operations:

negation means (146) for negating the key (k) to obtain a negated key;

first AND operation means (141) for operating on the encrypted first operand and the negated key to obtain a first intermediate result;

second AND operation means (142) for operating on the second encrypted operand and the negated key to obtain a second intermediate result;

third AND operation means (143) for operating on the first encrypted operand and the second encrypted operand ($b_k$) to obtain a third intermediate result;

first OR operation means (144) for operating on the first intermediate result and the second intermediate result to obtain a fourth intermediate result; and

second OR operation means (145) for operating on the third intermediate result and the fourth intermediate result to obtain the encrypted result of the arithmetic operation.

**15.** Calculating unit as claimed in claim 11,
wherein the arithmetic operation is a NOR operation,
wherein the operands are binary and, for encryption, are XORed with a key in a bitwise manner, and wherein the arithmetic-logic unit (10) comprises the following for performing the arithmetic sub-operations:

first AND operation means (151) for operating on the first encrypted operand ($a_k$) and the second encrypted operand

($b_k$) to obtain a first intermediate result;

first negation means (158) for negating the first intermediate result to obtain a negated first intermediate result;

second negation means (156) for negating the second encrypted operand to obtain a negated second encrypted operand;

second AND operation means (152) for operating on the negated second operand and the key to obtain a second intermediate result;

third negation means (157) for negating the first encrypted operand to obtain a negated first encrypted operand;

third AND operation means (153) for operating on the negated encrypted first operand and the key to obtain a third intermediate result;

first OR operation means (154) for operating on the negated first intermediate result and the second intermediate result to obtain a fourth intermediate result; and

second OR operation means (155) for operating on the third intermediate result and the fourth intermediate result to obtain the encrypted result of the arithmetic operation.

16. Calculating unit as claimed in claim 11, wherein the arithmetic operation is a NAND operation, wherein the operands are binary and, for encryption, are XORed with a key in a bitwise manner, and wherein the arithmetic-logic unit comprises the following for performing the arithmetic sub-operations:

first AND operation means (161) for operating on the first encrypted operand and the second encrypted operand to obtain a first intermediate result;

first negation means (164) for negating the first intermediate result to obtain a negated first intermediate result;

second AND operation means (162) for operating on the second encrypted operand ($b_k$) and the key (k) to obtain a second intermediate result;

second negation means (165) for negating the second intermediate result to obtain a negated second intermediate result;

third AND operation means (163) for operating on the encrypted first operand ($a_k$) and the key to obtain a third intermediate result;

third negation means (166) for negating the third intermediate result to obtain a negated third intermediate result;

first OR operation means (167) for operating on the negated first intermediate result and the negated second intermediate result to obtain a fourth intermediate result; and

second OR operation means (168) for operating on the:fourth intermediate result and the third intermediate result to obtain an encrypted result of the arithmetic operation.

17. Calculating unit as claimed in claim 11, wherein the arithmetic operation is an ADD operation, wherein the operands are binary and, for encryption, are XORed with a key in a bitwise manner, and wherein the arithmetic-logic unit comprises the following for performing the arithmetic sub-operations:

first AND operation means (171) for operating on the first encrypted operand ($a_{kn}$) and the second encrypted operand ($b_{kn}$) to obtain a first intermediate result;

second AND operation means (172) for operating on the first encrypted operand ($a_{kn}$) and a third encrypted operand ($c_{kn}$);

third AND operation means (173) for operating on the second encrypted operand ($b_{kn}$) and the third encrypted operand ($c_{kn}$) to obtain a third intermediate result;

first OR operation means (179) for operating on the first intermediate result and the second intermediate result to obtain a fourth intermediate result;

second OR operation means (180) for operating on the fourth intermediate result and the third intermediate result to obtain an encrypted carry $((ckn)_{n+1})$ of the arithmetic ADD operation.

18. Calculating unit as claimed in claim 17, wherein the arithmetic operation is a NOT operation, and wherein the arithmetic-logic unit further comprises the following for performing the arithmetic sub-operations:

additional negation means for negating the encrypted carry $((ckn)_{n+1})$ to obtain the encrypted result of the NOT operation.

19. Calculating unit as claimed in claim 11, wherein the first encrypted operand and the second encrypted operand are encrypted using two different encryption algorithms and/or encryption keys, and wherein the arithmetic-logic unit (10) further comprises:

a further input for a further encryption parameter.

20. Calculating unit as claimed in any one of the preceding claims, wherein the arithmetic-logic unit (10) is formed such that merely AND operation means and OR operation means having two inputs, respectively, are used.

21. Calculating unit as claimed in claim 1, wherein at least two operands are encrypted, the first encrypted operand being encrypted with a first encryption algorithm and a first encryption parameter, the second operand being encrypted with a second encryption algorithm and a second encryption parameter, wherein the processing unit comprises a further input for the second encryption parameter, and wherein the ciphertext calculating specification is derived from the clear-text calculating specification such that the non-encrypted operand, which corresponds to the second encrypted operand, is replaced by a further mathematical combination of the second encrypted operand and the second encryption parameter, the further combination being a reversal of the second encryption algorithm.

22. Calculating unit as claimed in claim 21, wherein the first and the second encryption algorithms are identical, and wherein the first and second encryption parameters are different.

23. Calculating unit as claimed in claim 21 or 22, wherein a result of the operation is encrypted with a third encryption algorithm and a third encryption parameter, wherein the ciphertext calculating specification, which results from the plurality of mathematical sub-operations, is derived from the clear-text calculating specification for the operation with non-encrypted operands such that a non-encrypted result of the operation is replaced by a further mathematical combination of the non-encrypted result of the operation and the third encryption parameter.

24. Calculating unit as claimed in claim 23, wherein the third encryption parameter is a combination of the first and second encryption parameters.

25. Calculating unit as claimed in claim 24, wherein all encryption algorithms are given by an XOR operation, wherein the mathematical combinations are given by an XOR operation, and wherein the third encryption parameter is an XOR operation of the first and second encryption parameters.

26. Calculating unit as claimed in claim 25, wherein the processing unit is formed to perform a plurality of mathematical sub-operations which are given by the following ciphertext calculating specification, respectively:

- for an AND operation:

  AND:

$$r^{(k)} \leftarrow a^{(i)} \cdot b^{(j)} \cdot \bar{j} + \bar{a}^{(i)} \cdot \bar{b}^{(j)} \cdot j + b^{(j)} \cdot \bar{i} \cdot j + \bar{b}^{(j)} \cdot i \cdot \bar{j};$$

- for an OR operation:

OR:

$$r^{(k)} \leftarrow a^{(i)} \cdot \bar{b}^{(j)} \cdot \bar{j} + \bar{a}^{(i)} \cdot b^{(j)} \cdot j + b^{(j)} \cdot \bar{i} \cdot \bar{j} + \bar{b}^{(j)} \cdot i \cdot j \ ;$$

- for a NAND operation:

  NAND:

$$r^{(k)} \leftarrow \bar{a}^{(i)} \cdot b^{(j)} \cdot \bar{j} + a^{(i)} \cdot \bar{b}^{(j)} \cdot j + b^{(j)} \cdot i \cdot j + \bar{b}^{(j)} \cdot \bar{i} \cdot \bar{j} \ ;$$

- for a NOR operation:

  NOR:

$$r^{(k)} \leftarrow \bar{a}^{(i)} \cdot \bar{b}^{(j)} \cdot \bar{j} + a^{(i)} \cdot b^{(j)} \cdot j + b^{(j)} \cdot i \cdot \bar{j} + \bar{b}^{(j)} \cdot \bar{i} \cdot j \ ;$$

- for an XOR operation:

  XOR:

$$r^{(k)} \leftarrow a^{(i)} \oplus b^{(j)} \ ;$$

- for an XNOR operation:

  XNOR :

$$r^{(k)} \leftarrow \bar{a}^{(i)} \oplus b^{(j)} \ ;$$

- for a full adder function with the following aggregate bit:

  SUM :

$$r^{(k)} \leftarrow \left(a^{(i)} \oplus j\right) \oplus \left(b^{(j)} \oplus i\right) \oplus c_{in}^{(k)} \ ;$$

  or

- for a full adder function with a carry bit:

  CARRY:

$$r^{(k)} \leftarrow \left(a^{(i)} \oplus j\right) \cdot \left(b^{(j)} \oplus i\right) + \left(a^{(i)} \oplus j\right) \cdot c_{in}^{(k)} + \left(b^{(j)} \oplus i\right) \cdot c_{in}^{(k)} \ ;$$

wherein $a^{(i)}$ is the first operand encrypted with the first encryption parameter, wherein $b^{(j)}$ is the second operand encrypted with the second encryption parameter, wherein i is the first encryption parameter, wherein j is the second encryption parameter, wherein k is the third encryption parameter, wherein the third encryption parameter is identical with the XOR operation of the first and second encryption parameters, wherein $r^{(k)}$ is the result of the operation encrypted with the third encryption parameter, and wherein $c_{in}^{(k)}$ is a carry input encrypted with the third encryption parameter.

27. Carry select adder for adding first and second encrypted operands (a, b) to obtain an encrypted result, the first and second encrypted operands each comprising a plurality of bits, an encryption parameter ($k_i$) being provided for each bit of the same order of the operands, the carry select adder comprising:

   a first ripple carry adder (1300) with a plurality of bit slice means (1200, 1202) for adding the encrypted bits of the operands from a least significant bit of the operands up to a first boundary bit of the operands to produce an encrypted carry output bit of the first ripple carry adder;

   first and second ripple carry adders (1306, 1308) with a plurality of bit slice means for adding the encrypted bits of the operands from a bit which is by one position more significant than the first boundary bit, up to a second boundary bit,

   wherein all bit slice means comprise a calculating unit as claimed in claim 17 or 26, the mathematical operation being an adder operation so as to produce, at a carry input, an internal encrypted aggregate bit and an internal encrypted carry output bit using an encrypted bit of the first operand, an encrypted bit of the second operand and an encrypted carry input bit,
   wherein all bit slice means further comprise associated re-encryption means (1206) to achieve a re-encryption of the carry input bit encrypted in accordance with an encryption parameter for the bit slice means from which same is derived, into an encryption with the encryption parameter for current bit slice means,
   wherein the second ripple carry adder (1306) and the third ripple carry adder (1308) being arranged in parallel, wherein a key ($k_{n+1}$) for the least significant bit slice means of the second ripple carry adder can be applied as a carry input bit for a least significant bit slice means of the second ripple carry adder (1306), and wherein an inverted key (NOT $k_{n+1}$) for the least significant bit slice means of the third ripple carry adder may be applied as a carry input bit for a least significant bit slice means of the third ripple carry adder (1309);
   re-encryption means (1303) for re-encrypting the carry output bit of the first ripple carry adder on a key basis of the least significant bit slice means of the second ripple carry adder (1306); and
   select means (1304) for selecting the encrypted aggregate bits of the second ripple carry adder if the re-encrypted carry output bit of a most significant bit slice means of the first ripple carry adder (1300) is identical with a logical "0", or for selecting the encrypted aggregate bits of the third ripple carry adder (1308) if the re-encrypted carry output bit of the first ripple carry adder (1300) is identical with a logical "1", as encrypted aggregate bits.

28. Cryptography processor, comprising:

   a memory (818) for storing data encrypted with a first encryption algorithm;

   first decryption means (1102) for decrypting data which is stored in the memory and is encrypted with the first encryption algorithm;

   a second encryption unit (1104) for encrypting data, which are obtained from the first decryption unit (1102), with a second encryption algorithm;

   a calculating unit (800') as claimed in any one of claims 1 to 26, which is arranged to obtain data output from the second encryption unit (1104);

   second decryption means (1106) for decrypting data output from the calculating unit (800') in accordance with the second encryption algorithm; and

   first encryption means (1108) for encrypting the data, which are output from the second decryption unit, in accordance with the first encryption algorithm, the first encryption unit being coupled to the memory so that the data encrypted with the first encryption algorithm may be fed to the memory.

29. Cryptography processor as claimed in claim 28, wherein a buffer memory (814) is arranged, in the direction of signal flow, between the second encryption means (1104) and the calculating unit (800'), and/or between the calculating unit (800') and the second decryption means (1106), in which buffer memory (814) data which are encrypted in accordance with the second encryption algorithm may be stored.

30. Cryptography processor as claimed in claim 28 or 29,
   wherein more operations are required for an encryption operation in accordance with the first encryption algorithm than for an encryption operation in accordance with the second encryption algorithm.

**31.** Cryptography processor as claimed in any one of claims 28 to 30,
wherein the first decryption means (1102) and the first encryption means (1108) are arranged to perform a change of key less frequently than the second decryption means (1106) and the second encryption means (1104).

**32.** Cryptography processor as claimed in any one of claims 28 to 31,
wherein the second encryption algorithm is a Vernam algorithm in accordance with the following form:

$$c = (p + k) \bmod k,$$

wherein c is encrypted information, wherein p is non-encrypted information, wherein k is a key and wherein mod is a modulo operation.

**33.** Cryptography processor as claimed in claim 32,
wherein the key may only adopt the values 0 or 1, wherein the clear-text information and the encrypted information is one bit, and
wherein the following equation applies to the second encryption algorithm:

$$c = p \text{ XOR } k.$$

**34.** Cryptography processor as claimed in claim 33, wherein an independent key for the second encryption algorithm is present for each clear-text bit.

**35.** Method for performing an operation on operands, wherein at least one of the operands is encrypted using an encryption algorithm and an encryption parameter to obtain an encrypted result of the operation, the method comprising:

performing one or several mathematical sub-operations which together result in a ciphertext calculating specification derived from a clear-text calculating specification for the operation with non-encrypted operands, such that the non-encrypted operand, from which the at least one encrypted operand results, is replaced by a mathematical combination of the at least one encrypted operand and the encryption parameter, the mathematical combination being a reversal of the encryption algorithm, and

the clear-text calculating specification being transformed, due to the mathematical combination, into the one or several mathematical sub-operations representing the ciphertext calculating specification, which mathematical sub-operations obtain, as an input quantity, merely the encrypted operand or a negated version of same, or a combination of the encrypted operand or of the negated version of the encrypted operand with the other operands.

**Revendications**

**1.** Unité arithmétique pour réaliser une opération sur des opérandes, au moins l'un des opérandes étant crypté en utilisant un algorithme de cryptage et un paramètre de cryptage pour obtenir un résultat crypté de l'opération, avec les caractéristiques suivantes :

une unité de traitement (10) avec une entrée pour un opérande ou pour une version inversée de l'opérande, avec une entrée pour le au moins un opérande crypté ou pour une version inversée du au moins un opérande crypté, avec une entrée pour le paramètre de cryptage avec lequel le au moins un opérande est crypté et avec une sortie (18) pour le résultat crypté,
l'unité de traitement (10) étant conçue pour réaliser une ou plusieurs sous-opérations mathématiques qui donnent conjointement une règle de calcul en texte crypté qui est déduite d'une règle de calcul en texte clair pour l'opération avec des opérandes non cryptés de telle sorte que l'opérande non crypté dans la règle de calcul en texte clair, opérande duquel résulte le au moins un opérande crypté, est remplacé par une combinaison mathématique du au moins un opérande crypté et du paramètre de cryptage, la combinaison mathématique étant une inversion de l'algorithme de cryptage, et

la règle de calcul en texte clair étant transformée sur la base de la combinaison mathématique en la ou les sous-opérations mathématiques qui représentent la règle de calcul en texte crypté et qui reçoivent comme grandeur d'entrée simplement l'opérande crypté ou une version inversée de celui-ci ou une combinaison de l'opérande crypté ou de la version inversée de celui-ci avec les autres opérandes.

2. Unité arithmétique selon la revendication 1, dans laquelle les opérandes sont des nombres et dans laquelle le ou les opérandes sont cryptés bit par bit.

3. Unité arithmétique selon la revendication 1 ou 2, dans laquelle l'algorithme de cryptage comporte une combinaison XOR ou une combinaison XNOR de l'opérande avec une clé (k) comme paramètre de cryptage.

4. Unité arithmétique selon l'une des revendications précédentes,
   dans laquelle le paramètre de cryptage est modifiable.

5. Unité arithmétique selon l'une des revendications précédentes,
   dans laquelle l'opération est une opération de multiplexeur pour sélectionner un ou plusieurs signaux d'entrée comme un ou plusieurs signaux de sortie, le nombre des signaux de sortie étant plus petit que le nombre des signaux d'entrée,
   le au moins un opérande qui est crypté étant le signal de commande.

6. Unité arithmétique selon la revendication 5, dans laquelle l'opération est une opération de multiplexeur 2:1 et dans laquelle l'unité de traitement est conçue pour mettre en oeuvre une règle de calcul qui est donnée par l'équation suivante :

$$\text{2:1 MUX} : m' = b' \cdot x' \cdot k +$$

$$a' \cdot \bar{x}' \cdot k +$$

$$a' \cdot x' \cdot \bar{k} +$$

$$b' \cdot \bar{x}' \cdot k$$

m' étant un signal de sortie crypté, a' un premier signal d'entrée crypté, b' un deuxième signal d'entrée crypté, x' un signal de commande crypté et k un paramètre de cryptage.

7. Unité arithmétique selon la revendication 6, qui comporte pour la réalisation des sous-opérations mathématiques les caractéristiques suivantes :

   un premier inverseur (86a) pour inverser le paramètre de cryptage ;
   un deuxième inverseur (86b) pour inverser le signal de commande crypté ;
   une première, une deuxième, une troisième et une quatrième porte ET (84a à 84d) ; et
   une porte OU (85) pour la combinaison OU de signaux de sortie de la première à la quatrième porte ET (84a à 84d) pour obtenir le signal de sortie.

8. Unité arithmétique selon la revendication 5, dans laquelle l'opération est une opération de multiplexeur 3:1,
   dans laquelle le signal de commande comporte deux bits cryptés x', y', et dans laquelle l'unité de traitement est conçue pour mettre en oeuvre la règle de calcul suivante :

$$\text{3:1 MUX} : m' = c' \cdot x' \cdot \bar{y}' \cdot k +$$

$$b' \cdot \bar{x}' \cdot y' \cdot k +$$

$$c' \cdot \bar{x}' \cdot y' \cdot \bar{k} +$$

$$b' \cdot x' \cdot \bar{y}' \cdot \bar{k} +$$

$$a' \cdot x' \cdot y' + a' \cdot \bar{x}' \cdot \bar{y}'$$

m' étant le signal de sortie crypté, a', b', c' le premier, le deuxième, le troisième signal d'entrée crypté, x' le premier bit crypté du signal de commande, y' le deuxième bit crypté du signal de commande et k le paramètre de cryptage pour crypter le premier et le deuxième bit du signal de commande.

9. Unité arithmétique selon la revendication 5, dans laquelle l'opération est une opération de multiplexeur 4:1, dans laquelle le signal de commande comporte deux bits cryptés x', y', et dans laquelle l'unité de traitement est conçue pour mettre en oeuvre la règle de calcul suivante :

$$4\text{:}1 \text{ MUX} : m' = d' \cdot \bar{x}' \cdot \bar{y}' \cdot k +$$

$$c' \cdot x' \cdot \bar{y}' \cdot k +$$

$$b' \cdot \bar{x}' \cdot y' \cdot k +$$

$$a' \cdot x' \cdot y' \cdot k +$$

$$d' \cdot x' \cdot y' \cdot \bar{k} +$$

$$c' \cdot \bar{x}' \cdot y' \cdot \bar{k} +$$

$$b' \cdot x' \cdot \bar{y}' \cdot \bar{k} +$$

$$a' \cdot \bar{x}' \cdot \bar{y}' \cdot \bar{k}$$

m' étant le signal de sortie crypté, a', b', c' et d' le premier, le deuxième, le troisième et le quatrième signal d'entrée crypté, x' le premier bit crypté du signal de commande, y' le deuxième bit crypté du signal de commande et k le paramètre de cryptage pour crypter le premier et le deuxième bit du signal de commande.

10. Unité arithmétique selon l'une des revendications 1 à 4, dans laquelle l'opération est une opération arithmétique sur au moins deux opérandes, l'opérande crypté étant l'un des opérandes sur lesquels l'opération arithmétique peut être réalisée.

11. Unité arithmétique selon la revendication 10, dans laquelle le ou les autres opérandes sur lesquels l'opération peut être réalisée sont également cryptés.

12. Unité arithmétique selon la revendication 11, dans laquelle l'opération arithmétique est une opération XOR, dans laquelle les opérandes cryptés sont binaires et sont soumis à une combinaison XOR avec une clé bit par bit pour le cryptage, et dans laquelle l'unité arithmétique-logique (10) comporte la caractéristique suivante pour la réalisation des sous-opérations arithmétiques :

un dispositif de combinaison XOR (120) pour combiner le premier opérande crypté ($a_k$), le deuxième opérande crypté ($b_k$) et la clé (k) pour obtenir le résultat crypté.

13. Unité arithmétique selon la revendication 11, dans laquelle l'opération arithmétique est une opération AND, dans laquelle les opérandes sont binaires et sont soumis à une combinaison XOR avec une clé bit par bit pour le cryptage, et dans laquelle l'unité arithmétique-logique (10) comporte les caractéristiques suivantes pour la réalisation des sous-opérations arithmétiques :

un dispositif de combinaison ET (131) pour combiner le premier opérande crypté ($a_k$) et le deuxième opérande crypté ($b_k$) pour obtenir un premier résultat intermédiaire ;
un autre dispositif de combinaison ET (132) pour combiner le premier opérande crypté ($a_k$) et la clé pour obtenir un deuxième résultat intermédiaire ;
un autre dispositif de combinaison ET (133) pour combiner le deuxième opérande crypté ($b_k$) et la clé pour obtenir un troisième résultat intermédiaire ;

un dispositif de combinaison OU (134) pour combiner le premier résultat intermédiaire et le deuxième résultat intermédiaire pour obtenir un quatrième résultat intermédiaire ; et

un dispositif de combinaison OU (135) pour combiner le troisième résultat intermédiaire et le quatrième résultat intermédiaire pour obtenir le résultat crypté.

**14.** Unité arithmétique selon la revendication 11, dans laquelle l'opération arithmétique est une opération OR, dans laquelle les opérandes sont binaires et sont soumis à une combinaison XOR avec une clé (k) bit par bit pour le cryptage, et dans laquelle l'unité arithmétique-logique comporte les caractéristiques suivantes pour la réalisation des sous-opérations arithmétiques :

un dispositif d'inversion (146) pour inverser la clé (k) pour obtenir une clé inversée ;

un premier dispositif de combinaison ET (141) pour combiner le premier opérande crypté et la clé inversée pour obtenir un premier résultat intermédiaire ;

un deuxième dispositif de combinaison ET (142) pour combiner le deuxième opérande crypté et la clé inversée pour obtenir un deuxième résultat intermédiaire ;

un troisième dispositif de combinaison ET (143) pour combiner le premier opérande crypté et le deuxième opérande crypté ($b_k$) pour obtenir un troisième résultat intermédiaire ;

un premier dispositif de combinaison OU (144) pour combiner le premier résultat intermédiaire et le deuxième résultat intermédiaire pour obtenir un quatrième résultat intermédiaire ; et

un deuxième dispositif de combinaison OU (145) pour combiner le troisième résultat intermédiaire et le quatrième résultat intermédiaire pour obtenir le résultat crypté de l'opération arithmétique.

**15.** Unité arithmétique selon la revendication 11,

dans laquelle l'opération arithmétique est une opération NOR, dans laquelle les opérandes sont binaires et sont soumis à une combinaison XOR avec une clé bit par bit pour le cryptage, et dans laquelle l'unité arithmétique-logique (10) comporte les caractéristiques suivantes pour la réalisation des sous-opérations arithmétiques :

un premier dispositif de combinaison ET (151) pour combiner le premier opérande crypté ($a_k$) et le deuxième opérande crypté ($b_k$) pour obtenir un premier résultat intermédiaire ;

un premier dispositif d'inversion (158) pour inverser le premier résultat intermédiaire pour obtenir un premier résultat intermédiaire inversé ;

un deuxième dispositif d'inversion (156) pour inverser le deuxième opérande crypté pour obtenir un deuxième opérande crypté inversé ;

un deuxième dispositif de combinaison ET (152) pour combiner le deuxième opérande inversé et la clé pour obtenir un deuxième résultat intermédiaire ;

un troisième dispositif d'inversion (157) pour inverser le premier opérande crypté pour obtenir un premier opérande crypté inversé ;

un troisième dispositif de combinaison ET (153) pour combiner le premier opérande crypté inversé et la clé pour obtenir un troisième résultat intermédiaire ;

un premier dispositif de combinaison OU (154) pour combiner le premier résultat intermédiaire inversé et le deuxième résultat intermédiaire pour obtenir un quatrième résultat intermédiaire ; et

un deuxième dispositif de combinaison OU (155) pour combiner le troisième résultat intermédiaire et le quatrième résultat intermédiaire pour obtenir le résultat crypté de l'opération arithmétique.

**16.** Unité arithmétique selon la revendication 11, dans laquelle l'opération arithmétique est une opération NAND, dans laquelle les opérandes sont binaires et sont soumis à une combinaison XOR avec une clé bit par bit pour le cryptage, et dans laquelle l'unité arithmétique-logique comporte les caractéristiques suivantes pour la réalisation des sous-opérations arithmétiques :

un premier dispositif de combinaison ET (161) pour combiner le premier opérande crypté et le deuxième opérande crypté pour obtenir un premier résultat intermédiaire ;

un premier dispositif d'inversion (164) pour inverser le premier résultat intermédiaire pour obtenir un premier résultat intermédiaire inversé ;

un deuxième dispositif de combinaison ET (162) pour combiner le deuxième opérande crypté ($b_k$) et la clé (k) pour obtenir un deuxième résultat intermédiaire ;

un deuxième dispositif d'inversion (165) pour inverser le deuxième résultat intermédiaire pour obtenir un deuxième résultat intermédiaire inversé ;

un troisième dispositif de combinaison ET (163) pour combiner le premier opérande crypté ($a_k$) et la clé pour obtenir un troisième résultat intermédiaire ;

un troisième dispositif d'inversion (166) pour inverser le troisième résultat intermédiaire pour obtenir un troisième résultat intermédiaire inversé ;

un premier dispositif de combinaison OU (167) pour combiner le premier résultat intermédiaire inversé et le deuxième résultat intermédiaire inversé pour obtenir un quatrième résultat intermédiaire ; et

un deuxième dispositif de combinaison OU (168) pour combiner le quatrième résultat intermédiaire et le troisième résultat intermédiaire pour obtenir un résultat crypté de l'opération arithmétique.

17. Unité arithmétique selon la revendication 11, dans laquelle l'opération arithmétique est une opération ADD, dans laquelle les opérandes sont binaires et sont soumis à une combinaison XOR avec une clé bit par bit pour le cryptage, et dans laquelle l'unité arithmétique-logique comporte les caractéristiques suivantes pour la réalisation des sous-opérations arithmétiques :

un premier dispositif de combinaison ET (171) pour combiner le premier opérande crypté ($a_{kn}$) et le deuxième opérande crypté ($b_{kn}$) pour obtenir un premier résultat intermédiaire ;

un deuxième dispositif de combinaison ET (172) pour combiner le premier opérande crypté ($a_{kn}$) et un troisième opérande crypté ($c_{kn}$) pour obtenir un deuxième résultat intermédiaire ;

un troisième dispositif de combinaison ET (173) pour combiner le deuxième opérande crypté ($b_{kn}$) et le troisième opérande crypté ($c_{kn}$) pour obtenir un troisième résultat intermédiaire ;

un premier dispositif de combinaison OU (179) pour combiner le premier résultat intermédiaire et le deuxième résultat intermédiaire pour obtenir un quatrième résultat intermédiaire ;

un deuxième dispositif de combinaison OU (180) pour combiner le quatrième résultat intermédiaire et le troisième résultat intermédiaire pour obtenir une retenue cryptée ($(c_{kn})_{n+1}$) de l'opération ADD arithmétique.

18. Unité arithmétique selon la revendication 17, dans laquelle l'opération arithmétique est une opération NOT, et dans laquelle l'unité arithmétique-logique comporte en plus la caractéristique suivante pour la réalisation des sous-opérations arithmétiques :

un dispositif d'inversion supplémentaire pour inverser la retenue cryptée ($(c_{kn})_{n+1}$) pour obtenir le résultat crypté de l'opération NOT.

19. Unité arithmétique selon la revendication 11, dans laquelle le premier opérande crypté et le deuxième opérande crypté sont cryptés en utilisant deux algorithmes de cryptage différents et/ou deux clés de cryptage différentes, et dans laquelle l'unité arithmétique-logique (10) comporte en plus la caractéristique suivante :

une autre entrée pour un autre paramètre de cryptage.

20. Unité arithmétique selon l'une des revendications précédentes, dans laquelle l'unité arithmétique-logique (10) est conçue de telle sorte que seuls sont utilisés des dispositifs de combinaison ET et des dispositifs de combinaison OU qui comportent à chaque fois deux entrées.

21. Unité arithmétique selon la revendication 1,
dans laquelle au moins deux opérandes sont cryptés,
le premier opérande étant crypté avec un premier algorithme de cryptage et avec un premier paramètre de cryptage,
et le deuxième opérande étant crypté avec un deuxième algorithme de cryptage et avec un deuxième paramètre de cryptage,
dans laquelle l'unité de traitement a une autre entrée pour le deuxième paramètre de cryptage
et dans laquelle la règle de calcul en texte crypté est déduite de la règle de calcul en texte clair de telle sorte que l'opérande non crypté qui correspond au deuxième opérande crypté est remplacé par une autre combinaison mathématique du deuxième opérande crypté et du deuxième paramètre de cryptage, l'autre combinaison étant une inversion du deuxième algorithme de cryptage.

22. Unité arithmétique selon la revendication 21,
dans laquelle le premier et le deuxième algorithme de cryptage sont identiques et dans laquelle le premier et le deuxième paramètre de cryptage sont différents.

**23.** Unité arithmétique selon la revendication 21 ou 22,

dans laquelle un résultat de l'opération est crypté avec un troisième algorithme de cryptage et avec un troisième paramètre de cryptage,

dans laquelle la règle de calcul en texte crypté qui résulte de la multiplicité de sous-opérations mathématiques est déduite de la règle de calcul en texte clair pour l'opération avec des opérandes non cryptés de telle sorte qu'un résultat non crypté de l'opération est remplacé par une autre combinaison mathématique du résultat non crypté de l'opération et du troisième paramètre de cryptage.

**24.** Unité arithmétique selon la revendication 23, dans laquelle le troisième paramètre de cryptage est une combinaison du premier et du deuxième paramètre de cryptage.

**25.** Unité arithmétique selon la revendication 24,

dans laquelle tous les algorithmes de cryptage sont donnés par une combinaison XOR,

dans laquelle les combinaisons mathématiques sont données par une combinaison XOR, et

dans laquelle le troisième paramètre de cryptage est une combinaison XOR du premier et du deuxième paramètre de cryptage.

**26.** Unité arithmétique selon la revendication 25, dans laquelle l'unité de traitement est conçue pour réaliser une multiplicité de sous-opérations mathématiques qui sont données respectivement par les règles de calcul en texte crypté suivantes :

- pour une opération AND :

AND :

$$r^{(k)} \leftarrow a^{(i)} \cdot b^{(j)} \cdot \bar{j} + \bar{a}^{(i)} \cdot \bar{b}^{(j)} \cdot j + b^{(j)} \cdot \bar{i} \cdot j + \bar{b}^{(j)} \cdot i \cdot \bar{j} \, ;$$

- pour une opération OR :

OR :

$$r^{(k)} \leftarrow a^{(i)} \cdot \bar{b}^{(j)} \cdot \bar{j} + \bar{a}^{(i)} \cdot b^{(j)} \cdot j + b^{(j)} \cdot \bar{i} \cdot \bar{j} + \bar{b}^{(j)} \cdot i \cdot j \, ;$$

- pour une opération NAND :

NAND :

$$r^{(k)} \leftarrow \bar{a}^{(i)} \cdot b^{(j)} \cdot \bar{j} + a^{(i)} \cdot \bar{b}^{(j)} \cdot j + b^{(j)} \cdot i \cdot j + \bar{b}^{(j)} \cdot \bar{i} \cdot \bar{j} \, ;$$

- pour une opération NOR :

NOR :

$$r^{(k)} \leftarrow \bar{a}^{(i)} \cdot \bar{b}^{(j)} \cdot \bar{j} + a^{(i)} \cdot b^{(j)} \cdot j + b^{(j)} \cdot i \cdot \bar{j} + \bar{b}^{(j)} \cdot \bar{i} \cdot j \, ;$$

- pour une opération XOR :

XOR :

$$r^{(k)} \leftarrow a^{(i)} \oplus b^{(j)} \, ;$$

- pour une opération XNOR :

XNOR :

$$r^{(k)} \leftarrow \overline{a}^{(i)} \oplus b^{(j)} ;$$

- pour une fonction d'additionneur complet avec bit de somme suivant :

SUM :

$$r^{(k)} \leftarrow (a^{(i)} \oplus j) \oplus (b^{(j)} \oplus i) \oplus c_{in}^{(k)} ; \text{ ou}$$

- pour une fonction d'additionneur complet avec bit de retenue :

CARRY :

$$r^{(k)} \leftarrow (a^{(i)} \oplus j) \cdot (b^{(j)} \oplus i) + (a^{(i)} \oplus j) \cdot c_{in}^{(k)} + (b^{(j)} \oplus i) \cdot c_{in}^{(k)} ;$$

$a^{(i)}$ étant le premier opérande crypté avec le premier paramètre de cryptage, $b^{(j)}$ le deuxième opérande crypté avec le deuxième paramètre de cryptage, i le premier paramètre de cryptage, j le deuxième paramètre de cryptage, k le troisième paramètre de cryptage, le troisième paramètre de cryptage étant égal à la combinaison XOR du premier et du deuxième paramètre de cryptage, $r^{(k)}$ le résultat de l'opération crypté avec le troisième paramètre de cryptage et $c_{in}^{(k)}$ une entrée de retenue cryptée avec le troisième paramètre de cryptage.

27. Additionneur à sélection de retenue pour additionner un premier et un deuxième opérande crypté (a, b) pour obtenir un résultat crypté, le premier et le deuxième opérande crypté comportant chacun plusieurs bits, un paramètre de cryptage ($k_i$) étant prévu pour chaque bit de même ordre des opérandes, avec les caractéristiques suivantes :

un premier additionneur à retenue propagée (1300) avec plusieurs tranches de bits (1200, 1202) pour additionner les bits cryptés des opérandes à partir d'un bit de poids minimal des opérandes jusqu'à un premier bit limite des opérandes pour produire un bit de sortie de retenue crypté du premier additionneur à retenue propagée ;
un deuxième et un troisième additionneur à retenue propagée (1306, 1308) avec plusieurs tranches de bits pour additionner les bits cryptés des opérandes à partir d'un bit d'un poids immédiatement supérieur à celui du premier bit limite jusqu'à un deuxième bit limite,
chaque tranche de bits comportant une unité arithmétique selon la revendication 17 ou 26, l'opération mathématique étant une opération d'addition pour produire en utilisant un bit crypté du premier opérande, un bit crypté du deuxième opérande et un bit d'entrée de retenue crypté à une entrée de retenue un bit de somme crypté interne et un bit de sortie de retenue crypté interne,
chaque tranche de bits comportant en plus un dispositif de recryptage (1206) associé pour effectuer un recryptage du bit d'entrée de retenue qui est crypté selon un paramètre de cryptage pour la tranche de bits d'où il vient en un cryptage avec le paramètre de cryptage pour une tranche de bits actuelle,
le deuxième additionneur à retenue propagée (1306) et le troisième additionneur à retenue propagée (1308) étant disposés en parallèle, une clé ($k_{n+1}$) pour la tranche de bits de poids minimal d'un deuxième additionneur à retenue propagée (1306) pouvant être appliquée comme bit d'entrée de retenue pour une tranche de bits de poids minimal du deuxième additionneur à retenue propagée et une clé inversée (NOT $k_{n+1}$) pour une tranche de bits de poids minimal du troisième additionneur à retenue propagée (1309) pouvant être appliquée comme bit d'entrée de retenue pour la tranche de bits de poids minimal du troisième additionneur à retenue propagée ;
un dispositif de recryptage (1303) pour recrypter le bit de sortie de retenue du premier additionneur à retenue propagée sur une base de clé de la tranche de bits de poids minimal du deuxième additionneur à retenue propagée (1306) ; et
un dispositif de sélection (1304) pour sélectionner comme bits de somme cryptés les bits de somme cryptés du deuxième additionneur à retenue propagée lorsque le bit de sortie de retenue recrypté d'une tranche de bits de poids maximal du premier additionneur à retenue propagée (1300) est égal à un "0" logique ou les bits de somme cryptés du troisième additionneur à retenue propagée (1308) lorsque le bit de sortie de retenue recrypté d'une tranche de bits de poids maximal du premier additionneur à retenue propagée (1300) est égal à un "1" logique.

**28.** Processeur cryptographique ayant les caractéristiques suivantes :

une mémoire (818) pour mémoriser des données cryptées avec un premier algorithme de cryptage ;
une première unité de décryptage (1102) pour décrypter des données qui ont été mémorisées dans la mémoire et qui sont cryptées avec le premier algorithme de cryptage ;
une deuxième unité de cryptage (1104) pour crypter des données, qui ont été obtenues par la première unité de décryptage (1102), avec un deuxième algorithme de cryptage ;
une unité arithmétique (800') selon l'une des revendications 1 à 26 qui est prévue pour obtenir des données délivrées par la deuxième unité de cryptage (1104) ;
une deuxième unité de décryptage (1106) pour décrypter des données, délivrées par l'unité arithmétique (800'), selon le deuxième algorithme de cryptage ; et
un premier dispositif de cryptage (1108) pour crypter les données, délivrées par la deuxième unité de décryptage, selon le premier algorithme de cryptage, la première unité de cryptage étant couplée à la mémoire de telle sorte que les données, cryptées avec le premier algorithme de cryptage, peuvent être envoyées à la mémoire.

**29.** Processeur cryptographique selon la revendication 28, dans lequel une mémoire intermédiaire (814), dans laquelle peuvent être mémorisées des données cryptées selon le deuxième algorithme de cryptage, est placée dans le sens du flux du signal entre la deuxième unité de cryptage (1104) et l'unité arithmétique (800') ou entre l'unité arithmétique (800') et la deuxième unité de décryptage (1106).

**30.** Processeur cryptographique selon la revendication 28 ou 29,
dans lequel, pour une opération de cryptage selon le premier algorithme de cryptage, on a besoin de plus d'opérations que pour une opération de cryptage selon le deuxième algorithme de cryptage.

**31.** Processeur cryptographique selon l'une des revendications 28 à 30,
dans lequel la première unité de décryptage (1102) et la première unité de cryptage (1108) sont prévues pour effectuer un changement de clé plus rarement que la deuxième unité de décryptage (1106) et la deuxième unité de cryptage (1104).

**32.** Processeur cryptographique selon l'une des revendications 28 à 31,
dans lequel le deuxième algorithme de cryptage est un algorithme de Vernam de la forme suivante :

$$c = (p + k) \bmod k,$$

c étant une information cryptée, p une information non cryptée, k une clé et mod une opération modulo.

**33.** Processeur cryptographique selon la revendication 32,
dans lequel la clé peut prendre seulement les valeurs 0 ou 1, dans lequel les informations en texte clair et les informations cryptées sont un bit, et
dans lequel on a pour le deuxième algorithme de cryptage l'équation suivante :

$$c = p \text{ XOR } k.$$

**34.** Processeur cryptographique selon la revendication 33, dans lequel il existe une clé indépendante pour le deuxième algorithme de cryptage pour chaque bit en texte clair.

**35.** Procédé pour réaliser une opération sur des opérandes, au moins l'un des opérandes étant crypté en utilisant un algorithme de cryptage et un paramètre de cryptage pour obtenir un résultat crypté de l'opération, avec les étapes suivantes :

réalisation d'une ou plusieurs sous-opérations mathématiques qui donnent conjointement une règle de calcul en texte crypté qui est déduite d'une règle de calcul en texte clair pour l'opération avec des opérandes non cryptés de telle sorte que l'opérande non crypté duquel résulte le au moins un opérande crypté est remplacé par une combinaison mathématique du au moins un opérande crypté et du paramètre de cryptage, la combinaison mathématique étant une inversion de l'algorithme de cryptage, et

la règle de calcul en texte clair étant transformée sur la base de la combinaison mathématique en la ou les sous-opérations mathématiques qui représentent la règle de calcul en texte crypté et qui reçoivent comme grandeur d'entrée simplement l'opérande crypté ou une version inversée de celui-ci ou une combinaison de l'opérande crypté ou de la version inversée de celui-ci avec les autres opérandes.

FIG 1

FIG 2A

XOR Operation:

| $k_n$ | $a_n$ | $b_n$ | $a_{kn}$ | $b_{kn}$ | $a_n$ XOR $b_n$ | $a_n$ XOR $b_n$ XOR $b_n$ | $a_{kn}$ XOR $b_{kn}$ | $a_{kn}$ XOR $b_{kn}$ XOR $b_n$ | Vergleich |
|---|---|---|---|---|---|---|---|---|---|
| 0 | 0 | 0 | 0 | 0 | 0 | 0 | 0 | 0 | 1 |
| 0 | 0 | 1 | 0 | 1 | 1 | 1 | 1 | 1 | 1 |
| 0 | 1 | 0 | 1 | 0 | 1 | 1 | 1 | 1 | 1 |
| 0 | 1 | 1 | 1 | 1 | 0 | 0 | 0 | 0 | 1 |
| 1 | 0 | 0 | 1 | 1 | 0 | 1 | 0 | 1 | 1 |
| 1 | 0 | 1 | 1 | 0 | 1 | 0 | 1 | 0 | 1 |
| 1 | 1 | 0 | 0 | 1 | 1 | 0 | 1 | 0 | 1 |
| 1 | 1 | 1 | 0 | 0 | 0 | 1 | 0 | 1 | 1 |

FIG 2B

FIG 3A

AND Operation:

| $k_n$ | $a_n$ | $b_n$ | $a_{kn}$ | $b_{kn}$ | $a_n$ AND $b_n$ | $(a_n$ AND $b_n)$ XOR $k_n$ | $a_{kn}\,b_{kn} + a_{kn}\,k_n + a_{kn}\,k_n$ | Vergleich |
|---|---|---|---|---|---|---|---|---|
| 0 | 0 | 0 | 0 | 0 | 0 | 0 | 0 | 1 |
| 0 | 0 | 1 | 0 | 1 | 0 | 0 | 0 | 1 |
| 0 | 1 | 0 | 1 | 0 | 0 | 0 | 0 | 1 |
| 0 | 1 | 1 | 1 | 1 | 1 | 1 | 1 | 1 |
| 1 | 0 | 0 | 1 | 1 | 0 | 1 | 1 | 1 |
| 1 | 0 | 1 | 1 | 0 | 0 | 1 | 1 | 1 |
| 1 | 1 | 0 | 0 | 1 | 0 | 1 | 1 | 1 |
| 1 | 1 | 1 | 0 | 0 | 1 | 0 | 0 | 1 |

FIG 3B

46

ALU

FIG 4A

OR Operation:

| $k_n$ | $a_n$ | $b_n$ | $a_{kn}$ | $b_{kn}$ | $a_n$ OR $b_n$ | $(a_n$ OR $b_n)$ XOR $k_n$ | $a_{kn}\, b_{kn} + a_{kn}$ not $k_n + a_{kn}$ not $k_n$ | Vergleich |
|---|---|---|---|---|---|---|---|---|
| 0 | 0 | 0 | 0 | 0 | 0 | 0 | 0 | 1 |
| 0 | 0 | 1 | 0 | 1 | 1 | 1 | 1 | 1 |
| 0 | 1 | 0 | 1 | 0 | 1 | 1 | 1 | 1 |
| 0 | 1 | 1 | 1 | 1 | 1 | 1 | 1 | 1 |
| 1 | 0 | 0 | 1 | 1 | 0 | 1 | 1 | 1 |
| 1 | 0 | 1 | 1 | 0 | 1 | 0 | 0 | 1 |
| 1 | 1 | 0 | 0 | 1 | 1 | 0 | 0 | 1 |
| 1 | 1 | 1 | 0 | 0 | 1 | 0 | 0 | 1 |

FIG 4B

FIG 5A

NOR Operation:

| $k_n$ | $a_n$ | $b_n$ | $a_{kn}$ | $b_{kn}$ | $a_n$ NOR $b_n$ | $(a_n$ OR $b_n)$ XOR $k_n$ | not $a_{kn}$ not $b_{kn}$ + not $a_{kn}$ $k_n$ + not $b_{kn}$ $k_n$ | Vergleich |
|---|---|---|---|---|---|---|---|---|
| 0 | 0 | 0 | 0 | 0 | 1 | 1 | 1 | 1 |
| 0 | 0 | 1 | 0 | 1 | 0 | 0 | 0 | 1 |
| 0 | 1 | 0 | 1 | 0 | 0 | 0 | 0 | 1 |
| 0 | 1 | 1 | 1 | 1 | 0 | 0 | 0 | 1 |
| 1 | 0 | 0 | 1 | 1 | 1 | 0 | 0 | 1 |
| 1 | 0 | 1 | 1 | 0 | 0 | 1 | 1 | 1 |
| 1 | 1 | 0 | 0 | 1 | 0 | 1 | 1 | 1 |
| 1 | 1 | 1 | 0 | 0 | 0 | 1 | 1 | 1 |

FIG 5B

FIG 6A

## 2.5. NAND Operation:

| $k_n$ | $a_n$ | $b_n$ | $a_{kn}$ | $b_{kn}$ | $a_n$ NAND | $(a_n$ NAND $b_n)$ XOR $k_n$ | not $a_{kn}$ not $b_{kn}$ + not $a_{kn}$ not $k_n$ + not $b_{kn}$ not $k_n$ | Vergleich |
|---|---|---|---|---|---|---|---|---|
| 0 | 0 | 0 | 0 | 0 | 1 | 1 | 1 | 1 |
| 0 | 0 | 1 | 0 | 1 | 1 | 1 | 1 | 1 |
| 0 | 1 | 0 | 1 | 0 | 1 | 1 | 1 | 1 |
| 0 | 1 | 1 | 1 | 1 | 0 | 0 | 0 | 1 |
| 1 | 0 | 0 | 1 | 1 | 1 | 0 | 0 | 1 |
| 1 | 0 | 1 | 1 | 0 | 1 | 0 | 0 | 1 |
| 1 | 1 | 0 | 0 | 1 | 1 | 0 | 0 | 1 |
| 1 | 1 | 1 | 0 | 0 | 0 | 1 | 1 | 1 |

FIG 6B

FIG 7A

ADD Operation

| | $k_n$ | | $a_n$ | $b_n$ | $c_n$ | | $a_{kn}$ | $b_{kn}$ | $c_{kn}$ | | cp | | ck | | Vergleich der Überträge |
|---|---|---|---|---|---|---|---|---|---|---|---|---|---|---|---|
| 0 | 0 | | 0 | 0 | 0 | | 0 | 0 | 0 | | 0 | | 0 | | 1 |
| 1 | 0 | | 0 | 0 | 1 | | 0 | 0 | 1 | | 0 | | 0 | | 1 |
| 2 | 0 | | 0 | 1 | 0 | | 0 | 1 | 0 | | 0 | | 0 | | 1 |
| 3 | 0 | | 0 | 1 | 1 | | 0 | 1 | 1 | | 1 | | 1 | | 1 |
| 4 | 0 | | 1 | 0 | 0 | | 1 | 0 | 0 | | 0 | | 0 | | 1 |
| 5 | 0 | | 1 | 0 | 1 | | 1 | 0 | 1 | | 1 | | 1 | | 1 |
| 6 | 0 | | 1 | 1 | 0 | | 1 | 1 | 0 | | 1 | | 1 | | 1 |
| 7 | 0 | | 1 | 1 | 1 | | 1 | 1 | 1 | | 1 | | 1 | | 1 |
| 8 | 1 | | 0 | 0 | 0 | | 1 | 1 | 1 | | 0 | | 0 | | 1 |
| 9 | 1 | | 0 | 0 | 1 | | 1 | 1 | 0 | | 0 | | 0 | | 1 |
| 10 | 1 | | 0 | 1 | 0 | | 1 | 0 | 1 | | 0 | | 0 | | 1 |
| 11 | 1 | | 0 | 1 | 1 | | 1 | 0 | 0 | | 1 | | 1 | | 1 |
| 12 | 1 | | 1 | 0 | 0 | | 0 | 1 | 1 | | 0 | | 0 | | 1 |
| 13 | 1 | | 1 | 0 | 1 | | 0 | 1 | 0 | | 1 | | 1 | | 1 |
| 14 | 1 | | 1 | 1 | 0 | | 0 | 0 | 1 | | 1 | | 1 | | 1 |
| 15 | 1 | | 1 | 1 | 1 | | 0 | 0 | 0 | | 1 | | 1 | | 1 |

FIG 7B

EP 1 472 587 B1

FIG 8A

FIG 8B

FIG 8C

FIG 8D

$$a^{(i)} \quad i \quad j \quad r^{(k)}$$

ALU

$$b^{(j)} \quad C_{out}^{(k)}$$

$$C_{in}^{(k)}$$

## FIG 9A

$$a^{(i)} \quad i \quad j \quad r^{(k)}$$

ALU

$$b^{(j)} \quad C_{out}^{(k)}$$

$$C_{in}^{(i)}$$

## FIG 9B

$$a^{(i)} \quad i \quad j \quad r^{(k)}$$

ALU

$$b^{(j)} \quad C_{out}^{(l)}$$

$$C_{in}^{(l)}$$

## FIG 9C

FIG 10

FIG 11A

FIG 11B

$\overline{c'_{n+1}}$

$a'_{n+1}$ — | X | C |

$b'_{n+1}$ — | Y | $\overline{C}$ | —o $s'_{n+1}$

1202 →

1206

$t_{n+1}$ — | Z | S |

1204

$t_{n+1} = k_{n+1} \oplus k_n$

$\overline{c'_n}$

$a'_n$ — | X | C |

$b'_n$ — | Y | $\overline{C}$ | —o $s'_n$

1200 →

1206

$t_n = k_n \oplus k_{n-1}$     $t_n$ — | Z | S |

1204

$\overline{c'_{n-1}}$

## FIG 12A

a'  b'     t

$\overline{c'_N}$ ←   Ripple-
         Carry-     C  ← $\overline{c'_0}$
         Addierer

...

$S'_N$       $S'_1$  $S'_0$

## FIG 12B

FIG 13